(19) **Europäisches Patentamt**
**European Patent Office**
**Office européen des brevets**

(11) **EP 3 109 685 B1**

(12) **EUROPEAN PATENT SPECIFICATION**

(45) Date of publication and mention of the grant of the patent:
**28.07.2021 Bulletin 2021/30**

(51) Int Cl.:
**G02B 26/08** (2006.01)

(21) Application number: **16174178.0**

(22) Date of filing: **13.06.2016**

(54) **OPTICAL DEFLECTION APPARATUS, IMAGE FORMING APPARATUS, IMAGE DISPLAY APPARATUS, OBJECT APPARATUS AND METHOD OF ADJUSTING OPTICAL DEFLECTION APPARATUS**

OPTISCHE DEFLEKTORVORRICHTUNG, BILDERZEUGUNGSVORRICHTUNG, BILDANZEIGEVORRICHTUNG, OBJEKTVORRICHTUNG UND EINSTELLUNGSVERFAHREN EINER OPTISCHEN DEFLEKTORVORRICHTUNG

APPAREIL DE DÉVIATION OPTIQUE, APPAREIL DE FORMATION D'IMAGE, APPAREIL D'AFFICHAGE D'IMAGE, APPAREIL D'OBJET ET PROCÉDÉ DE RÉGLAGE D'APPAREIL DE DÉVIATION OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.06.2015 JP 2015124951**
**28.04.2016 JP 2016090444**

(43) Date of publication of application:
**28.12.2016 Bulletin 2016/52**

(73) Proprietor: **Ricoh Company, Ltd.**
**Tokyo 143-8555 (JP)**

(72) Inventors:
• **SUZUKI, Shuichi**
**Tokyo 143-8555 (JP)**
• **HASHIGUCHI, Tsuyoshi**
**Tokyo 143-8555 (JP)**

• **YAMASHIRO, Toshihiro**
**Tokyo 143-8555 (JP)**
• **SHINKAWA, Mizuki**
**Tokyo 143-8555 (JP)**
• **NAKAGAWA, Jun**
**Tokyo 143-8555 (JP)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**EP-A1- 2 495 601    EP-A1- 2 645 148**
**EP-A1- 2 848 978    EP-A2- 2 503 375**

• **None**

**EP 3 109 685 B1**

**Description**

BACKGROUND

Technical Field

This disclosure relates to an optical deflection apparatus, an image forming apparatus, an image display apparatus, an object apparatus and a method of adjusting the optical deflection apparatus.

Background art

Conventionally, an optical deflector having a moveable unit having a reflection face, a support unit having a plurality of beams to support the moveable unit oscillate-ably about one axis, and a plurality of piezoelectric elements disposed for the plurality of beams respectively can be driven by a drive unit as disclosed in JP-2012-185314-A. However, the evenness of oscillation speed of the moveable unit about the one axis cannot be enhanced securely by the drive unit of the optical deflector disclosed in JP-2012-185314-A.

SUMMARY

The scope of the invention is defined by the appended claims.
EP 2 495 601 A1, EP 2 848 978 A1, EP 2 645 148 A1 and EP 2 503 375 A2 disclose optical deflectors and drive signals for driving the same .

BRIEF DESCRIPTION OF THE DRAWINGS

A more complete appreciation of the disclosure and many of the attendant advantages and features thereof can be readily obtained and understood from the following detailed description with reference to the accompanying drawings, wherein:

FIG. 1 illustrates a schematic configuration of an image generation apparatus of a first example not falling under the scope of the invention;
FIG. 2 illustrates a plan view of an optical deflector of FIG. 1;
FIG. 3A and 3B illustrate two drive voltages having two different waveforms respectively applied to adjacent two piezoelectric elements;
FIG. 4 illustrates a timewise change of oscillation angle of a mirror about a second axis when an oscillation speed of the mirror about the second axis is constant or even;
FIG. 5 illustrates a resonance mode of a system including a mirror, a first drive unit and a second drive unit known as device-specific resonance mode;
FIG. 6 illustrates a timewise change of oscillation angle of the mirror about the second axis when fluctuation occurs to the oscillation speed of the mirror about the second axis due to a zero-order resonance mode of the device;
FIG. 7 illustrates an adjustment of phase difference between two different waveforms;
FIG. 8 illustrates a timewise change of oscillation angle of the mirror about the second axis when fluctuation occurs to the oscillation speed of the mirror about the second axis due to a first-order resonance mode of the device;
FIG. 9A and 9B illustrate an adjustment of symmetry of two different waveforms;
FIG. 10A illustrates a case that a harmonic component of a sawtooth wave drive voltage and the first-order resonance mode of the device-specific resonance mode overlap with each other when symmetry "$\alpha$" is set for the waveforms;
FIG. 10B illustrates a case that a harmonic component of a sawtooth wave drive voltage and the first-order resonance mode of the device-specific resonance mode do not overlap with each other when symmetry "$\beta$" is set for the waveforms;
FIG. 11 illustrates a schematic view of another optical deflector;
FIG. 12 illustrates an example of a head-up display;
FIG. 13 illustrates a plan view of an optical deflector of the second example embodiment;
FIG. 14 illustrates an example of a first drive signal and a second drive signal such as sawtooth wave respectively applied to piezoelectric elements
FIG. 15 illustrates an example of the first drive signal and the second drive signal by setting a reference state indicating the phase difference of zero when a driving method of the second example embodiment representing an embodiment according to the invention is performed;
FIG. 16A illustrates an evaluation result of mirror deflection angle when the first drive signal alone is applied to the optical deflector by using a conventional driving method;

FIG. 16B illustrates an evaluation result of the mirror deflection angle when the second drive signal alone is applied to the optical deflector by using a conventional driving method;

FIG. 16C illustrates an evaluation result of the mirror deflection angle when the first drive signal and the second drive signal set with a phase difference are applied by using a conventional driving method;

FIG. 17 illustrates a relationship of a drive signal spectrum and the frequency property of the lowest resonance mode when a driving method of the first example is performed;

FIG. 18A illustrates a relationship of the first drive signal spectrum and the lowest resonance frequency of an optical deflector when the driving method of the second example embodiment is performed;

FIG. 18B illustrates a relationship of the second drive signal spectrum and the lowest resonance frequency of an optical deflector when the driving method of the second example embodiment is performed;

FIG. 19A illustrates a profile of the mirror deflection angle when the first drive signal alone is applied to the optical deflector by using the driving method of the first example ;

FIG. 19B illustrates a profile of the mirror deflection angle when the second drive signal alone is applied to the optical deflector by using the driving method of the first example ;

FIG. 20A illustrates higher frequency vibration components for the deflection property of mirror driven by the first drive signal by using the driving method of the first example ;

FIG. 20B illustrates higher frequency vibration components for the deflection property of mirror driven by the second drive signal by using the driving method of the first example ;

FIG. 21A illustrates a relationship of phase of higher frequency vibration and the symmetry of the drive signal;

FIG. 21B illustrates a relationship of amplitude of higher frequency vibration and the symmetry of the drive signal;

FIG. 22A illustrates an evaluation result of the mirror deflection angle when the first drive signal and the second drive signal set with a reference state are applied by using the driving method of the second example embodiment;

FIG. 22B illustrates higher frequency vibration components for the deflection property of mirror driven by the first drive signal and the second drive signal by the driving method of the second example embodiment

FIG. 23 illustrates a relationship of linearity index of scanning line and a deviation of phase difference between the first drive signal and the second drive signal from an optimal phase difference when conventional driving method and the driving method of the second example embodiment are performed;

FIG. 24A illustrates a relationship of the mirror deflection angle and application voltage for the conventional driving method and the driving method of the second example embodiment;

FIG. 24B illustrates a relationship of the linearity index of scanning line application voltage for the conventional driving method and the driving method of the second example embodiment;

FIG. 25 illustrates an example of higher frequency vibration components suppressed by disposing a notch-filter;

FIG. 26A illustrates an example of higher frequency vibration components cut by disposing a low-pass filter;

FIG. 26B illustrates an example of drive signals having cut higher frequency vibration components by the low-pass filter;

FIG. 27 illustrates a hardware configuration of a control system circuit for controlling LD and the optical deflector;

FIG. 28 illustrates a variant example of the optical deflector;

FIG. 29 illustrates a schematic view of an image forming apparatus employing the optical deflector;

FIG. 30 illustrates a schematic internal configuration of the image forming apparatus of FIG. 29;

FIG. 31 illustrates a schematic configuration of a subject detection apparatus mounted with the optical deflector;

FIG. 32 illustrates a schematic configuration of the subject detection apparatus of FIG. 31;

FIG. 33 illustrates an example of an optical deflection unit packaging the optical deflector;

FIG. 34A illustrates the first drive signal of one cycle;

FIG. 34B illustrates spectral characteristics of the first drive signal after performing the Fourier transformation; and

FIG. 35 illustrates a flowchart of the steps of an adjustment process of optical deflection apparatus.

The accompanying drawings are intended to depict exemplary embodiments of the present invention and should not be interpreted to limit the scope thereof. The accompanying drawings are not to be considered as drawn to scale unless explicitly noted, and identical or similar reference numerals designate identical or similar components throughout the several views.

DETAILED DESCRIPTION

A description is now given of exemplary embodiments. It should be noted that although such terms as first, second, etc. may be used herein to describe various elements, components, regions, layers and/or sections, it should be understood that such elements, components, regions, layers and/or sections are not limited thereby because such terms are relative, that is, used only to distinguish one element, component, region, layer or section from another region, layer or section. Thus, for example, a first element, component, region, layer or section discussed below could be termed a second element, component, region, layer or section without departing from the teachings of this disclosure.

In addition, it should be noted that the terminology used herein is for the purpose of describing particular embodiments only and is not intended to be limiting of this disclosure. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

Furthermore, although in describing views shown in the drawings, specific terminology is employed for the sake of clarity, the present disclosure is not limited to the specific terminology so selected and it is to be understood that each specific element includes all technical equivalents that operate in a similar manner and achieve a similar result. Referring now to the drawings, apparatus or system according to one or more example embodiments are described hereinafter.

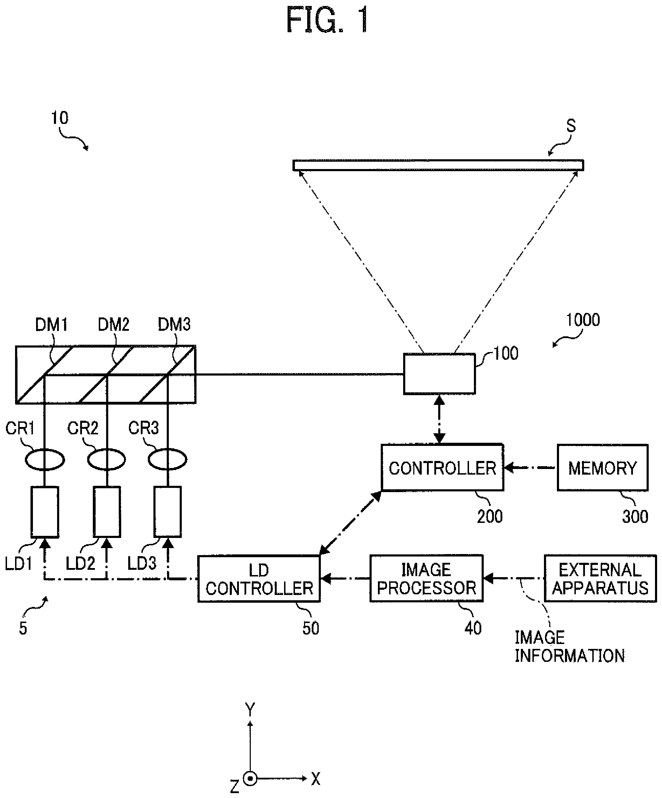

A description is given of an image generation apparatus of a first example not falling under the scope of the invention with reference to FIGs. 1 to 10. FIG. 1 illustrates a schematic configuration of an image generation apparatus 10 of the first example. The image generation apparatus 10 is, for example, a projector. In this description, the image generation apparatus may mean an image forming apparatus such as a printer, and an image display apparatus such as projector.

The image generation apparatus 10 can be disposed, for example, on a floor of a building or a stand. Further, the image generation apparatus 10 can be hanged on a ceiling or a wall of a building. Hereinafter, three dimensional orthogonal coordinate system of "X, Y, Z" is used by setting the Z-axis as the vertical direction as illustrated in FIG. 1.

The image generation apparatus 10 includes, for example, a light source unit 5, an optical deflection apparatus 1000 and an image processor 40 as illustrated in FIG. 1.

The light source unit 5 includes, for example, three laser diodes LD 1 to LD 3, three collimate lenses CR1 to CR3, three dichroic mirror DM1 to DM3 and a laser diode (LD) controller 50 as illustrated in FIG. 1.

The laser diode LD1 employs, for example, a red laser that emits red light having a wavelength of 640 nm to +Y direction.

The laser diode LD2 employs, for example, a blue laser. The laser diode LD2 is disposed at +X side of the laser diode LD1 to emit blue light having a wavelength of 450 nm to +Y direction.

The laser diode LD3 employs, for example, a green laser. The laser diode LD3 is disposed at +X side of the laser diode LD2 to emit green light having a wavelength of 520 nm to +Y direction.

Each of the laser diodes LD1 to LD3 can be controlled by the LD controller 50.

The collimate lens CR1 is disposed, for example, at +Y side of the laser diode LD1 to set the red light emitted from the laser diode LD1 as substantially parallel light,

The collimate lens CR2 is disposed, for example, at +Y side of the laser diode LD2 to set the blue light emitted from the laser diode LD2 as substantially parallel light.

The collimate lens CR3 is disposed, for example, at +Y side of the laser diode LD3 to set the green light emitted from the laser diode LD3 as substantially parallel light.

Each of the three dichroic mirrors DM1 to DM3 includes a thin layer such as a dielectric multilayer to reflect light having a specific wavelength and to pass through light having other wavelength.

The dichroic mirror DM1 is disposed, for example, at +Y side of the collimate lens CR1 while inclining the dichroic mirror DM1 with respect to the X-axis and Y-axis, for example, 45 degrees to reflect the red light coming from the collimate lens CR1 to +X direction.

The dichroic mirror DM2 is disposed, for example, at +X side of the dichroic mirror DM1 and +Y side of the collimate lens CR2 while inclining the dichroic mirror DM2 with respect to the X-axis and Y-axis, for example, 45 degrees to pass through the red light coming from the dichroic mirror DM1 to +X direction and to reflect the blue light coming from the collimate lens CR2 to the +X direction.

Each of the red light coming from the dichroic mirror DM1 and the blue light coming from the collimate lens CR2 enters the center portion of the dichroic mirror DM2.

The dichroic mirror DM3 is disposed, for example, at +X side of the dichroic mirror DM2 and +Y side of the collimate lens CR3 while inclining the dichroic mirror DM3 with respect to the X-axis and Y-axis, for example, 45 degrees to pass through the red light and the blue light coming from the dichroic mirror DM2 to +X direction and to reflect the green light coming from the collimate lens CR3 to +X direction.

Each of the red light and the blue light coming from the dichroic mirror DM2 and the green light coming from the collimate lens CR3 enters the center portion of the dichroic mirror DM3.

The three lights such as red light, blue light and green light are synthesized as one light by passing through the dichroic mirror DM3. In this configuration, the color of synthesized light can be changed depending on a balance of intensity of light emitted from the three laser diodes LD1 to LD3.

With employing this configuration, the light source unit 5 can emit the laser light synthesizing the three lights emitted from the three laser diodes LD1 to LD3.

A description is given of an overall operation of the image generation apparatus 10. Specifically, the image processor 40 is input with image information from an external apparatus such as a personal computer (PC). The image processor 40 performs given processing such as distortion correction process, image size changing process, and resolution conversion process, and transmits the processed image information to the LD controller 50. The LD controller 50 generates intensity modulated drive signals such as pulse signals based on the image information processed by the image processor 40, and converts the drive signals to drive current. Then, the LD controller 50 determines light emission timing of each of the laser diodes based on a synchronization signal received from the optical deflection apparatus 1000, and supplies the drive current to each of the laser diodes at the light emission timing to drive each of the laser diodes.

The optical deflection apparatus 1000 deflects the laser light such as synthesized light coming from the light source unit 5 about two axes directions, perpendicular with each other, to scan a face of a screen S placed as a scan target face on a plane parallel to X-Z plane, in which the optical deflection apparatus 1000 deflects the laser light about X-axis and an axis perpendicular to the X-axis independently. With this processing, the scan target face is two dimensionally scanned along two axes directions, perpendicular with each other such as the Z-axis direction and the X-axis direction, by the laser light to generate a two dimensional full color image on the scan target face. Hereinafter, the X-axis direction is also referred to the main scanning direction, and the Z-axis direction is also referred to the sub-scanning direction. Further, instead of directly modulating the intensity of the light to be emitted from each of the laser diodes (intensity modulation), the laser light emitted from each of the laser diodes can be modulated by a light modulator (external modulation).

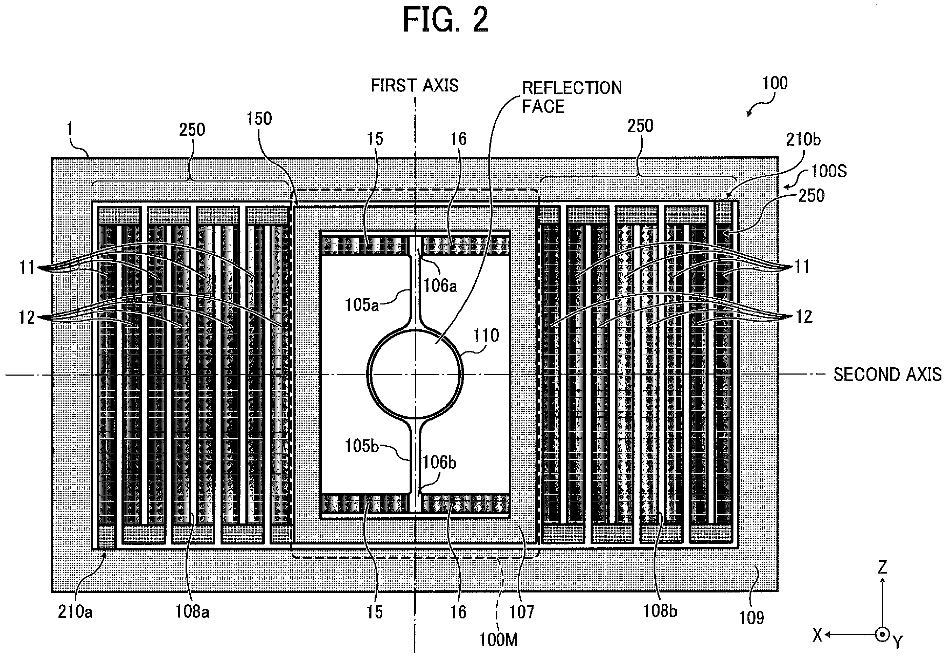

A description is given of the optical deflection apparatus 1000 in detail with reference to FIG. 2. As illustrated in FIG. 1, the optical deflection apparatus 1000 includes, for example, an optical deflector 100 (FIG. 2), a controller 200, and a memory 300.

As illustrated in FIG. 2, the optical deflector 100 includes, for example, a mirror 110, a first drive unit 150 and a second drive unit 250. The mirror 110 includes a reflection face at +Y side of the mirror 110. The first drive unit 150 drives the mirror 110 about a first axis (e.g., Z-axis) perpendicular to the X-axis. The second drive unit 250 drives the mirror 110 and the first drive unit 150 about the second axis parallel to the X-axis. The reflection face of the mirror 110 is positioned on a light path of the laser light coming from the light source unit 5.

Each of the members of the optical deflector 100 can be integrally formed by using, for example, micro electro mechanical systems (MEMS) process. Specifically, the optical deflector 100 can be manufactured from one sheet of silicon substrate 1 by forming cuttings on the silicon substrate 1 for forming a plurality of moveable members such as flexible deformable members, and then disposing piezoelectric elements for each of the moveable members. The reflection face of the mirror 110 is, for example, a thin metal layer made of aluminum, gold, or silver formed on a +Y side face of a silicon substrate 1.

As illustrated in FIG. 2, the first drive unit 150 includes, for example, two torsion bars 105a and 105b, two beams 106a and 106b, a first rectangular frame 107 and first piezoelectric elements 15 and 16. One end of each of the two torsion bars 105a and 105b extending along the first axis direction is respectively connected to each end of the mirror 110 at the first axis direction. The beam 106a extending along the second axis direction is connected to other end of the torsion bar 105a at the middle of the beam 106a, and the beam 106b extending along the second axis direction is connected to other end of the torsion bar 105b at the middle of the beam 106b. The both end of the two beams 106a and 106b extending along the second axis direction are connected to an inner end of the first rectangular frame 107. One pair of the two first piezoelectric elements 15 and 16 is disposed on the +Y side face of the beam 106a, in which the first piezoelectric element 15 is disposed at one side with respect to the first axis, and the first piezoelectric element 16 is disposed at other side with respect to the first axis. Similarly, one pair of the two first piezoelectric elements 15 and 16 is disposed on the +Y side face of the beam 106b, in which the first piezoelectric element 15 is disposed at one side with respect to the first axis, and the first piezoelectric element 16 is disposed at other side with respect to the first axis.

In this example configuration, the center of the mirror 110 is matched to the center of the first rectangular frame 107. The two torsion bars 105a and 105b have the same diameter and the same length. Each of the two beams 106a and 106b is a rectangular plate setting the long side direction to the second axis direction. Each of the first piezoelectric elements 15 and 16 is a rectangular plate having the same shape and size and setting the long side direction to the second axis direction.

As to the first drive unit 150, when a drive voltage is applied to the two first piezoelectric elements 15 respectively disposed on the two beams 106a and 106b concurrently, each of the two first piezoelectric elements 15 deforms, and each of the two beams 106a and 106b warps, and then a drive force about the first axis effects to the mirror 110 via the two torsion bars 105a and 105b, and the mirror 110 oscillates or swings about the first axis. The first drive unit 150 can be controlled by the controller 200.

Further, as to the first drive unit 150, when a drive voltage is applied to the two first piezoelectric elements 16 respectively disposed on the two beams 106a and 106b concurrently, each of the two first piezoelectric elements 16 deforms, and each of the two beams 106a and 106b warps, and then the drive force about the first axis effects to the mirror 110 via the two torsion bars 105a and 105b, and the mirror 110 oscillates or swings about the first axis.

Therefore, when the controller 200 is used to apply sinusoidal voltages of the opposite phases to the first piezoelectric elements 15 and 16 disposed on each of the two beams 106a and 106b concurrently (e.g., at the same timing), the mirror 110 can be oscillated efficiently about the first axis with a cycle of the sinusoidal voltage.

For example, the frequency of sinusoidal voltage is set to the resonant frequency of each of the two torsion bars 105a and 105b such as about 20 kHz to oscillate the mirror 110 with a cycle of 20 kHz by using the mechanical resonance of twisting of each of the two torsion bars 105a and 105b. Further, the maximum oscillation angle of the mirror 110 from the oscillation center is set, for example, about ± 15 degrees.

As illustrated in FIG. 2, the second drive unit 250 includes, for example, a first zig-zag unit 210a including a plurality of beams such as eight beams 108a continuously connected with each other with a zig-zag pattern, a second zig-zag unit 210b including a plurality of beams such as eight beams 108b continuously connected with each other with a zig-zag pattern, eight second piezoelectric elements disposed on the +Y side face of the eight beams 108a, eight second piezoelectric elements disposed on the +Y side face of the eight beams 108b, and a second rectangular frame 109.

As to the first zig-zag unit 210a, one end of one of the eight beams 108a is connected to an outer corner of the first rectangular frame 107 at the -Z side and +X side, and then the eight beams 108a are continuously formed with the zig-zag pattern. Further, one end of another one of the eight beams 108a is connected to an inner corner of the second rectangular frame 109 at the -Z side and +X side.

As to the second zig-zag unit 210b, one end of one of the eight beams 108b is connected to an outer corner of the first rectangular frame 107 at the +Z side and -X side, and then the eight beams 108b are continuously formed with the zig-zag pattern. Further, one end of another one of the eight beams 108b is connected to an inner corner of the second rectangular frame 109 at the +Z side and -X side.

As to the first zig-zag unit 210a, the eight second piezoelectric elements are respectively disposed on the +Y side face of the eight beams 108a. As to the second zig-zag unit 210b, the eight second piezoelectric elements are respectively disposed on the +Y side face of the eight beams 108b.

In this example configuration, the center of the mirror 110 is matched to the center of the second rectangular frame 109. Each of the eight beams 108a and the eight beams 108b is a rectangular plate having the same shape and size and setting the long side direction to the first axis direction. Each of the second piezoelectric elements is a rectangular plate having the same shape and size and setting the long side direction to the first axis direction. The length of the first axis direction (i.e., long-side direction) of the second piezoelectric element is set shorter than the length of the first axis direction of the beam disposed with the second piezoelectric element.

As to the second drive unit 250, as illustrated in FIG. 2, second piezoelectric elements 11 are respectively disposed on four beams 108a and second piezoelectric elements 12 are respectively disposed on another four beams 108a in the first zig-zag unit 210a, and second piezoelectric elements 11 are respectively disposed on four beams 108b and second piezoelectric elements 12 are respectively disposed on another four beams 108b in the second zig-zag unit 210b.

The four second piezoelectric elements 11 are disposed as odd numbered (first, third, fifth, seventh) piezoelectric elements when numbering is set from the most +X side end or as even numbered (second, fourth, sixth, eighth) piezoelectric elements when numbering is set from the most -X side end in the each of the first zig-zag unit 210a and the second zig-zag unit 210b. When a drive voltage is applied to the four second piezoelectric elements 11 concurrently, the four second piezoelectric elements 11 and the four beams disposed with the second piezoelectric elements 11 warp in the same direction about the second axis, and then the mirror 110 oscillates or swings about the second axis. The second drive unit 250 can be controlled by the controller 200.

Further, the four second piezoelectric elements 12 are disposed as the even numbered (second, fourth, sixth, eighth) piezoelectric elements when numbering is set from the most +X side end or as the odd numbered (first, third, fifth, seventh) piezoelectric elements when numbering is set from the most -X side end in the each of the first zig-zag unit 210a and the second zig-zag unit 210b. When a drive voltage is applied to the four second piezoelectric elements 12 concurrently, the four second piezoelectric elements 12 and the four beams disposed with the second piezoelectric elements 12 warp in the same direction about the second axis, and then the mirror 110 oscillates or swings about the second axis.

As to the configuration of FIG. 2, since the two first zig-zag unit 210a and the second zig-zag unit 210b are connected with each other with a point symmetry about the center of the movable unit, the even numbered second piezoelectric elements of the first zig-zag unit 210a at +X side and the odd numbered second piezoelectric elements of the second zig-zag unit 210b at -X side are applied with one same voltage, and the odd numbered second piezoelectric elements of the first zig-zag unit 210a at +X side and the even numbered second piezoelectric elements of the second zig-zag unit 210b at -X side are applied with another same voltage, but not limited hereto. The voltage can be applied with various patterns if the deformation can be accumulated.

Hereinafter, the four second piezoelectric elements 11, which are the odd numbered second piezoelectric elements, disposed in the each of the first zig-zag unit 210a and the second zig-zag unit 210b, are collectively referred to a first piezoelectric element group P1, and the four second piezoelectric elements 12, which are the even numbered second piezoelectric elements disposed in the each of the first zig-zag unit 210a and the second zig-zag unit 210b, are collectively referred to a second piezoelectric element group P2. Therefore, each of the first zig-zag unit 210a and the second zig-zag unit 210b includes the first piezoelectric element group P1 and second piezoelectric element group P2.

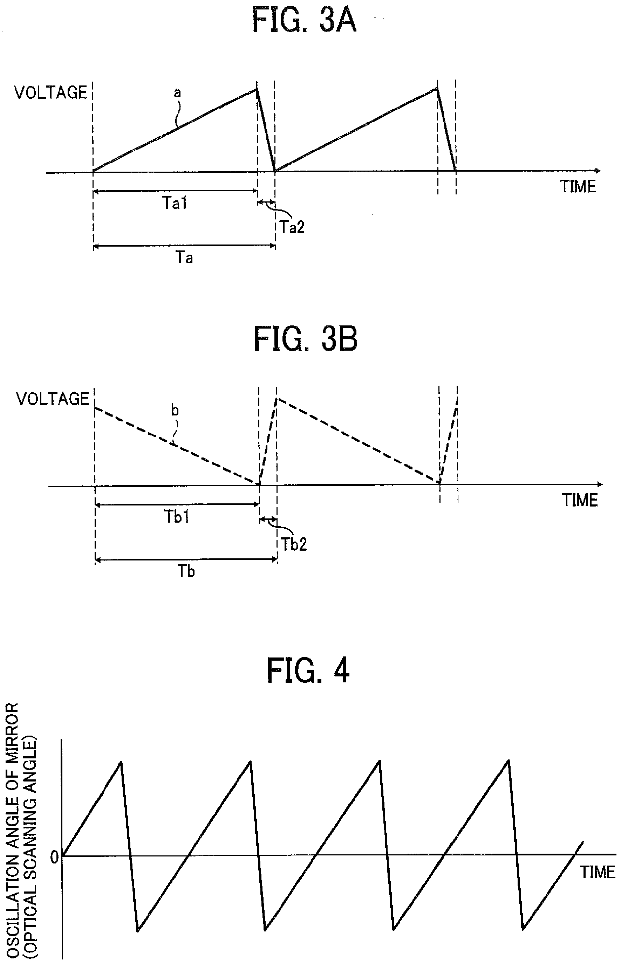

When a sawtooth voltage and a reverse sawtooth voltage are respectively applied to the two piezoelectric element groups P1 and P2 disposed in each of the first zig-zag unit 210a and the second zig-zag unit 210b concurrently (e.g., the same time), adjacent two beams in each of the zig-zag units can be warped to the opposite directions about the second axis and the warped level of each of the beams can be accumulated, with which the mirror 110 can be oscillated about the second axis efficiently with a cycle of the sawtooth voltage. For example, the mirror 110 can be oscillated with a lower voltage and a greater oscillation angle as indicated in FIG. 4.

In this description, the "sawtooth voltage" indicates a voltage that gradually increases a voltage level until a peak voltage, and then rapidly decreases the voltage level along the time line as illustrated in FIG. 3A, and the "reverse sawtooth voltage" indicates a voltage that rapidly increases a voltage level until a peak voltage, and then gradually decreases the voltage level along the time line as illustrated in FIG. 3B.

The support unit 100S includes a drive system including the first drive unit 150 and the second drive unit 250 to drive the mirror 110 about the first axis and about the second axis independently, and the mirror 110 is supported by the support unit 100S.

Each of the piezoelectric elements of the first drive unit 150 and the second drive unit 250 is made of, for example, piezoelectric material such as lead zirconate titanate (PZT). When a voltage is applied to the piezoelectric element in the polarization direction, distortion (expansion and shrinking) proportional to the voltage level of application voltage occurs, which is known as the inverse piezoelectric effect. Further, when a force is applied to the piezoelectric element, a voltage corresponding to the force occurs in the polarization direction, which is known as the piezoelectric effect.

In the above description, the piezoelectric elements are disposed on one face of the silicon substrate 1 (e.g., +Y side face) but not limited hereto. For example, to enhance freedom of wiring layout and the piezoelectric element layout, the piezoelectric elements can be disposed on only other face of the silicon substrate 1 (e.g., -Y side face), or the piezoelectric elements can be disposed on both faces of the silicon substrate 1 (e.g., +Y side face and -Y side face). These piezoelectric elements and electrodes can be formed by using the semiconductor processing, with which manufacturing cost can be reduced by manufacturing a greater lot.

When the light enters the mirror 110 oscillating about the first axis, reflection light can be scanned deflectively about the first axis. Further, when the light enters the mirror 110 oscillating about the second axis, reflection light can be scanned deflectively about the second axis. Therefore, to form an image with higher resolution and higher uniform image density on the scan target face, the light that enters the mirror 110 is scanned about the first axis linearly as a scanning line, and the scanning line is scanned about the second axis, which means the raster scanning is performed.

Specifically, the first drive unit 150 can use the mechanical resonance of each of the two torsion bars 105a and 105b to oscillate the mirror 110 with a higher frequency number with a lower energy, and the second drive unit 250 can oscillate the mirror 110 with a lower frequency number such as several tens frequency (Hz) with non-resonant way, with which the raster scanning can be performed.

However, in this case, the deformation amount of each of the second piezoelectric elements is smaller than the deformation amount of each of the first piezoelectric elements.

Therefore, as above described, by respectively and concurrently operating the eight second piezoelectric elements disposed for the eight beams of each of the zig-zag units in the second drive unit 250, the deformation amount of the second piezoelectric elements can be attained sufficiently.

As to the first example, the raster scanning can be performed by applying the drive voltage to the first piezoelectric element group P1 and second piezoelectric element group P2 disposed in each of the zig-zag units by respectively using the sawtooth voltage having as a waveform "a" and the reverse sawtooth voltage having a waveform "b," which are similar with each other such as having a homothetic ratio of one (see FIG. 3).

In this case, the oscillation speed of the mirror 110 about the second axis, that is the timewise change of the oscillation angle (deflection angle) of the mirror 110 about the second axis is preferably set linear as illustrated in FIG. 4, which means it is preferable that fluctuation does not occur to the oscillation speed of the mirror 110 about the second axis, which means, the driving of the mirror 110 about the second axis is performed as a linear drive. If the fluctuation occurs to the oscillation speed of the mirror 110 about the second axis, the linear optical scanning cannot be performed, and uneven brightness and image distortion may occur to an image formed on the scan target face, with which image quality may deteriorate.

However, when the deflection movement of the mirror 110 about the second axis is driven by the second drive unit 250, vibration components of the mechanical resonance specifically determined by a weight of a system including the mirror 110 and the first drive unit 150 and stiffness of the beams of each of the zig-zag units in the second drive unit 250 occurs, and then the vibration components of the mechanical resonance is transmitted to the mirror 110.

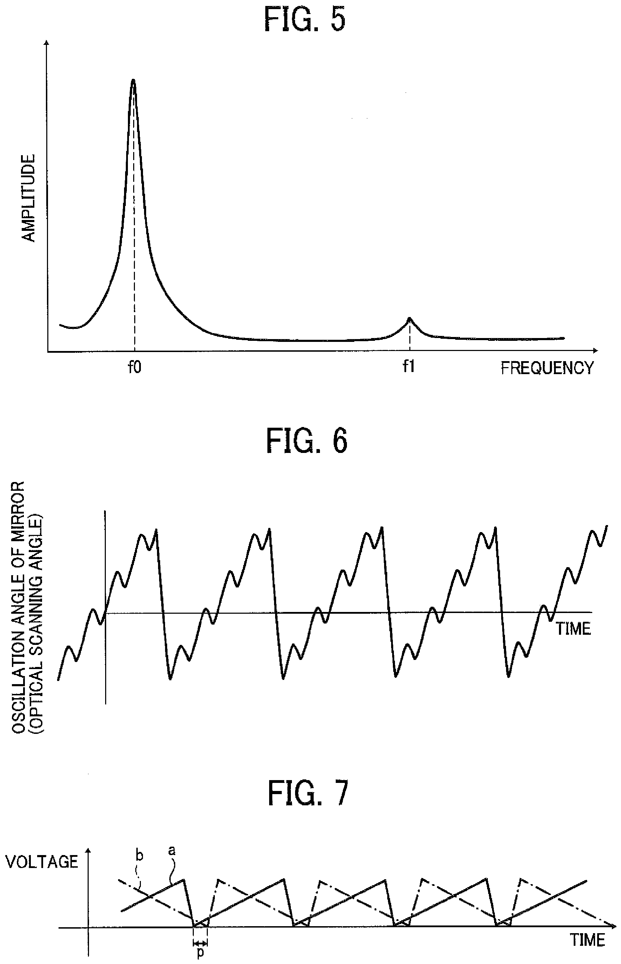

Therefore, as indicated in FIG. 5, the system including the mirror 110, the first drive unit 150 and the second drive unit 250 has a resonance mode such as resonance frequency specifically set by the mechanical resonance. As indicated in FIG. 5, the resonance mode (hereinafter, a device-specific resonance mode) includes a main resonance mode such as zero-order resonance mode (resonance frequency "f0"), and a higher order (i.e., first-order or more) resonance mode (resonance frequency "fk", $k \geqq 1$) such as a first-order resonance mode (resonance frequency "fl").

If the vibration components corresponding to the zero-order resonance frequency "f0" affects to the driving of the mirror 110 about the second axis when the linear raster scanning is to be performed, a greater waviness occurs to the timewise change of oscillation angle of the mirror 110 as indicated in FIG. 6, which means a greater fluctuation occurs to the oscillation speed of the mirror 110 about the second axis.

Therefore, as to the first example when the sawtooth voltage and the reverse sawtooth voltage, which are similar with each other such as having a homothetic ratio of one, are respectively applied to the first piezoelectric element group P1 and second piezoelectric element group P2 disposed in each of the zig-zag units, a phase of the sawtooth voltage and a phase of the reverse sawtooth voltage is shifted for a phase "p" as indicated in FIG. 7.

As to the first example, the sawtooth voltage and the reverse sawtooth voltage, which are similar with each other, and shifted for the phase "p" are respectively applied to the first piezoelectric element group P1 and the second piezoelectric element group P2 concurrently (e.g., at the same time). Specifically, the sawtooth voltage and the reverse sawtooth voltage, which are similar with each other, and shifted for the phase "p" that can cancel the vibration components of the mechanical resonance excited by the deformation of the four second piezoelectric elements disposed as the first piezoelectric element group P1 in each of the zig-zag units and the vibration components of the mechanical resonance excited by the deformation of the four second piezoelectric elements disposed as the second piezoelectric element group P2 in each of the zig-zag units with each other are respectively applied to the first piezoelectric element group P1 and the second piezoelectric element group P2 concurrently (e.g., at the same time). With employing this configuration, the vibration components of the mechanical resonance at each of the zig-zag units can be reduced greatly.

By setting different phases for the drive voltages applied to the first piezoelectric element group P1 and the second piezoelectric element group P2, when the optical scanning for the Z-axis direction (sub-scanning direction) by the driving of the mirror 110 about the second axis by using the second drive unit 250 is performed, the greater fluctuation of the oscillation speed of the mirror 110 (the timewise change of oscillation angle of the mirror 110) can be suppressed, which means the linearity of the oscillation speed of the mirror 110 about the second axis can be enhanced for some level.

However, as to the optical deflector 100, when the higher order (i.e., first-order or more) resonance mode (i.e., n-th order resonance frequency) overlaps a harmonic component frequency of the sawtooth voltage and the reverse sawtooth voltage respectively applied to the firs) piezoelectric element group P1 and the second piezoelectric element group P2, the vibration caused by the frequency of the higher order (i.e., first-order or more) resonance mode (i.e., n-th order resonance frequency) affects the optical scanning, and thereby many tiny waviness occurs to the timewise change of oscillation angle of the mirror 110, which means the tiny fluctuation occurs to the oscillation speed of the mirror 110 about the second axis. Therefore, the speed fluctuation may occur for the higher frequency, and thereby image quality may deteriorate such as a tiny uneven brightness occurs.

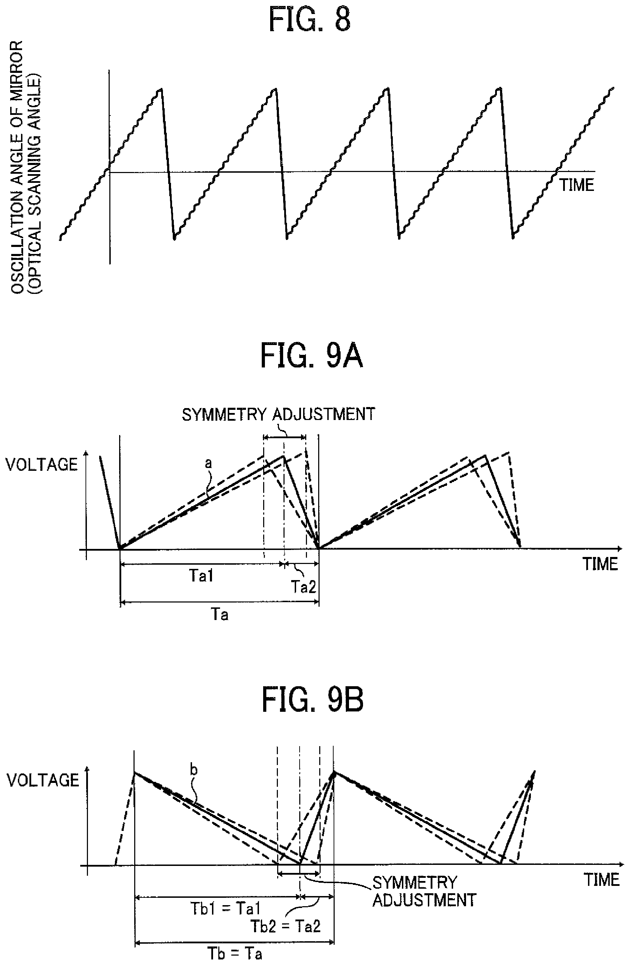

In view of this issue, as to the first example a symmetry of the sawtooth voltage and a symmetry of the reverse sawtooth voltage, which are the drive voltages (drive signals) applied to the first piezoelectric element group P1 and the second piezoelectric element group P2, are adjusted as illustrated in FIG. 9. As illustrated in FIG. 9, the symmetry of the sawtooth voltage (waveform "a") is defined as a ratio of a time "Ta1" with respect to one cycle of the sawtooth voltage "Ta," in which the time "Ta1" is a time period that the voltage is increased from the minimum value to the maximum value, which is used for the optical scanning. The symmetry of the reverse sawtooth voltage is defined as a ratio of a time "Tb1" with respect to one cycle of the sawtooth voltage "Tb," in which the time "Tb1" is a time period that the voltage is decreased from the maximum value to the minimum value, which is used for the optical scanning.

The frequency property of the harmonic component of the sawtooth voltage and the frequency property of the reverse sawtooth voltage can be changed by changing the symmetry of the sawtooth voltage and the symmetry of the reverse sawtooth voltage. Specifically, by adjusting the symmetry of each of the voltages, the overlapping of the higher order resonance mode having the resonance frequency "f1" and the harmonic component of the voltage can be reduced, with which the vibration components at the higher frequency can be reduced greatly,

With employing this configuration, the enhanced even driving (linear drive) can be performed for the optical scanning along the sub-scanning direction, driven by using non-resonantly, by adjusting the symmetry of the sawtooth voltage and the reverse sawtooth voltage. As a result, as to the sub-scanning direction, uneven brightness and image pattern distortion, which may occur to images, can be reduced, in particular prevented.

As a result, as to the first example, by adjusting the phase difference of the sawtooth voltage and the reverse sawtooth voltage and by adjusting the symmetry of the sawtooth voltage and the reverse sawtooth voltage, uneven brightness and image distortion, which may occur to images formed on the scan target face, can be suppressed, and thereby the deterioration of image quality may can be suppressed, which means higher quality images can be formed on the scan target face.

A description is given of reason that the evenness of scanning (e.g., evenness of oscillation speed of the mirror 110 about the second axis) for the vertical direction (sub-scanning direction) can be enhanced by adjusting the symmetry of the sawtooth voltage and the reverse sawtooth voltage. Hereinafter, the sawtooth voltage and the reverse sawtooth voltage are simply referred to the "sawtooth wave."

When an optical deflection device such as an optical deflector is made of silicone or the like, a plurality of resonance modes including the lowest order (i.e., zero-order) resonance mode and the higher order (i.e., first-order or more) resonance mode exist. Specifically, as illustrated in FIG. 5, a main resonance mode such as the zero-order resonance mode having the resonance frequency "f0" and the first-order resonance mode having the resonance frequency "f1" exist.

When the mirror 110 is driven by the sawtooth voltage (waveform "a") and the reverse sawtooth voltage (waveform "b") indicated in FIG. 3, the resonance mode having the resonance frequency "f0" affects greatly ꝏ, and thereby the optical scanning having waviness indicated in FIG. 6 occurs. In view of this issue, by adjusting the phase difference of the waveform "a" and the waveform "b," the waviness caused by the resonance mode having the resonance frequency "f0" can be suppressed.

However, even if the phase difference of the waveform "a" and the waveform "b" is adjusted, tiny vibrations indicated in FIG. 8 may occur. The tiny vibration is caused by the higher order (i.e., first-order or more) resonance mode, and the vibration caused by the resonance frequency "f1" occurs to the optical deflection device. The tiny vibration may cause tiny stripes (e.g., uneven brightness) on images.

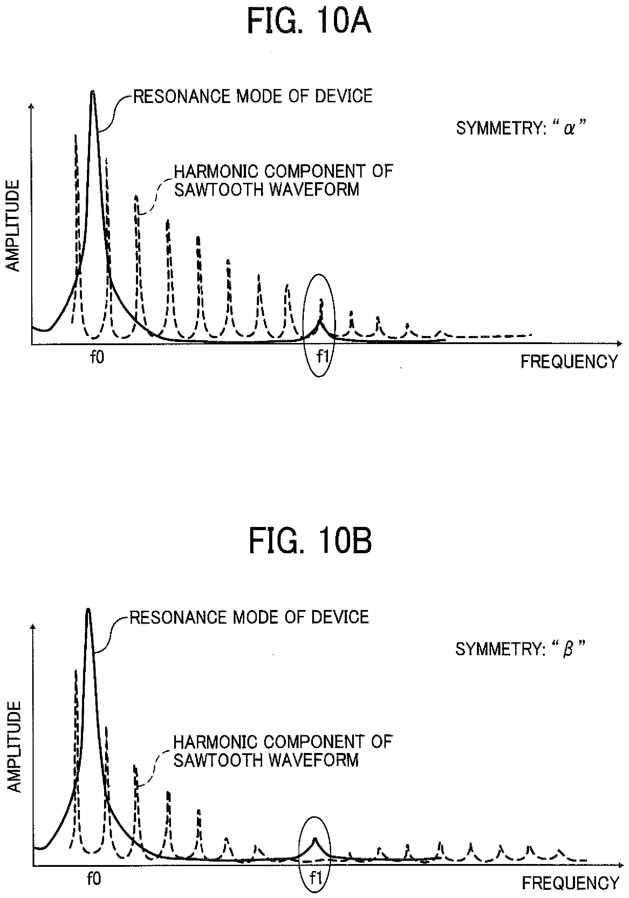

The tiny vibration is caused by an overlapping of the harmonic component of the sawtooth wave and the higher order resonance mode of the optical deflection device. As illustrated in FIG. 10A, when the symmetry "$\alpha$" is set, the harmonic component of the sawtooth wave and the higher order resonance mode of the optical deflection device overlap with each other, in which the vibration corresponding to the resonance frequency "f1" occurs, and thereby the vibration indicated in FIG. 8 occurs when the sub-scanning is performed. In this case, when the symmetry of the sawtooth wave is changed from the symmetry "$\alpha$" to the symmetry $\beta$" while the drive frequency of the sawtooth wave is being fixed to the same, a pattern of the harmonic component of the sawtooth wave can be changed. By adjusting the symmetry of the sawtooth wave, as illustrated in FIG. 10(B), the harmonic component of the sawtooth wave may not occur at a frequency band of the higher order resonance mode of the optical deflection device. By changing the symmetry of the sawtooth wave slightly, the excitation of the resonance mode of the sub-scanning direction at the optical deflection device can be suppressed. As a result, the even optical scanning having no vibration for the sub-scanning direction indicated in FIG. 4 can be attained.

The controller 200 can detect the oscillation angle or deflection angle of the mirror 110 based on a detection result received from a sensor. Based on the detection result received from the sensor, the controller 200 generates a synchronization signal for synchronizing the oscillation angle of the mirror 110 and the light emission timing of each of the laser diodes, and outputs the synchronization signal to the LD controller 50. Further, the controller 200 controls the second drive unit 250 of the optical deflector 100 as described below.

Specifically, the controller 200 applies the drive voltage having the waveform "a" (sawtooth voltage) to each of the piezoelectric elements of the first piezoelectric element group P1 disposed in each of the zig-zag units, and also applies the drive voltage having the waveform "b" (reverse sawtooth voltage) to each of the piezoelectric elements of the second piezoelectric element group P2 disposed in each of the zig-zag units. For example, the frequency of the waveform "a" and the waveform "b" is set about 60 (Hz). However, the frequency can be shifted for several Hz in view of the resonance frequency of the mechanical resonance at each of the zig-zag units such as a base resonance mode (i.e., zero-order resonance mode) and higher order resonance mode.

When the drive voltage having the waveform "a" and the drive voltage having the waveform "b" are respectively applied to the two piezoelectric element groups P1 and P2 disposed in each of the zig-zag units concurrently, the eight beams of each of the zig-zag units warp, and then the mirror 110 oscillates about the second axis. With employing this configuration, the optical scanning for the Z-axis direction (sub-scanning direction) by the driving of the mirror 110 about the second axis is performed.

A description is given of an adjustment method of the drive voltage applied to the first piezoelectric element group P1 and the second piezoelectric element group P2 disposed in each of the zig-zag units, which is the adjustment method of the optical deflection apparatus 1000. The adjustment can be performed by a person such as an operator when the image generation apparatus 10 is, for example, being manufactured, before shipment, and/or during the maintenance.

At first, the sawtooth voltage having the waveform "a" and the reverse sawtooth voltage having the waveform "b" having the same cycle, the same symmetry and the same amplitude, which are similar with each other having the homothetic ratio of one, indicated as solid lines in FIG. 9, are respectively applied to the first piezoelectric element group P1 and the second piezoelectric element group P2 concurrently to activate the second drive unit 250 to oscillate the mirror 110 about the second axis. Then, the laser light is irradiated to the mirror 110 oscillating about the second axis to deflect the laser light about the second axis. In this irradiation process, the scanning speed along the sub-scanning direction is monitored by using, for example, a position sensor diode (PSD) while shifting the phase of the waveform "a" and the waveform "b" to determine the phase deviation amount (i.e., phase difference) that can set a higher uniform scanning speed (i.e., oscillation speed of the mirror 110 about the second axis). By adjusting the phase difference, the lowest resonance (zero-order resonance for the sub-scanning direction) can be suppressed, and thereby the greater fluctuation of the oscillation speed of the mirror 110 can be suppressed.

The waveform "a" has a symmetry "Sa" defined by a ratio of the rising period "Ta1" (i.e., time required for optical scanning) and one cycle of the sawtooth voltage "Ta" expressed by "Ta1/Ta." "Ta2 = Ta - Ta1" is a time for returning the voltage to a given level such as the intial level as indicated in FIG. 9A.

The waveform "b" has a symmetry "Sb" defined by a ratio of the falling period "Tb1" (i.e., time required for optical scanning) and one cycle of the reverse sawtooth voltage "Tb" expressed by "Tb1/Tb." "Tb2 = Tb - Tb1" is a time for returning the voltage to a given level such as the intial level as indicated in FIG. 9B.

Then, the calculated phase difference deviation "p" is stored in the memory 300. Further, the cycle, amplitude (maximum value) and symmetry of the waveform "a" and the waveform "b" can be pre-set to values that the oscillation angle of the mirror 110 about the second axis becomes a suitable value.

Then, the symmetry is changed (see FIG. 9) while maintaining the phase difference "p" of the waveform "a" and the waveform "b" and matching the symmetry "Sa" and the symmetry "Sb" (maintaining Sa = Sb) and fixing the amplitude value. The adjustment of symmetry is performed to set an even speed for the scanning speed (i.e., the oscillation speed of the mirror 110 about the second axis in view of the fluctuation of the oscillation speed of the mirror 110 about the second axis. In this configuration, the symmetry that can achieve the highest even scanning speed is stored in the memory 300 as an optimal symmetry "Sk" with the phase difference deviation "p." By performing the adjustment of symmetry, the higher order resonance for the sub-scanning direction can be suppressed, and the tiny fluctuation of the oscillation speed of the mirror 110 can be suppressed.

When the mirror 110 is to be driven for forming an image on the scan target face, the controller 200 reads out the phase difference "p" and the optimal symmetry "Sk" from the memory 300, and applies two drive voltages satisfying the phase difference "p" and the optimal symmetry "Sk" respectively to the first piezoelectric element group P1 and the second piezoelectric element group P2 disposed in each of the zig-zag units concurrently to drive the mirror 110 about the second axis.

Specifically, the memory 300 stores a first waveform pattern such as cycle and amplitude and the optimal symmetry "Sk" of a first voltage applicable to one of the piezoelectric element groups P1 and P2 of each of the zig-zag units, and the phase difference "p." Then, the controller 200 can calculate a second waveform pattern such as cycle and amplitude of a second voltage applicable to another one of the piezoelectric element groups P1 and P2 based on the first waveform pattern, the optimal symmetry "Sk" and the phase difference "p" stored in the memory 300.

After the above described adjustment process, the waveform "a" and the waveform "b" become the sawtooth waves that are similar with each other having the homothetic ratio of one having set with the phase difference "p" and the optimal symmetry "Sk"

The symmetry the waveform of "a" and the waveform "b" is adjusted to the optimal symmetry "Sk" ideally, but the symmetry the waveform of "a" and the waveform "b" can be adjusted to a symmetry which may be deviated for some from the optimal symmetry "Sk."

Further, the symmetry of the sawtooth wave for the sub-scanning driving is preferably set to a range of 0.8 or more from the viewpoint of the use efficiency of image display area. The symmetry of the waveform of the drive voltage is changed within this range to adjust the harmonic wave pattern to a pattern that does not overlap the higher order resonance mode of the device. Further, in addition to the symmetry adjustment, by adjusting the frequency of the sawtooth wave, the harmonic pattern of the sawtooth wave can be changed to a pattern that does not overlap the device-specific resonance mode.

The first example , employs the sawtooth wave as the waveform of the drive voltage, but not limited hereto. For example, a sawtooth wave having as a round top, and a sawtooth wave having a curved profile instead of the linear profile can be used. The waveform of the drive voltage can be changed depending on device property of the optical deflector.

Further, even if the processing error and the positional deviation of the piezoelectric elements may occur to the optical deflector 100 during the manufacturing process, the processing error and the positional deviation can be compensated by the adjustment of the symmetry of the sawtooth wave. As a result, the evenness of scanning along the sub-scanning direction and the yield of the optical deflector 100 can be enhanced.

As to the above described first example, the optical deflection apparatus 1000 usable for the optical scanning incudes, for example, the mirror 110 having the reflection face, the support unit 100S including the zig-zag units having a plurality of beams continuously formed with the zig-zag pattern that supports the mirror 110 oscillate-ably about the X-axis (the second axis) and the axis perpendicular to the X-axis (the first axis), a plurality of piezoelectric elements respectively disposed on the plurality of beams, in which the two voltages (i.e., first drive voltage and second drive voltage) having different cycle and waveform (e.g., waveform "a" and waveform "b") are respectively applicable to two piezoelectric elements disposed on adjacent two beams concurrently, and the time ratio (symmetry) of the time required for optical scanning with respect to one cycle of each of the two voltages (i.e., first drive voltage and second voltage) is set in view of the fluctuation of the oscillation speed of the mirror 110 about the X-axis.

With employing this configuration, the evenness of the oscillation speed of the mirror 110 about the X-axis can be enhanced.

Further, since the time ratio (symmetry) of each of the two voltages (i.e., first drive voltage and second voltage) can be set independently to a value so that the harmonic component of the two voltages and the higher order resonance mode of the device (i.e., system having the mirror 110 and zig-zag units) do not overlap with each other, the tiny fluctuation of the oscillation speed of the mirror 110 about the X-axis can be suppressed.

Further, since the symmetry of the two voltages (i.e., first drive voltage and second voltage) can be matched, the mirror 110 can be oscillated about the X-axis with a sufficient good balance.

Further, the amplitude and cycle the two voltages (i.e., first drive voltage and second voltage) can be matched, and the time ratio (symmetry) of one of the two voltages (i.e., first drive voltage and second voltage) becomes the time ratio (symmetry) of the rising period with respect to one cycle, and the time ratio (symmetry) of other one of the two voltages (i.e., first drive voltage and second voltage) becomes the time ratio (symmetry) of the falling period with respect to one cycle.

With employing this configuration, the mirror 110 can be oscillated about the X-axis with a further sufficient good balance.

Further, since one of the two voltages (i.e., first drive voltage and second voltage) is the sawtooth voltage, and the other one of the two voltages (i.e., first drive voltage and second voltage) is the reverse sawtooth voltage, the oscillation angle or deflection angle of the mirror 110 about the X-axis can be changed linearly.

Further, if the time ratio (symmetry) of each of the two voltages (i.e., first drive voltage and second voltage) is set 0.8 or more, the use efficiency of image display area can be enhanced.

Further, the phase difference of the two voltages (i.e., first drive voltage and second voltage) is set to a value so that the zero-order resonance mode of the device (i.e., system having the mirror 110 and zig-zag units) can be suppressed. Therefore, the greater fluctuation of the oscillation speed of the mirror 110 about the X-axis can be suppressed.

Further, the support unit 100S includes the first drive unit 150 that supports the mirror 110 while allowing the oscillation of the mirror 110 about the axis perpendicular to the X-axis, and the first drive unit 150 is supported by each of the zig-zag units while the first drive unit 150 is allowed to be oscillated about the X-axis.

In this configuration, the mirror 110 can be oscillated about the axis perpendicular to the X-axis by using the first drive unit 150, and the mirror 110 can be oscillated about the X-axis by using the second drive unit 250. Therefore, the scan target face can be scanned two dimensionally by the light deflected by the mirror 110 driven by the first drive unit 150 and the second drive unit 250. This configuration can achieve the compact size and the lower cost compared to a configuration using a combination of one optical deflector that can oscillate a mirror about one axis and another one optical deflector that can oscillate a mirror about another one axis.

Further, the image generation apparatus 10 includes, for example the light source unit 5 and the optical deflection apparatus 1000. The light source unit 5 includes the three laser diodes LD1 to LD3 to emit the laser light modulate-able based on image information, and the optical deflection apparatus 1000 deflects the light emitted from the light source unit 5 to the scan target face. In this configuration, the scan target face can be scanned stably by the laser light that is modulated based on the image information, and thereby higher quality image can be formed on the scan target face. By attaining the evenness of the oscillation speed of the mirror 110 about the second axis, the higher quality image suppressing uneven brightness and image distortion can be formed.

Further, as to the first example, the optical deflection apparatus 1000 usable for the optical scanning incudes, for example, the mirror 110 having the reflection face, the support unit 100S including the zig-zag units having a plurality of beams continuously formed with the zig-zag pattern that supports the mirror 110 oscillate-ably about the X-axis (the second axis) and the axis perpendicular to the X-axis (the first axis), a plurality of piezoelectric elements respectively disposed on the plurality of beams, in which the two voltages (i.e., first drive voltage and second drive voltage) having different cycle and waveform (e.g., waveform "a" and waveform "b") are respectively applicable to two piezoelectric elements disposed on adjacent two beams concurrently, and the time ratio (symmetry) of the time required for optical scanning with respect to one cycle of each of the two voltages (i.e., first drive voltage and second voltage) is set in view of the fluctuation of the oscillation speed of the mirror 110 about the X-axis. The adjustment method of the optical deflection apparatus 1000 includes the step of setting the time ratio (symmetry) of the time required for optical scanning with respect to one cycle of each of the two voltages (i.e., first drive voltage and second voltage) in view of the fluctuation of the oscillation speed of the mirror 110 about the X-axis.

In this configuration, the optical deflection apparatus 1000 can be adjusted to enhance the evenness of the oscillation speed of the mirror 110 about the X-axis.

Further, as to the setting step, the time ratio (symmetry) of each of the two voltages (i.e., first drive voltage and second voltage) is set to a value so that the harmonic component of the two voltages and the higher order resonance mode of the system having the mirror 110 and zig-zag units do not overlap.

In this configuration, the optical deflection apparatus 1000 can be adjusted to suppress the tiny fluctuation of the oscillation speed of the mirror 110 about the X-axis.

Further, the adjustment method of the optical deflection apparatus 1000 further includes the step of setting the phase difference of the two voltages (i.e., first drive voltage and second voltage) to suppress the zero-order resonance mode of the system including the mirror 110 and the zig-zag units.

In this configuration, the optical deflection apparatus 1000 can be adjusted to suppress the greater fluctuation of the oscillation speed of the mirror 110 about the X-axis.

As to a two dimensional scanner driver disclosed in JP-2011-107505-A, the evenness of the scanning speed for the raster scanning can be attained by performing the following method.

When the two dimensional scanning is performed by using the light, the harmonic wave of non-resonant driving in the sub-scanning direction and the resonance frequency due to the structure of the scanner driver in the sub-scanning direction interfere with each other, and causes the waviness in sub-scanning direction, with which the scanning speed in the sub-scanning direction may become uneven. Therefore, a speed detector to detect the speed of the optical scanning is disposed to generate a speed detection signal. Based on the speed detection signal, the feedback control is performed for the scanner driver to reduce unevenness of the scanning speed in the sub-scanning direction.

However, this two dimensional scanner driver requires the sensor system to detect the speed signal of the optical scanning, with which the configuration of the apparatus becomes complex, and the size of the apparatus becomes bigger. Further, since the two dimensional scanning is preformed, signals of the main scanning direction and signals of the sub-scanning direction may be mixed, and the processing load to prevent the mixing of signals becomes greater, and further, the mixing of signals cannot be prevented completely. Further, a fine adjustment technologies are required to optimize the conditioning, which increases the cost of the apparatus.

As to the first example, the optical deflection apparatus 1000 does not require the special sensor system and complex signal processing. As to the optical deflection apparatus 1000, the evenness of the scanning speed in the sub-scanning direction by non-resonant driving can be secured, with which higher quality image without uneven brightness and image distortion can be formed. Therefore, the evenness of the scanning speed in the sub-scanning direction can be attained by using a simple configuration and control, and lower cost.

As to the first example, the three laser light corresponding to the three primary colors of red, green, and blue (RGB) are emitted from the three laser diodes and synthesized as the synthesized light, and then the synthesized light is deflected by the optical deflection apparatus 1000 to scan the scan target face two dimensionally to form a color image, but not limited hereto. For example, one laser light emitted from one laser diode can be deflected by the optical deflection apparatus 1000 to scan the scan target face two dimensionally to form a monochrome image.

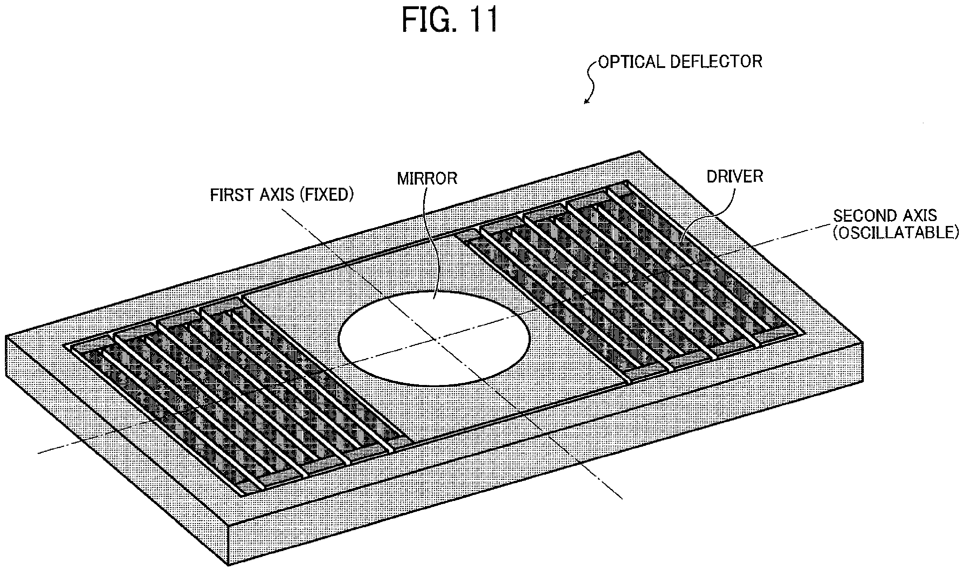

Further, as to the first example the support unit 100S employs a configuration including the drive unit having the first drive unit 150 and the second drive unit 250 but limited hereto, and can be changed as required. As to the first example embodiment, the drive unit drives the mirror 110 about two axes perpendicular to each other (the first axis and the second axis) independently, but the mirror 110 can be driven about only one axis. Specifically, as illustrated in FIG. 11, an one-dimensionally scannable optical deflector used for one dimensional optical scanning driven by non-resonant driving can be employed. The drive unit of FIG. 11 can employ the same configuration of the second drive unit 250. In this case, two optical deflectors are combined, one mirror can be driven about one axis and another one mirror can be driven about another one axis perpendicular to the one axis. Further, the drive unit of FIG. 11 can employ the same configuration of the first drive unit 150

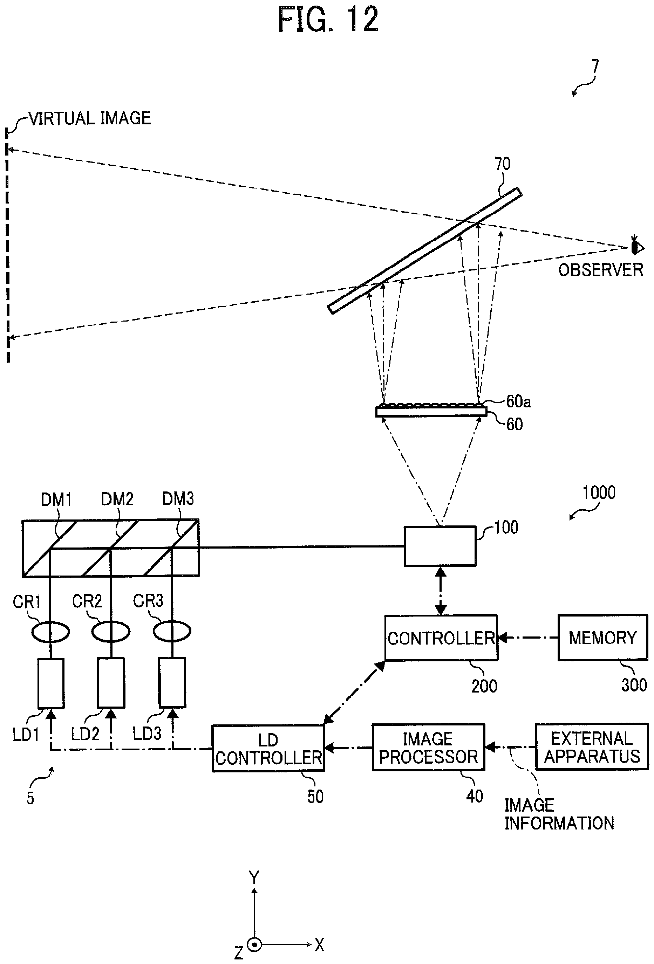

Further, as to the first example the optical deflection apparatus 1000 is disposed for the image generation apparatus 10, but limited hereto. For example, the optical deflection apparatus 1000 can be disposed for the image display apparatus such as a head-up display (HUD) 7 as illustrated in FIG. 12. The HUD 7 can be mounted to moveable objects or vehicles such as automobiles, air planes, ships. The HUD 7 is used to generate an image using light, and then the image light is guided to a transmissive reflective member so that a virtual image of the image light can be recognized via the transmissive reflective member. The HUD 7 can be mounted to the moveable object to configure an image dipslay system for the moveable object. The "transmissive reflective member" can pass through a part of the light and reflect a part of the remaining light.

As illustrated in FIG. 12, the head-up display (HUD) 7 includes, for example, a micro lens array 60 and a semi-transparent member 70. The micro lens array 60 including a plurality of micro lenses 60a arrayed two dimensionally along the X-Z plane is disposed at a position on a light path of the laser light deflected by the optical deflection apparatus 1000. The semi-transparent member 70 is disposed at a position on the light path of the laser light coming from the micro lens array 60. The semi-transparent member 70, which is an example of the transmissive reflective member, can be used as a combiner. In this configuration, the laser light is deflected by the optical deflection apparatus 1000 about the first axis and about the second axis, and the laser light scans the surface of the micro lens array 60 (scan target face) two dimensionally to generate an image on the surface of the micro lens array 60. Then, imaging light enters the semi-transparent member 70 via the micro lens array 60 to form a virtual image of the imaging light as an expanded image. Therefore, an observer can see the virtual image via the semi-transparent member 70. In this configuration, since the imaging light is dispersed by the micro lens array 60, speckle noise can be reduced. The micro lens array 60 can be used as an optical device or system that guides the light to the transmissive reflective member.

Further, instead of the micro lens array 60, a member such as translucent screen, reflection screen, and diffusion plate that can pass through a part of the light and reflect a part of the light can be employed. Further, a mirror such as a concave mirror and a flat mirror can be disposed at a position on the light path between these members and the semi-transparent member 70. Further, instead of the semi-transparent member 70, a window glass such as a windshield of a vehicle can be employed.

Further, the optical deflection apparatus 1000 can be disposed as the image display apparatus such as a head mounted display.

Further, as to the first example, the configuration of the image generation apparatus 10 is employed for a projection but not limited to hereto. For example, the configuration of the image generation apparatus 10 can be employed for the image forming apparatus such as printers, copiers or the like. Specifically, for example, the one-dimensionally scannable optical deflector of FIG. 11 can be applied to printers and copiers, in which the laser light deflected by the one-dimensionally scannable optical deflector scans a surface of photoconductor, used as an image carrier, to form a latent image, toner is adhered on the latent image to develop the latent image as toner image, and then the toner image is transferred to a medium to form an image.

Further, as to the first example, the phase difference of the waveform "a" and the waveform "b" is not set zero, but the phase difference of the waveform "a" and the waveform "b" can be set zero.

Further, as to the first example , the cycle of the waveform "a" and the waveform "b" are set with the same value, but the cycle of the waveform "a" and the waveform "b" can be set differently.

Further, as to the first example, the amplitude of the waveform "a" and the waveform "b" are set with the same value, but the amplitude of the waveform "a" and the waveform "b" can be set differently.

Further, as to the first example , the symmetry of the waveform "a" and the waveform "b" are set with the same value, but the symmetry of the waveform "a" and the waveform "b" can be set differently.

Further, as to the first example, the waveform of drive voltage applied to the piezoelectric element employs the sawtooth wave, but not limited hereto. The waveform of drive voltage applied to the piezoelectric element employs can employ any waveforms having a cyclical pattern. For example, the waveform of the drive voltage applied to the adjacent two second piezoelectric elements are set preferably with any waveforms that can suppress the fluctuation of the oscillation speed of the mirror 110 about the second axis.

Further, the layout, size, shape, numbers and material of each units of the optical deflector 100 of the first example embodiment can be changed as required. For example, as to the first drive unit 150, the mirror 110 is connected one end of the torsion bar, and the beams is connected the other end of the torsion bar, which means the mirror 110 can be connected with one part of the torsion bar, and the beams can be connected with other part of the torsion bar.

Further, the configuration of the light source unit 5 of the first example, can be changed as required. For example, the light source unit 5 includes the three laser diodes corresponding to the three primary colors of red, green, and blue (RGB), but the light source unit 5 can include one, two, or four or more laser diodes. In this case, the numbers of the collimate lens and the dichroic mirror can be changed from zero to other numbers based on the numbers of the laser diode.

Further, as to the first example, the light source unit 5 employs the laser diode such as an edge emitting laser as the light source, but not limited hereto. For example, the light source unit 5 can employ a surface emitting laser, and a light source other than laser.

A description is given of a background of conceiving the first example.

Recently, micro optical deflectors are developed as devices to deflect and scan light beam. These micro optical deflectors can be manufactured by using the semiconductor manufacturing technologies such as the micro machining technologies that can process silicon and glass with a micro scale. For example, micro optical deflectors including a moveable unit having mirror having a reflection face and flexible beams formed integrally on a substrate can be manufactured. The optical deflector can employ a configuration using thin film piezoelectric element made of thin film piezoelectric material as an actuator.

As to the optical deflector employing the piezoelectric actuator, the thin film piezoelectric are stackingly formed on a surface of a cantilever. In this configuration, the expansion and shrinking along the face direction caused by piezoelectric property of the piezoelectric element is transmitted to the cantilever to oscillate the cantilever. The reflection face can be rotated by the oscillation of the cantilever to deflect the light.

As to the optical deflector, the mirror having the reflection face oscillates about two axes perpendicular to each other such as a first axis (e.g., horizontal direction) and a second axis (e.g., vertical direction) to perform the optical scanning two dimensionally. This two-dimensionally scannable optical deflector can be compact in size and lower cost for manufacturing compared to a combination of two one-dimensionally scannable optical deflectors.

When the two dimensional scanning is performed, typically, the optical scanning for the horizontal direction employs the resonant driving using the mechanical resonance frequency while the optical scanning for the vertical direction employs the non-resonant driving.

When the two dimensional scanning is performed, the driving along the horizontal direction using the mechanical resonance is performed as follows. While one end of the cantilever is fixed to a frame, the other one end of the cantilever can be oscillated by the piezoelectric driving. The torque occurred by this oscillation of the cantilever is transmitted to a torsion bar (flexible beam) having one end connected to the other one end of the cantilever, and then the mirror connected to the other end of the torsion bar is rotated. With employing this configuration, a greater scanning angle range can be attained by using a smaller device driven by a lower voltage.

Since the raster scanning is required to attain higher resolution and higher uniform image density of image, the optical scanning for the vertical direction employs the non-resonant driving. Typically, the raster scanning is performed by using a drive signal having a sawtooth wave.

However, when the raster scanning is performed for the vertical direction, the mechanical resonance determined by the weight of the moveable unit and stiffness of the cantilever, and the harmonic component of the sawtooth wave used as the drive signal or drive voltage may interfere with each other. The interference of the vibration components may cause uneven brightness and image distortion, and thereby the image quality may deteriorate. Therefore, the amplitude and phase of applied drive signal are adjusted to suppress the vibration caused by the resonance mode.

However, due to the configuration of the two dimensional scannable optical deflection device, the mechanical resonance frequency specific to the device is not just one but the mechanical resonance frequency specific to the device becomes two or more. By adjusting the phase of the sawtooth wave, the mechanical resonance corresponding to main resonance such as zero-order resonance can be suppressed, but the mechanical resonance corresponding to the higher frequency band cannot be suppressed effectively.

This situation may cause tiny areas having further uneven brightness and image distortion on the image, and thereby image quality may deteriorate.

In view of this issue, the inventors have conceived the above described first example to prevent the image quality deterioration.

As to the above described first example, the phase difference of two drive voltages, each having the sawtooth wave, applied to the adjacent two piezoelectric elements is adjusted to a value that can suppress the excitation and amplification level of the lowest (i.e., zero-order) resonance mode. However, when the phase difference deviates from the optimal phase difference greatly, it is confirmed that the linearity of scanning line may be decreased, and the lowest resonance mode overlaps the harmonic component of the drive voltage, and then the higher frequency vibration may occur greatly.

In view of this issue, the inventors have conceived a second example embodiment, which represents an embodiment according to the invention.

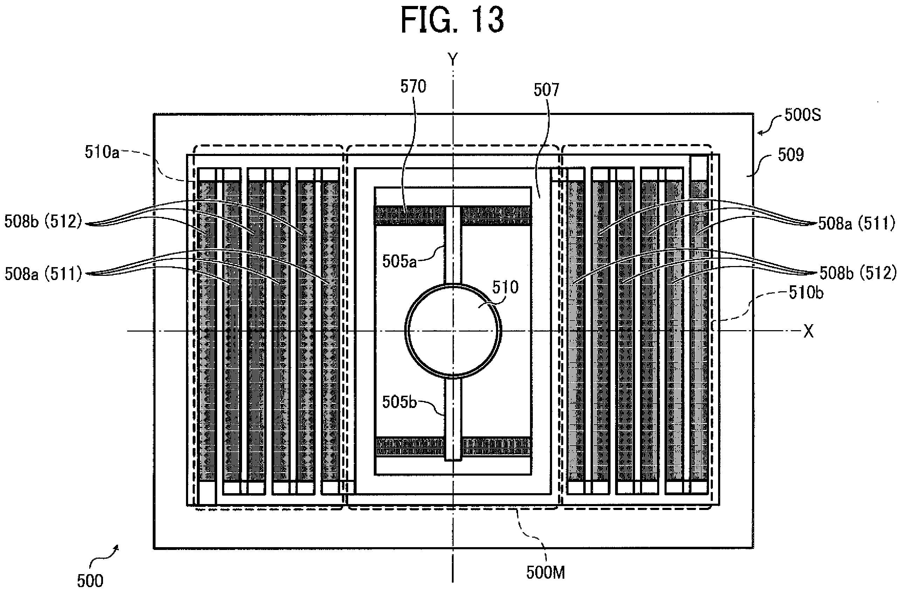

A description is given of an optical deflector 500 of the second example embodiment with reference to FIGs. 13 to 26. Similar to the first example and variant example, the second example embodiment can be employed for the optical scanning for the image display apparatuses such as head-up displays, and head mounted displays, and image generation or forming apparatus such as projectors, printers, and copiers.

FIG. 13 is a plan view of the optical deflector 500 of the second example embodiment. As indicated in FIG. 13, the optical deflector 500 has a configuration similar to the configuration of the optical deflector 100 of the first example except the number of beams in each of the zig-zag units. Hereinafter, the optical deflector may be simply referred to "device."

As illustrated in FIG. 13, the optical deflector 500 includes, for example, a moveable unit (500M) and a support unit 500SS. The moveable unit 500M includes a mirror 510 having a reflection face. The support unit 500S includes a pair of zig-zag units 510a and 510b and an outer support frame 509 that supports the moveable unit 500M while allowing the oscillation of the moveable unit 500M about the X-axis. As to the moveable unit 500M, the mirror 510 is supported by two torsion bars 505a and 505b, a cantilever 570, and an inner support frame 507 to oscillate the moveable unit 500M about the Y-axis.

As to the optical deflector 500, each of the zig-zag units 510a and 510b includes six beams such as three beams 508a and three beams 508b, in which one beam 508a and one beam 508b are adjacent beams. Further, piezoelectric element 511 is disposed on each of the beams 508a, and the piezoelectric element 512 is disposed on each of the beam 508b. Further, a combination of the beam 508a and the piezoelectric element 511 disposed on the beam 508a can be referred to an actuator "Ach" while a combination of the beam 508b and the piezoelectric element 512 disposed on the beam 508b be referred to an actuator "Bch."

In the second example embodiment too, the two different voltages (i.e., first drive voltage and second voltage) are respectively applied to the piezoelectric element 511 and the piezoelectric element 512 concurrently (e.g., the same time) to accumulate warping of the adjacent two beam 508a and beam 508b, with which the moveable unit 500M including the reflection mirror 510 can be oscillated about the X-axis with a greater angle. Therefore, by setting different signal waveforms for a drive signal "A" and a drive signal "B" used as the voltage signals respectively applied to the piezoelectric element 511 and the piezoelectric element 512 concurrently, the optical scanning such as the optical scanning along the sub-scanning direction can be performed by oscillating the moveable unit 500M about the X-axis.

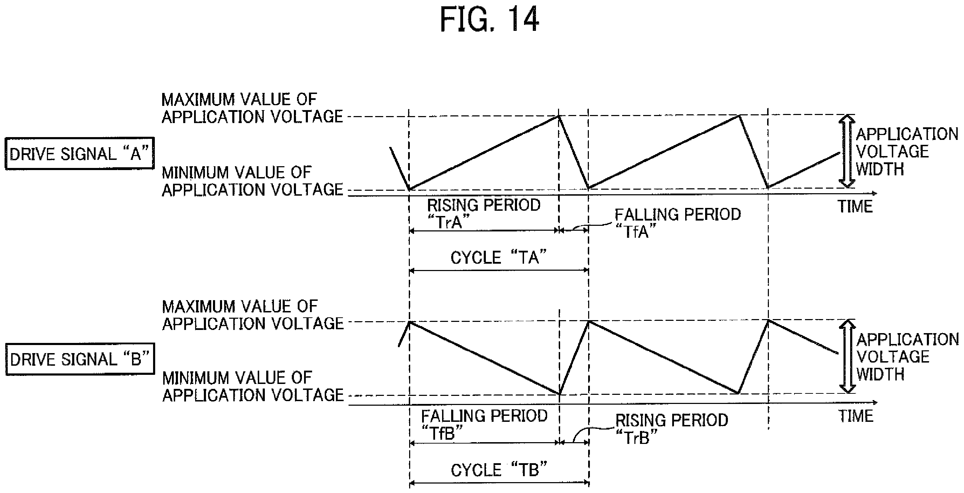

FIG. 14 illustrates an example of a drive signal "A" and a drive signal "B" such as a sawtooth wave respectively applied to the piezoelectric elements to operate the reflection mirror 510. The drive signal "A" is a sawtooth signal having a frequency "fA" and a cycle "TA" (=1/fA). The cycle "TA" is segemented into a rising period "TrA" and a falling period "TfA." The application voltage increases from the minimum value to the maximum value linearly during the rising period "TrA" while the application voltage decreases from the maximum value to the minimum value linearly during the falling period "TfA." Further, the drive signal "B" is a sawtooth signal having a frequency "fB" and cycle "TB" (=1/fB). The cycle "TB" is segemented into a falling period "TfB" and a rising period "TrB." The application voltage decreases from the maximum value to the minimum value linearly during the falling period "TfB" while the application voltage increases from the minimum value to the maximum value linearly during the rising period "TrB." When an image is written by the optical scanning operation of the optical deflector 500, a period combining the rising period "TrA" and the rising period "TrB" becomes an image writing time period. The drive signal "A" and the drive signal "B" may be respectively referred to a first drive signal and a second drive signal.

Typically, the repeating frequency of the drive signal "A" and the drive signal "B" is set the same value. Therefore, in this description, it is assumed that a drive frequency "fs" (i.e., repeating frequency of drive signal) is set "fs = fA= fB." Further, in this description, an "application voltage width" means a difference of the maximum voltage value and the minimum voltage value, which is two times of the amplitude. Further, in this description, the "resonance frequency" means the "lowest resonance frequency" if no special explanation is described.

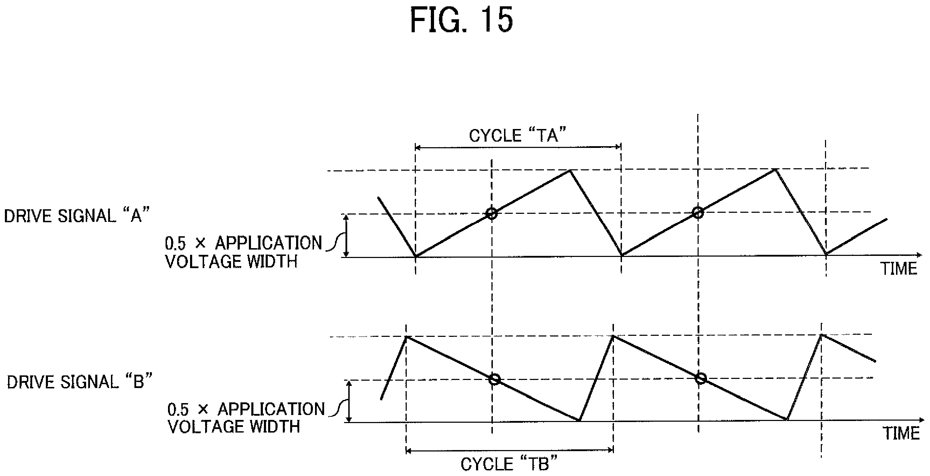

Further, as illustrated in FIG. 15, a time point when the drive signal "A" becomes a value defined by the "application voltage width x 0.5" during the rising period (TrA) can be defined as a "middle point of rising," and a time point when the drive signal "B" becomes a value defined by the "application voltage width x 0.5" during the falling period (TfB) can be defined as a "middle point of falling." When the middle point of rising of the drive signal "A" matches the middle point of falling of the drive signal "B." this state is defined as a reference state. It is assumed that the phase difference of the drive signal "A" and the drive signal "B" becomes zero (0°) at the reference state. If the phase difference other than zero is set for the drive signal "A" and the drive signal "B," a time difference occurs between the middle point of rising of the drive signal "A" and the middle point of falling of the drive signal "B."

Further, in this description, the following parameters are defined as the symmetry.

$$\text{Symmetry A} = \text{TrA/TA}$$

$$\text{Symmetry B} = \text{TfB/TB}$$

For example, when a ratio of the rising period and the falling period of the drive signal "A" is set "9 : 1," the symmetry A = 90% is set. If the symmetry A = the symmetry B is set, under a condition of the reference state that the middle point of rising of the drive signal "A" matches the middle point of falling of the drive signal "B, a rising start time of the drive signal "A" and a falling start time of the drive signal "B" can occur at the same timing as indicated in FIG. 14. By contrast, if the symmetry A and the symmetry B are set differently, the rising start time of the drive signal "A" and the falling start time of the drive signal "B" becomes different at the reference state as indicated in FIG. 15.

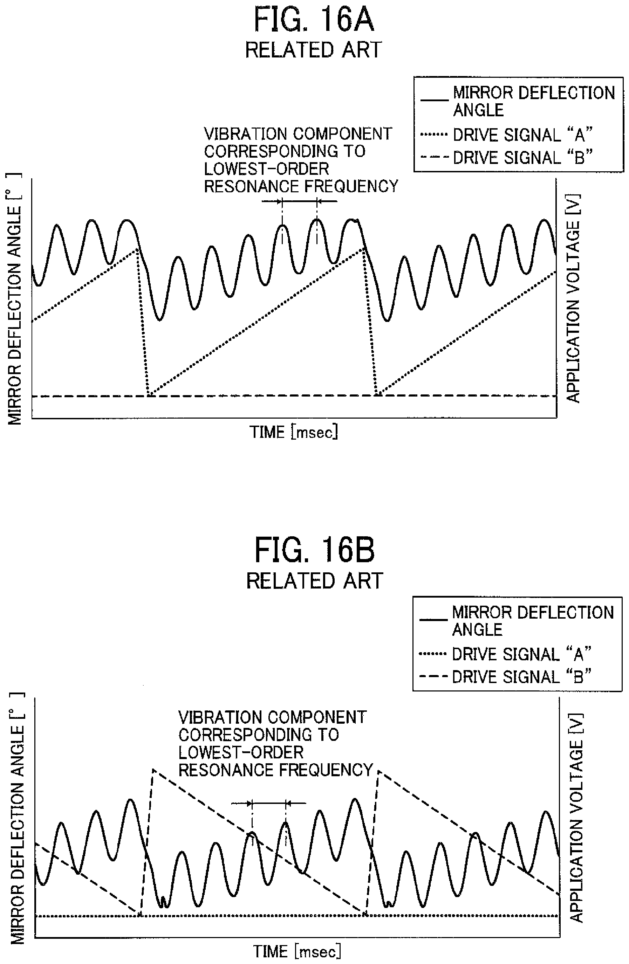

A description is given of an example of conventional driving method disclosed in JP-2012-185314-A. When the optical deflector is drive by a conventional driving method, the mirror deflection angle can be evaluated as illustrated in FIGs. 16A and 16B. FIG. 16A illustrates an evaluation result of the mirror deflection angle when the drive signal "A" alone is applied to the optical deflector at the reference state, and FIG. 16B illustrates an evaluation result of the mirror deflection angle when the drive signal "B" alone is applied to the optical deflector at the reference state. In this example, the drive signal "A" and the drive signal "B" are set with the same symmetry.

As indicated in FIGs. 16A and 16B, a higher frequency vibration component is cyclically superimposed on the mirror deflection angle while the mirror deflection angle is required to be changed linearly. The frequency of the higher frequency vibration component superimposed on the mirror deflection angle corresponds to the frequency of the lowest resonance mode among the resonance mode that vibrates about the X-axis for the optical deflector. Further, the higher frequency vibration component that occurs when the drive signal "A" alone is applied and the higher frequency vibration component that occurs when the drive signal "B" alone is applied occur at the substantially same phase.

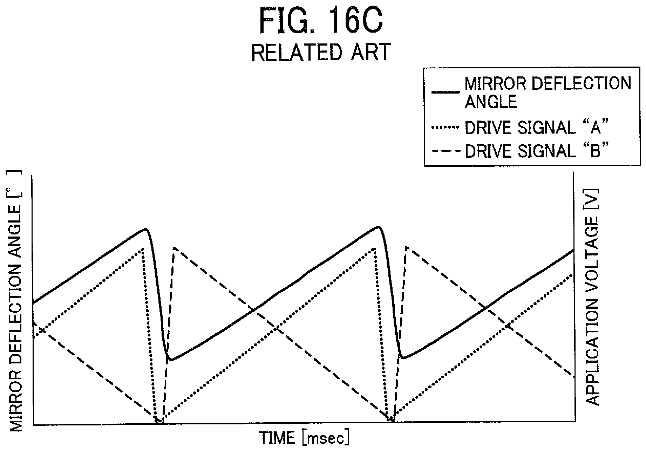

As to conventional driving method, the higher frequency vibration component that occurs at the same phase for the reference state can be suppressed by setting the phase difference between the drive signal "A" and the drive signal "B." For example, a driving condition that the higher frequency vibration components are overlapped with the opposite phases can be pre-set. FIG. 16C illustrates an evaluation result of the mirror deflection angle when the drive signal "A" and the drive signal "B" set with the phase difference of the opposite phases are applied at the same time. As indicated in FIG. 16C, the higher frequency vibration components can be removed by setting the phase difference, and thereby the mirror deflection angle changes almost linearly. However, to be described later, it is confirmed that if the set phase difference deviates a little from the optimal phase difference, the higher frequency vibration component is superimposed and thereby good enough linearity of the scanning line cannot be attained. As above described, the higher frequency vibration component is caused by the excitation of resonance mode of the optical deflector. Since the resonance frequency may change due to the continued driving of the optical deflector and temperature change, the optimal phase difference also changes. Therefore, it is difficult to continue the driving of optical deflector by maintaining the optimal phase difference.

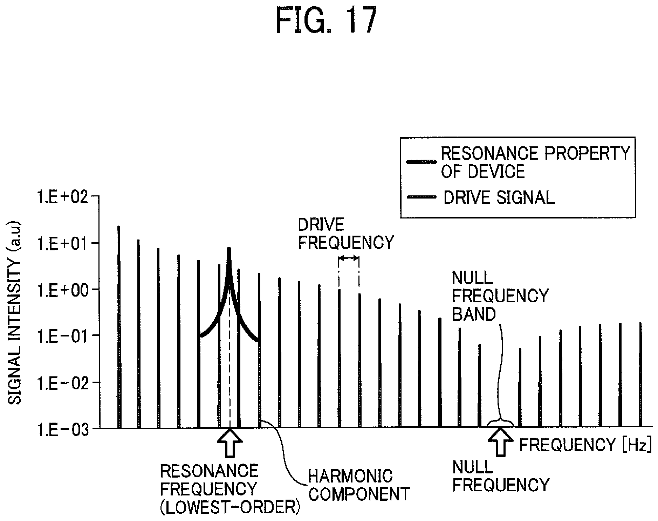

FIG. 17 illustrates a relationship of the sawtooth wave drive signal and the frequency property of the lowest resonance mode that vibrates about the X-axis for the optical deflector 100 when the driving method of the first example is performed. The frequency components of the sawtooth-wave drive signal can be obtained by performing the Fourier transformation to an ideal sawtooth wave, and decomposing an application signal into the frequency components. As illustrated in FIG. 17, the frequency components include a plurality of application voltage components that occurs from the direct current (0Hz) with a drive frequency interval.

Further, FIG. 17 illustrates spectral characteristics of the lowest resonance mode that vibrates about the X-axis for the optical deflector 100. FIG. 17 illustrates a case that the drive frequency (repeating frequency) of the drive signal is set by dividing the resonance frequency of the optical deflector with a half-integer. When this setting method is applied, the harmonic components (i.e., signal components) occurring cyclically and the resonance frequency of the optical deflector do not overlap with each other, and thereby the level of vibration component can be reduced theoretically as much as possible. However, similar to conventional driving methods indicated in FIGs. 16A and 16B, when the drive signal "A" alone is applied, or when the drive signal "B" alone is applied, the higher frequency vibration having a relatively greater level may occur. In this case, if the phase difference of the drive signal "A" and the drive signal "B" deviates from the optimal phase difference, the higher frequency vibration that occurs to the scanning line when the drive signal "A" and the drive signal "B" are applied at the same time cannot be suppressed sufficiently.

In this case, it should be noted for the frequency property of the sawtooth wave that the frequency property of drive signal has a null frequency that a signal intensity becomes zero theoretically. The null frequency "fn" can be defined by the equation (1) using the drive frequency "fs" and the symmetry "S."

$$\mathrm{fn} = \mathrm{N} \; \mathrm{x} \; (\mathrm{fs}/1\text{-}\mathrm{S}) \qquad (1)$$

"N" is an integer, and the null frequency occurs cyclically. As indicated by the equation (1), the null frequency "fn" can be adjusted with a desired value by using the drive frequency "fs" of sawtooh wave drive signal or the symmetry "S" as a parameter.

A description is given of the "null frequency." For example, when a given modulation signal (e.g., sawtooth signal) is used to drive a MEMS mirror, a "valley" where the power density becomes zero theoretically exists with a constant interval in the frequency spectrum of the modulation signal, which is obtained by performing the Fourier transformation to the modulation signal and decomposing into the frequency components, depending on the types of the modulation signal. This valley is referred to a null point. In this description, a frequency at the null point is referred to a "null frequency."

The inventors have confirmed that the sawtooth wave drive signal has the null frequency, and the null frequency is obtained by the above equation (1) based on inductive processing.

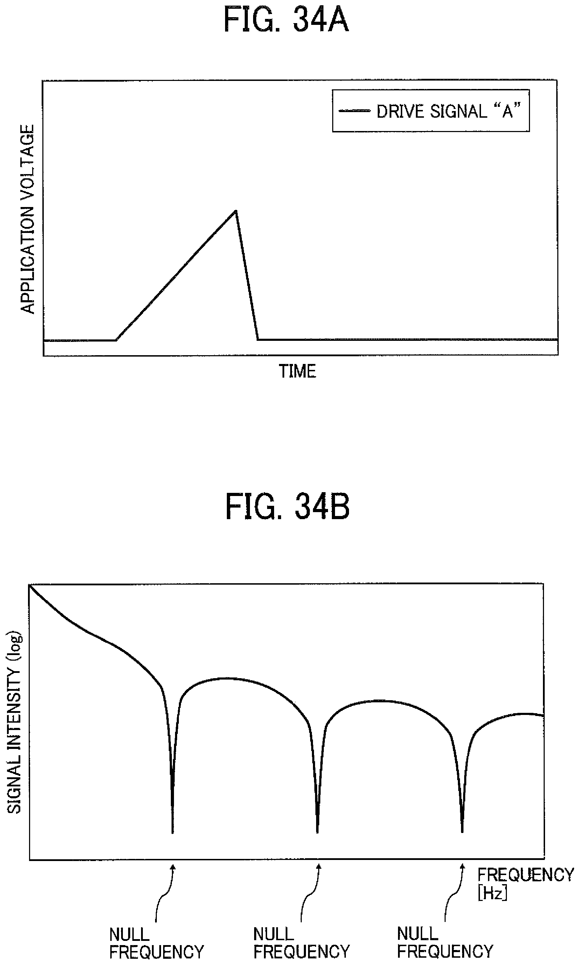

In a case of the drive signal spectral (see FIG. 17), discrete; frequency components appear separately with the drive frequency interval. For example, when one sawtooh wave pulse alone is processed by the Fourier transformation, spectral characteristics that the frequency attenuates continuously toward the null point can be attained. If the cyclical sawtooth signal is processed by the Fourier transformation, discrete signal components appear with the drive frequency interval by setting the continuous spectrum as an envelope line. Therefore, the signal components near the null frequency can be set with relatively lower signal intensity as indicated in FIG. 34. FIG. 34A illustrates the sawtooth wave drive signal "A" of one cycle, and FIG. 34B illustrates spectral characteristics of the sawtooth wave drive signal "A" after performing the Fourier transformation.

Hereinafter, a frequency band including the null frequency and frequencies neighboring the null frequency is referred to the "null frequency band." The signal intensity of higher frequency components of drive signal becomes a local minimum in the null frequency band, in which the signal intensity becomes the smallest value at the null frequency becomes (see FIG. 17). In FIG. 34B, the frequency band that the signal intensity becomes a local minimum cyclically is the null frequency band, a frequency that the signal intensity becomes the smallest in the null frequency band is the null frequency.

Further, it is confirmed that the null frequency band exists at a plurality of points with a given frequency interval (see FIG. 17).

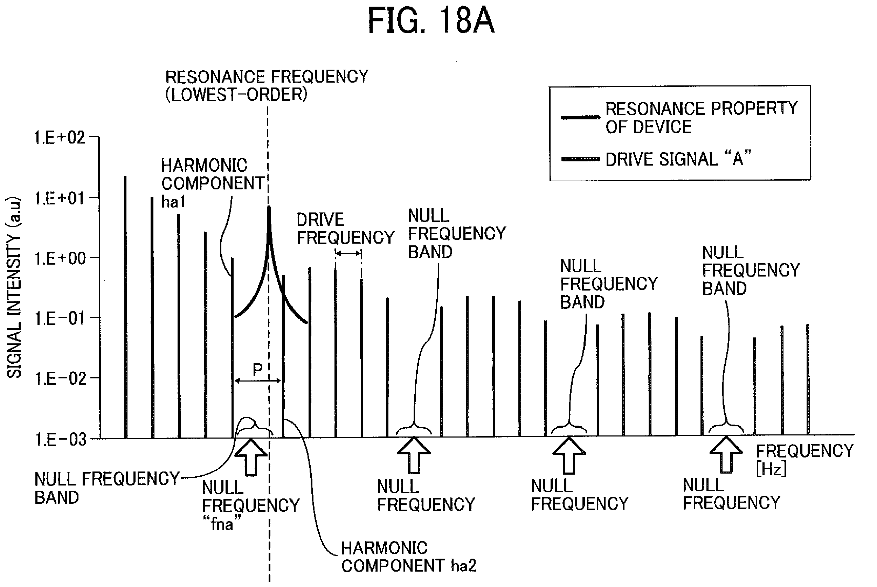

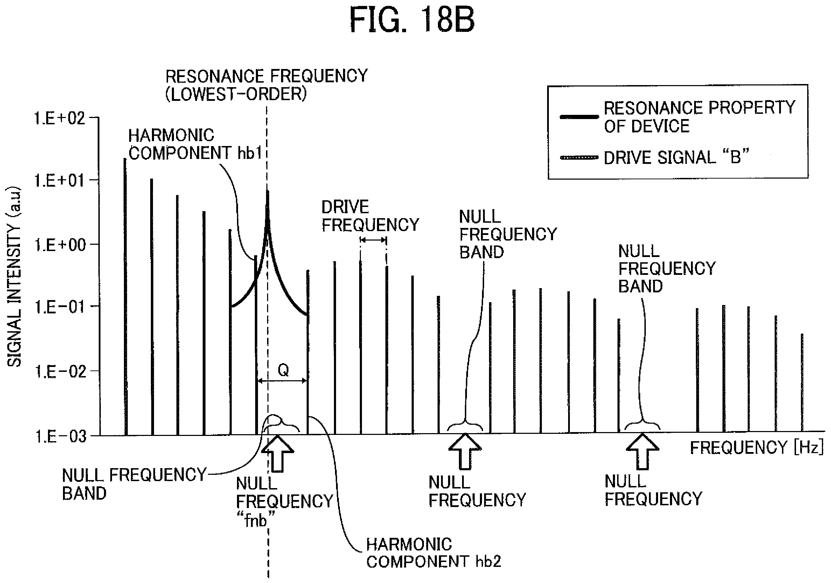

FIGs. 18A and 18B illustrate a relationship of frequency components of the drive signal and the lowest resonance frequency of the optical deflector 500 when the driving method of the optical deflector 500 of the second example embodiment is performed.

As to the driving method of the optical deflector 500 of the second example embodiment, the null frequency "fna" of the drive signal "A" and the null frequency "fnb" of the drive signal "B" are set with different values, and the mechanical resonance frequency such as the lowest resonance frequency of the optical deflector 500 is set between the null frequency "fna" and the null frequency "fnb."

As to the driving method of the optical deflector 500 of the second example embodiment, the null frequency "fna" of the drive signal "A" and the null frequency "fnb" of the drive signal "B" are set with the different values, and the mechanical resonance frequency such as the lowest resonance frequency of the optical deflector 500 is sandwiched by the null frequency "fna" and the null frequency "fnb."

As above described, the null frequency of the sawtooth wave drive signal can be controlled by adjusting the drive frequency and the symmetry. However, if the drive frequency of the drive signal "A" and the drive frequency of the drive signal "B" are set differently with each other, it becomes difficult to write the scanning lines cyclically with a stable manner.

Therefore, as to the second example embodiment, the symmetry A and the symmetry B are set differently with each other under a condition that the drive frequency of the drive signal "A" and the drive frequency of the drive signal "B" are set with the same value, with which the null frequency of the drive signal "A" and the null frequency of the drive signal "B" can be set differently.

As indicated in FIG. 18A, the drive signal "A" has adjacent two harmonic components "ha1" and "ha2" that sandwich the null frequency "fna," and a frequency range between the two harmonic components "ha1" and "ha2" is set as a null frequency band P (first frequency band), and the drive signal "B" has adjacent two harmonic components "hb1" and "hb2" that sandwich the null frequency "fnb," and a frequency range between the two harmonic components "hb1" and "hb2" is set as a null frequency band Q (second frequency band). The frequency band P and the frequency band Q can overlap at least partially.

Further, the lowest resonance frequency of the optical deflector 500 exist in the overlapping portion of the frequency band P of drive signal "A" and the frequency band Q of drive signal "B."

Further, it is preferable to set at least one of the null frequency "fna" of the drive signal "A" and the null frequency "fnb" of the drive signal "B" near the resonance frequency of the optical deflector 500, which means it is preferable to set the resonance frequency of the optical deflector 500 within at least one of the null frequency band P including the null frequency "fna" and the null frequency band Q including the null frequency "fnb." Since the signal intensity of the higher frequency components becomes too small in the null frequency band, even if the resonance mode (resonance frequency) of the optical deflector 500 exists in the null frequency band, the higher frequency vibration caused by exciting the resonance mode can be suppressed greatly.

By setting the drive signal as above described, the scanning line suppressing the higher frequency vibration can be obtained when the drive signal "A" and the drive signal "B" are applied at the same time at the reference state. Hereinafter, a description is given of the operational principle of the second example embodiment.

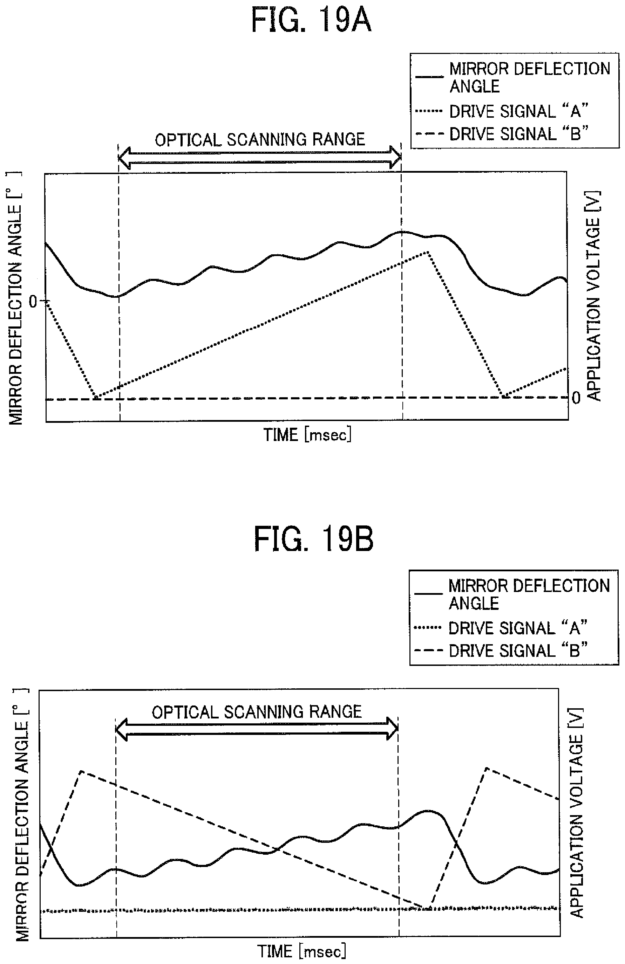

FIG. 19A illustrates a profile of the mirror deflection angle when the drive signal "A" alone is applied to the optical deflector 100 by using the driving method of the first example embodiment, and FIG. 19B illustrates a profile of the mirror deflection angle when the drive signal "B" alone is applied to the optical deflector 100 by using the driving method of the first example. As indicated in FIG. 19A, the mirror deflection angle of the optical deflector 100 driven by the drive signal "A" changes in a direction from 0° to positive angles as the application voltage increases. As indicated in FIG. 19B, the mirror deflection angle of the optical deflector 100 driven by the drive signal "B" changes in a direction from negative angles to 0° as the application voltage decreases.

As indicated in FIGs. 19A and 19B, when the drive signal "A" alone or the drive signal "B" is applied to the optical deflector 100 by using the driving method of the first example, the amplitude level of the higher frequency vibration components can be suppressed compared to conventional driving method, but the amplitude level of the higher frequency vibration components cannot be suppressed sufficiently, which is indicated in FIGs. 19A and 19B as the superimposition of the higher frequency vibration to the scanning line scanned by the optical deflector 100.

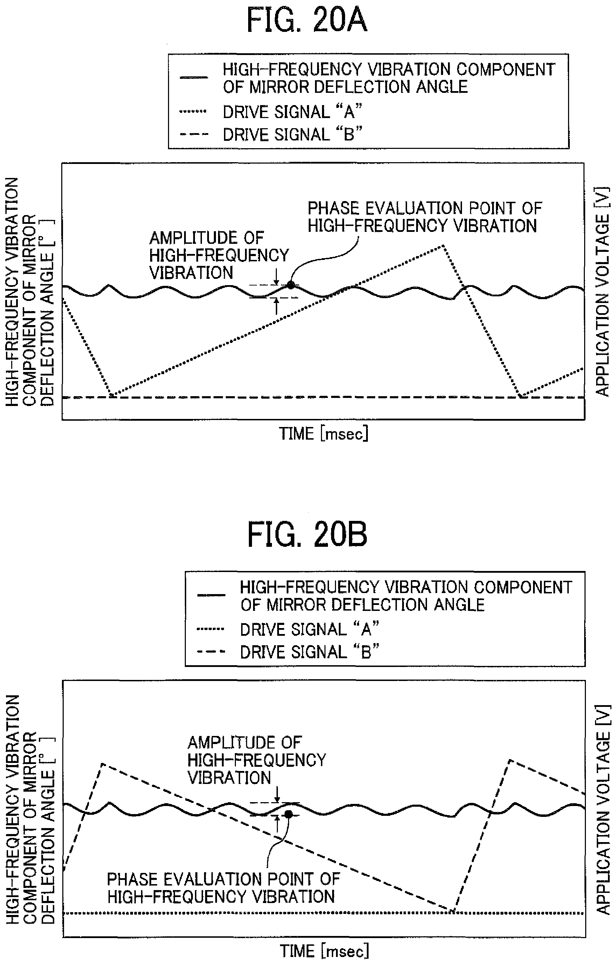

FIG. 20A illustrates the higher frequency vibration components of deflection property of mirror driven by the drive signal "A" by using the first example, corresponding to FIG. 19A, and FIG. 20B illustrates the higher frequency vibration components of deflection property of mirror driven by the drive signal "B" by using the first example corresponding to FIG. 19B. FIGs 20A and 20B illustrate the extracted higher frequency vibration components by calculating a difference of an actual scanning line in the optical scanning range and an ideal scanning line that linearly approximates the actual scanning line for the cases of FIGs. 19A and 19B. The "optical scanning range" can be set with a given time period in the rising period of the drive signal "A" or the falling period of the drive signal "B."

Hereinafter, the phase and amplitude of vibration used as parameters indicating properties of the higher frequency vibration are reviewed. When the phase level of the higher frequency vibration is evaluated, a phase at a local maximum point is considered for the vibration associated to the drive signal "A," and a phase at a local minimum point is considered for the vibration associated to the drive signal "B."

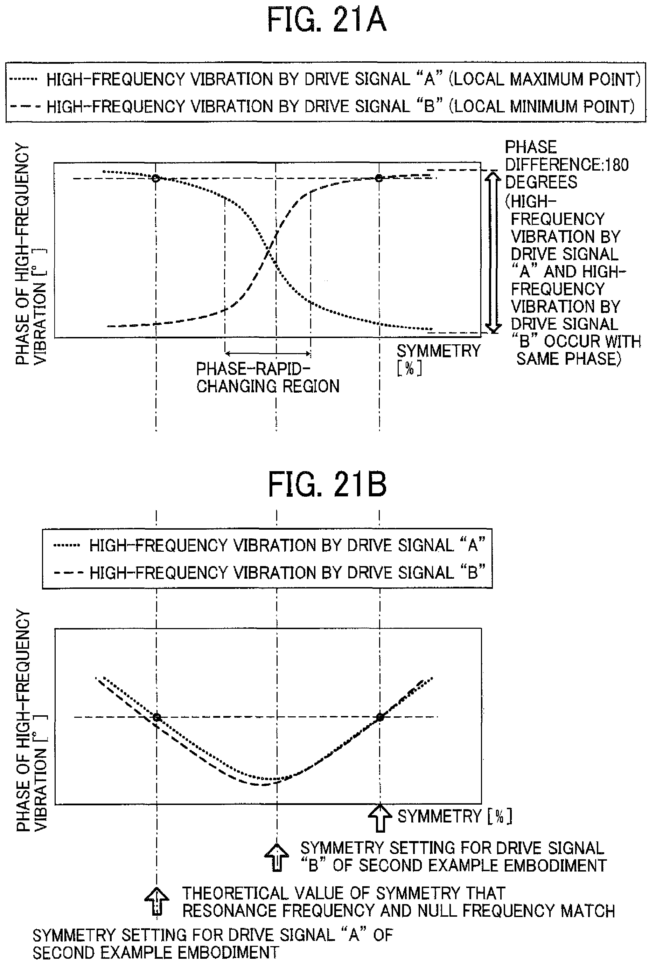

FIG. 21A illustrates a relationship of phase of higher frequency vibration and the symmetry of the drive signal, and FIG. 21B illustrates a relationship of amplitude of higher frequency vibration and the symmetry of the drive signal. FIGs. 21A and 21B illustrate features of phase change and vibration amplitude change for the higher frequency vibration qualitatively that occurs when the symmetry of the drive signal "A" and the drive signal "B" is changed, which is found by the inventors.

The phase of the higher frequency vibration is set for the vertical axis of FIG. 21A. When a value of the drive signal "A" for the vertical axis and a value of the drive signal "B" for the vertical axis becomes the same value, the phase of the higher frequency vibration occurring by the drive signal "A" and the phase of the higher frequency vibration occurring by the drive signal "B" are shifted for 180°, which mean the higher frequency vibrations occur with the opposite phases.

As indicated in FIG. 21A, a region where the phase changes rapidly when the symmetry changes (hereinafter, "phase-rapid-changing region") exists for the higher frequency vibration of both of the drive signal "A" and the drive signal "B." As indicated in FIG. 21A, the phase-rapid-changing region can be defined by one symmetry that the higher frequency vibration of the drive signal "A" and the higher frequency vibration of the drive signal "B" cross with each other (hereinafter, cross point) and a given symmetry in the symmetry increasing direction from the cross point and a given symmetry in the symmetry decreasing direction from the cross point. The phase difference of the higher frequency vibrations defined at a point near each end of the phase-rapid-changing region (i.e., end of the given symmetry) is almost 180°. Further, when the resonance frequency of the optical deflector and the null frequency of the drive signal are matched with each other, the phase-rapid-changing region appears near a symmetry, which can be obtained by substituting the resonance frequency of the optical deflector for term of the null frequency "fn" in the above equation (1).

Therefore, as to the second example embodiment, a symmetry outside the phase-rapid-changing region such as the symmetry at the symmetry-increasing side and the symmetry decreasing-side with respect to the phase-rapid-changing region is used as the symmetry for the second example embodiment. In this configuration, the deviation of the phase difference of the higher frequency vibration with respect to the deviation of each symmetry becomes smaller. Therefore, when the symmetry of the drive signal "A" and the drive signal "B" is set to a value that the phases of the higher frequency vibration components can become the opposite phases, the change of phase difference over time with respect to the change of symmetry over time (i.e., change of null frequency over time) becomes smaller, and a higher robustness can be set.

When the same symmetry is set for the drive signal "A" and the drive signal "B" and conventional driving method is performed, the higher frequency vibrations occurring by the application of the drive signal "A" and the drive signal "B" occur at the same phase excluding a special case. The "special case" is a case that the symmetry of signals is set with a value that the resonance frequency of the optical deflector and the null frequency of the drive signal can be matched substantially.

By contrast, as to the driving method of the second example embodiment, the symmetry of the drive signal "A" and the symmetry of the drive signal "B" are set differently so that the resonance frequency of the optical deflector 500 exists between the null frequency of the drive signal "A" and the null frequency of the drive signal "B." As above described, by setting the symmetry of the drive signal "A" and the symmetry of the drive signal "B" suitably, the higher frequency vibration caused by the application of the drive signal "A" and the higher frequency vibration caused by the application of the drive signal "B" can appear with the opposite phases.

FIG. 21B illustrates a change of amplitude of the higher frequency vibration (hereinafter, higher frequency vibration amplitude) when the symmetry of the drive signal is changed. As indicated in FIG. 21B, the higher frequency vibration amplitude becomes a local minimum at a specific symmetry, and the higher frequency vibration amplitude becomes greater as farther from the local minimum. Theoretically, the specific symmetry that the higher frequency vibration becomes the local minimum is a symmetry that the resonance frequency of the optical deflector and the null frequency of the drive signal match with each other. However, the specific symmetry for an actual optical deflector may deviate from theoretical symmetry value a little.

Further, the inventors have confirmed that the deviation from theoretical symmetry value when the drive signal "A" alone is applied and the deviation from theoretical symmetry value when the drive signal "B" alone is applied becomes different, the local minimum of the higher frequency vibration amplitude becomes different when the drive signal "A" alone and when the drive signal "B" alone is applied.

As to the driving method of the second example embodiment, since the symmetry of the drive signal "A" and the symmetry of the drive signal "B" are set differently with each other to set the resonance frequency of the optical deflector 500 between the null frequency "fna" of the drive signal "A" and the null frequency "fnb" of the drive signal "B," the higher frequency vibration amplitude does not become a local minimum with respect to the drive signal "A" and the drive signal "B," but the symmetry that the higher frequency vibration amplitude of the drive signal "A" and the higher frequency vibration amplitude of the drive signal "B" can be substantially matched with other can be set (see FIG. 21B).

As to the above described driving method of the second example embodiment, the symmetry can be set to the drive signal "A" and the drive signal "B" with a value that the higher frequency vibration amplitude that occurs when the drive signal "A" alone is applied and when the drive signal "B" alone is applied can be substantially matched with each other, and the higher frequency vibration of the drive signal "A" and the higher frequency vibration of the drive signal "B" can appear with the opposite phases.

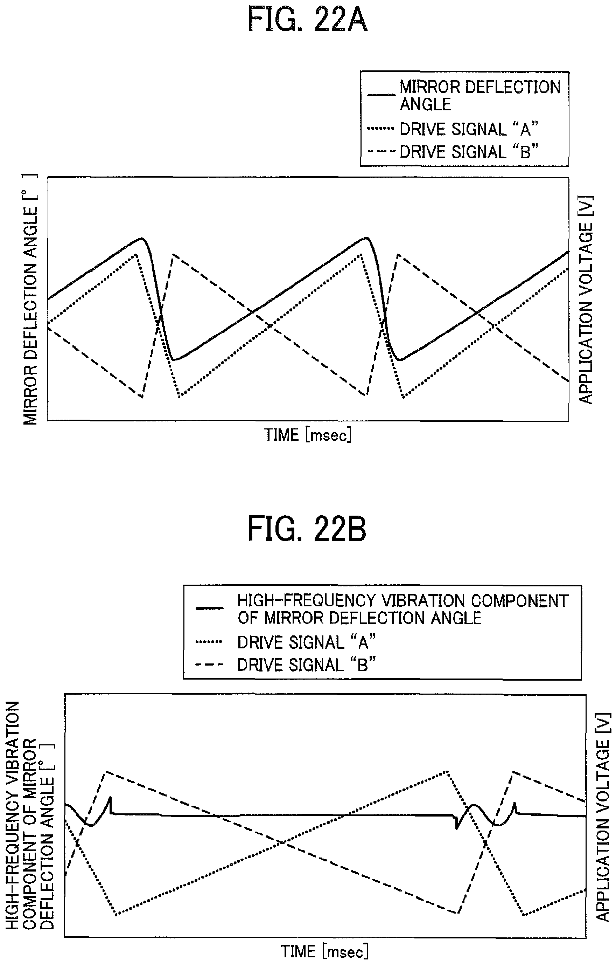

FIGs. 22A and 22B illustrates the timewise change of the mirror deflection angle and the higher frequency vibration components when the optical deflector 500 is driven by the driving method of the second example embodiment by applying the drive signal "A" and the drive signal "B" with the reference state at the same time. As indicated in FIGs. 22A and 22B, by adjusting the symmetry of the drive signal "A" and the symmetry of the drive signal "B" respectively as above described, the scanning line of the optical deflector 500 changes linearly with respect to the sawtooth wave drive signal, and the higher frequency vibration can be suppressed sufficiently.

As to the results of FIGs. 22A and 22B, the symmetry of the drive signal "B" is set greater than the symmetry of the drive signal "A," but not limited hereto. The operational principle of the driving method of the second example embodiment does not set any limit to the magnitude relation to the symmetry of the drive signal "A" and the symmetry of the drive signal "B."

A parameter of "linearity index of scanning line" can be defined by the following equation (2) for evaluating the linearity of the scanning line. The inventors have confirmed that the linearity of scanning line becomes better when the symmetry of the drive signal "B" having the falling period greater than the rising period in one cycle is set greater than the symmetry of the drive signal "A" having the rising period greater than the falling period in one cycle based on the experimental driving results of the optical deflector 500 driven by using various driving conditions.

$$\text{Linearity index of scanning line} =$$

$$\frac{\text{(Deviation of scanning line scanned by mirror deflection from straight line)}}{\text{(Width of straight line obtained by approximating scanning line as straight line)}} \quad (2)$$

It can be noted that when the higher frequency components caused by the mirror deflection can be removed from the scanning line, the value of the linearity index of scanning line can be smaller, which means the scanning line closer to the straight line can be written.

Further, as indicated in the above equation (1), as to the driving method of the second example embodiment, the repeating frequency (drive frequency "fs") of any drive signal can be selected, and the symmetry value can be preferably calculated from the drive frequency "fs" and the known resonance frequency "f1." More specifically, a driving condition setting a relation of "f1/fs = half-integer" is preferably used due to the following reason.

Ideally, the sawtooth wave does not have a signal intensity at the null frequency, and the sawtooth wave has the signal intensity only for vibration components corresponding to the integral multiplication of the drive signal (i.e., vibration components not corresponding to the integral multiplication of the drive signal do not have the signal intensity). However, when a driving condition is set to differentiate the null frequency of the drive signal and the resonance frequency of the optical deflector 500 a little as indicated in the second example embodiment, the higher frequency vibration components may be excited greatly if the signal intensity of the drive signal near the resonance frequency of the optical deflector 500 is great.

Therefore, by setting the relation of "f1/fs = half-integer," the resonance frequency of the optical deflector can be included in the frequency band corresponding a gap of the signal components (harmonic components) occurring cyclically with an interval of the drive frequency "fs," with which the higher frequency vibration components can be suppressed effectively.

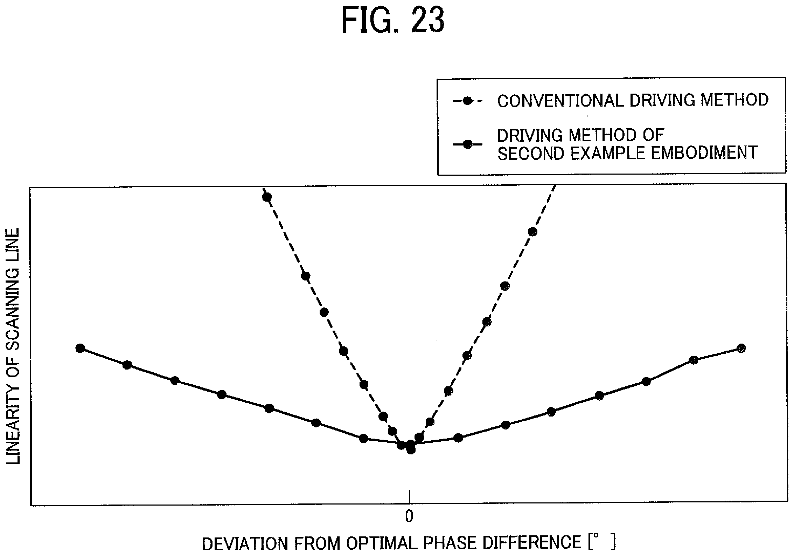

FIG. 23 illustrates a relationship of linearity index of scanning line and a deviation of phase difference between the first drive signal and the second drive signal from an optimal phase difference when conventional driving method and the driving method of the second example embodiment are performed. FIG. 23 illustrates a result of changing of the linearity index of scanning line with respect the deviation of the phase difference (phase difference deviation) between the drive signal "A" and the drive signal "B" from the optimal phase difference. FIG. 23 can be used to compare the robustness against the phase difference deviation for the driving method of the second example embodiment and conventional driving method.

As to the second example embodiment, since the drive signal "A" and the drive signal "B" are applied at the reference state, the optimal phase difference becomes zero.

As indicated in FIG. 23, the robustness against the phase difference deviation can be enhanced by the driving method of the second example embodiment greatly. This effect can be attained as follows. Since the null frequency of the drive signal and the resonance frequency of the optical deflector 500 are set close to each other, when the optical deflector 500 is driven by the drive signal "A" alone or the drive signal "B" alone by the driving method of the second example embodiment, the higher frequency vibration components can be suppressed compared to conventional driving method.

The phase difference between the drive signal "A" and the drive signal "B" may fluctuate due to various factors. The various factors include, for example, a fluctuation of the resonance frequency due to environmental temperature change during the driving, a property change of the optical deflector due to long-time continued driving, and a micro adjustment of application voltage during the driving. As to the driving method of the second example embodiment, even if the optical deflector 500 is driven while the phase difference between the drive signal "A" and the drive signal "B" deviates from the optimal phase difference, the deviation effect to the linearity of the scanning line can be set reduced, and thereby the deterioration of linearity of the scanning line can be suppressed sufficiently.

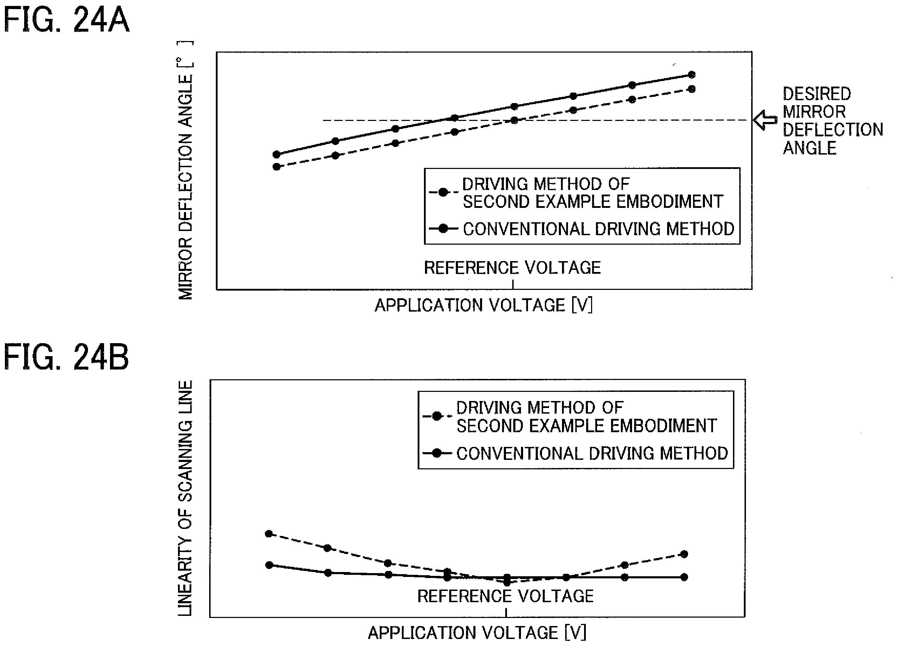

FIG. 24A illustrates a change of the mirror deflection angle with respect to a change of application voltage for the driving method of the second example embodiment and conventional driving method. As indicated in FIG. 24A, compared to conventional driving method, a desired mirror deflection angle can be obtained by a lower voltage for the driving method of the second example embodiment. As to the driving method of the second example embodiment, since the drive signal "A" and the drive signal "B" are applied at the same time at the reference state, the effective voltage may not be decreased even if the phase difference is set, with which the driving sensitivity of the optical deflector 500, which is the mirror deflection angle per the unit application voltage, can be increased.

FIG. 24B illustrates a result of changing of the linearity index of scanning line with respect a change of the application voltage for the driving method of the second example embodiment and conventional driving method. As to conventional driving method, since the optimal phase difference changes when the application voltage changes, the higher frequency vibration is superimposed to the mirror deflection angle. Therefore, for example, each time the application voltage changes due to the application voltage adjustment, the phase difference adjustment is required.

By contrast, as to the driving method of the second example embodiment, the deterioration of linearity with respect to the application voltage change may not occur substantially. Therefore, for example, even if the driving sensitivity of the optical deflector 500 becomes lower due to the long-time driving, and the application voltage is required to be increased to obtain the desired mirror deflection angle, other driving condition such as the adjustment of the symmetry and the phase difference of the drive signal "A" and the drive signal "B" is not required. Therefore, as to the second example embodiment, the desired mirror deflection angle can be obtained by adjusting the application voltage alone while suppressing the deterioration of linearity of the scanning line.

As a result, compared to conventional driving method, the robustness to the phase difference deviation from the optimal phase difference and the fluctuation of the application voltage can be enhanced greatly for the driving method of the second example embodiment.

Further, as to the second example embodiment, the symmetry of the drive signal "A" and the symmetry of the drive signal "B" are set differently with each other to match the higher frequency vibration amplitude when the drive signal "A" alone is applied and the higher frequency vibration amplitude when the drive signal "B" alone is applied, and further, the higher frequency vibrations for drive signal "A" and the drive signal "B" can appear at the reference state with the opposite phases. However, the phase difference of the higher frequency vibrations for drive signal "A" and the drive signal "B" is not required to be set with the exact opposite phases (i.e., 180°). For example, a condition that the higher frequency vibrations overlap with the substantially opposite phases can be set as an intial value, and then a tiny level of phase devitation from the exact opposite phases can be corrected by setting the phase difference between the drive signal "A" and the drive signal "B." In this case, a tiny difference of the optimal symmetry condition, which may occur due to different design parameters and manufacturing error can of the optical deflector be compensated by correcting the phase difference.

Further, as to the applicaiton voltage width of the drive signal "A" and the drive signal "B," the applicaiton voltage width of the drive signal "A" and the applicaiton voltage width of the drive signal "B" can be set differently as required to further reduce the higher frequency vibration components effectively.

As illustrated in FIG. 21B, by changing the symmetry of the drive signal, the amplitude of vibration of the higher frequency vibration occurred by the drive signal application can be adjusted. Further, by performing the micro-adjustment of the applicaiton voltage width of the drive signal "A" and the drive signal "B," the higher frequency vibration amplitude when the drive signal "A" alone is applied and the higher frequency vibration amplitude when the drive signal "B" alone is applied can be matched almost exactlyy. With this configuration, the occuring of the higher frequency vibration can be suppressed significantly when the drive signal "A" and the drive signal "B" are applied at the same time.

Especially, the inventors have confirmed by the expreiments that when the symmetry of the drive signal is set closer to the theoretical symmetry value that the resonance frequency of the optical deflector and the null frequency of the drive signal match with each other, the higher frequency vibration amplitude caused by the drive signal "B" becomes smaller than the higher frequency vibration amplitude caused by the drive signal "A." In this case, by setting the applicaiton voltage of the drive signal "B" with a relatively higher level, the higher frequency vibration amplitude caused by the drive signal "A" and the higher frequency vibration amplitude caused by the drive signal "B" can be matched with each other.

Further, as to the driving method of the second example embodiment, by setting the resonance frequency of the optical deflector 500 between the null frequency of the drive signal "A" and the null frequency of the drive signal "B," the higher frequency vibration amplitude caused by the device-specific vibration mode when the drive signal "A" alone is applied and the higher frequency vibration amplitude caused by the device-specific vibration mode when the drive signal "B" alone is applied can be matched with each other, and the higher frequency vibrations can appear with the opposite phases with each other. Therefore, the occuring of the higher frequency vibration when the drive signal "A" and the drive signal "B" are applied at the same time can be suppressed.

Further, as indicated in FIG. 21B, the closer the null frequency of the drive signal and the resonance frequency of the device with each other, the smaller the higher frequency vibration amplitude when the drive signal "A" alone is applied and the smaller the higher frequency vibration amplitude when the drive signal "B" alone is applied. Therefore, even if a tiny phase devitation occurs to the higher frequency vibration, the higher frequency vibration amplitude that occurs when the drive signal "A" and the drive signal "B" are applied at the same time can become smaller. Therefore, it is preferable to include the resonance frequency of the device within at least one of the null frequency band of the drive signal "A" and the null frequency band of the drive signal "B."

As above described, the higher frequency vibration occurs due to the excitation of the resonance mode of the device by the higher frequency components included in the drive signal. Therefore, by removing the signal component near the resonance frequency from the drive signal, the occurring of higher frequency vibration amplitude when the drive signal "A" alone is applied and the occurring of the higher frequency vibration amplitude when the drive signal "B" alone is applied can be reduced.

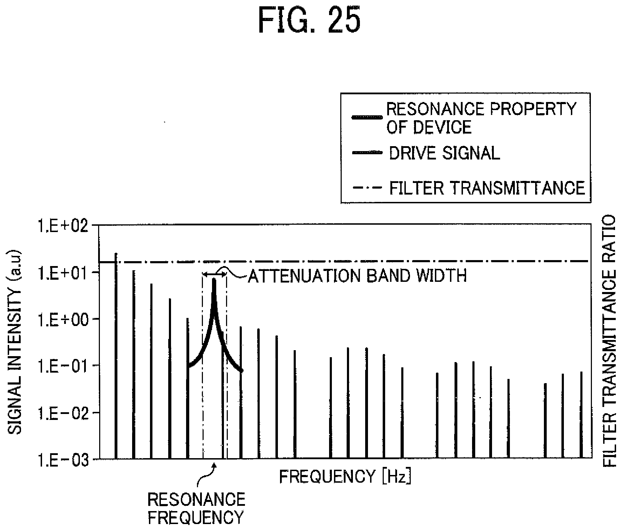

Specifically, the higher frequency vibration components can be further suppressed by disposing a notch-filter as illustrated in FIG. 25. The notch-filter can attenuate the signal transmittance ratio for only one or more frequency bands near the resonance frequency of the device. The higher frequency vibration components can be effectively suppressed by applying signals via the notch-filter. As illustrated in FIG. 25, a filter attenuation band width that can attenuate the driving sensitivity of the device sufficiently can be set as a frequency band used for attenuation by the filter. Further, by setting the filter attenuation band width smaller than the drive frequency of the device, only the signal component that excites the device-specific vibration mode can be suppressed effectively without causing the waveform distortion of the drive signal so much.

As to the driving method of the second example embodiment, the driving method is used to suppress the excitation of lowest resonance vibration mode that affect the scanning line distortion greatly, in which the lowest resonance vibration mode is one mode of the device-specific vibration modes. Further, the device has various vibration modes that may affect the mirror deflection property. For example, the device has the higher order vibration mode using the X-axis as the rotation axis illustrated in FIG. 13 that causes a vibration having a cycle shorter than a cycle of the higher frequency vibration components, which is an issue of the second example embodiment. Further, the device has a vibration mode using the Y-axis as the rotation axis for another frequency band, and if this the vibration mode is excited, a wave-like line that vibrates in the horizontal direction may be superimposed to a straight line to be written in the vertical direction as a scanning line.

When the sawtooh wave drive signal is applied, the signal components (harmonic components) occur over the higher frequency bands with the drive frequency interval as illustrated in FIGs. 18A and 18C. Therefore, the above described higher order vibration modes may be excited, and thereby an image written by the device may be distorted.

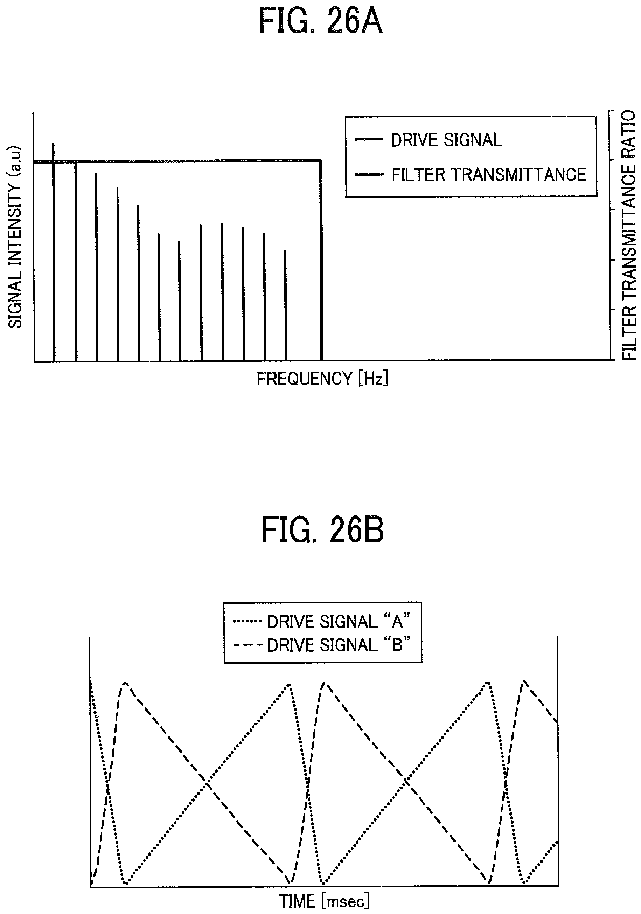

Therefore, as illustrated in FIG. 26A, a low-pass filter can be applied to the drive signal to cut the higher frequency components, with which the excitation of the higher order vibration modes can be prevented effectively. The band restriction by the low-pass filter can be set as illustrated in FIG. 26A, in which the transmittable band by the low-pass filter is set to the lower frequency side of the null frequency, and other band components can be cut by the low-pass filter. FIG. 26B illustrates examples of drive signal waveform having cut the other band components by the low-pass filter. Since most of the vibration components that configure the sawtooh wave drive signal exist at the lower frequency side of the null frequency, even if the higher frequency components are cut by the low-pass filter, the waveform of application signal may not be affected. In practice, the resonance frequency of the lowest resonance vibration mode and the resonance frequency of the vibration mode that occurs next to the lowest resonance vibration mode are determined in advance, and the cut frequency by the low-pass filter can be set between the resonance frequencies of these two vibration modes.

As above described, the excitation of the vibration mode specifically belonging to the device can be prevented by removing the higher frequency signal components from the sawtooth wave drive signal, with which the occurrence of image distortion on an image written by the optical scanning can be suppressed.

As above described, as to the second example embodiment, the resonance frequency of the device is set between the null frequency of the drive signal "A" and the drive signal "B" to enhance the evenness of oscillation speed of the mirror of the optical deflector 500, with which the deterioration of linearity of the scanning line can be suppressed.

As to the above described second example embodiment, the optical deflection apparatus (1000) incudes, for example, the moveable unit 500M including the mirror having the reflection face, the support unit 500S including the zig-zag units to support the moveable unit 500M oscillate-ably about the X-axis, each of the zig-zag units including a plurality of beams continuously formed with the zig-zag pattern, and the plurality of piezoelectric elements is respectively disposed on the plurality of beams. Two drive signals such as a first drive signal having a first waveform (e.g., drive signal "A") and a second drive signal having a second waveform (e.g., drive signal "B") are respectively input to two piezoelectric elements disposed on adjacent two beams concurrently to oscillate the moveable unit 500M. The system (device) configured with the moveable unit 500M and the support unit 500S has a plurality of mechanical resonance frequencies.

The time ratio (i.e., symmetry) of the rising period and the falling period in one cycle of each of the two drive signals is set to a value that a given resonance frequency, selectable from the plurality of the mechanical resonance frequencies, can be set between the first frequency (e.g., null frequency "fna") that the signal intensity of the higher frequency components of the first drive signal (e.g., drive signal "A") becomes a local minimum and the second frequency (e.g., null frequency "fnb") that the signal intensity of the higher frequency components of the second drive signal (e.g., drive signal "B") becomes a local minimum. Further, the "higher frequency components" means components having frequency higher than the repeating frequency of the drive signal (e.g., 50 to 70Hz).

With employing this configuration, even if the phase difference, including zero difference, between the two drive signals deviates from the setting such as designed value, the excitation of the resonance mode of the optical deflector 500 caused by the higher frequency components of the two drive signals can be suppressed.

Therefore, the evenness of oscillation speed of the moveable unit 500M about the one axis can be enhanced securely.

Further, the first frequency (e.g., null frequency "fna") exists in a first frequency band of the first drive signal (e.g., drive signal "A"), in which the first frequency band is a frequency range defined by frequencies of the adjacent two harmonic components of the first drive signal, and the second frequency (e.g., null frequency "fnb") exists in a second frequency band of the second drive signal (e.g., drive signal "B"), in which the second frequency band is a frequency range defined by frequencies of the adjacent two harmonic components of the second drive signal. The first frequency band and the second frequency band can be overlapped at least partially.

With employing this configuration, the resonance frequency can be set between the two null frequencies of the two drive signals, which are the closest two frequencies with each other, and thereby the evenness of oscillation speed of the moveable unit 500M about the one axis can be enhanced securely.

Further, the resonance frequency can be included in the overlapping portion of the first frequency band and second frequency band, the resonance frequency and the two null frequencies sandwiching the resonance frequency can be set closer, with which the evenness of oscillation speed of the moveable unit 500M about the one axis can be further enhanced securely.

Further, the first drive signal (e.g., drive signal "A") has a plurality of frequency bands (null frequency bands) with a substantially-constant frequency interval, and the plurality of frequency bands (null frequency bands) includes the first frequency band (null frequency band) having the first frequency (null frequency "fna") that the signal intensity of the higher frequency components becomes a local minimum.

Further, the second drive signal (e.g., drive signal "B") has a plurality of frequency bands (null frequency bands) with a substantially-constant frequency interval, and the plurality of frequency bands (null frequency bands) includes the second frequency band (null frequency band) having the second frequency (the null frequency "fnb") that the signal intensity of the higher frequency components becomes a local minimum. The resonance frequency can be included within at least one of the first frequency band and the second frequency band.

In this configuration, the resonance frequency is set within at least one of the frequency bands of the two drive signals that the signal intensity of the higher frequency components becomes a local minimum. Therefore, the excitation of the device-specific resonance mode caused by the higher frequency components can be suppressed. Further, when the resonance frequency is set within both of the first frequency band and the second frequency band, the excitation of the device-specific resonance mode caused by the higher frequency components can be suppressed further effectively. In this case, the first frequency band and the second frequency band are required to be overlapped.

Further, the first frequency is a frequency that the signal intensity of the first drive signal (e.g., drive signal "A") becomes the smallest in the first frequency band, and the second frequency is a frequency that the signal intensity of the second drive signal (e.g., drive signal "B") becomes the smallest in the second frequency and

With employing this configuration, even if the null frequency deviates from the setting (e.g., designed value) into the higher frequency side or the lower frequency side of the setting (e.g., designed value), the null frequency can be set within the frequency band (null frequency band) where the higher frequency components becomes a local minimum. The null frequency is a frequency that exists at the substantially center of the null frequency band.

Further, the given waveform can employ the sawtooth wave. By changing the ratio of the rising period (symmetry A) in one cycle of the first drive signal (e.g., drive signal "A") and by changing the ratio of the falling period (symmetry B) in one cycle of the second drive signal (e.g., drive signal "B"), the null frequencies of the first drive signal (e.g., drive signal "A") and the null frequencies of the second drive signal (e.g., drive signal "B") can be changed.

Further, as to the first drive signal (e.g., drive signal "A"), the ratio of the rising period (symmetry A) is set greater than the ratio of the falling period in one cycle, and as to the second drive signal (e.g., drive signal "B"), the ratio of the falling period (symmetry B) is set greater than the ratio of the rising period in one cycle. Further, the ratio of the falling period (symmetry B) in one cycle of the second drive signal (e.g., drive signal "B") can be set greater than the ratio of the rising period (symmetry A) in one cycle of the first drive signal (e.g., drive signal "A").

With employing this configuration, the linearity of scanning line can be further enhanced.

Further, when the ratio "R" of the rising period in one cycle of the first drive signal (e.g., drive signal "A") is set 0.8 or more, and when the ratio of the falling period in one cycle of the second drive signal (e.g., drive signal "B") is set 0.8 or more, the use efficiency of image display area or image forming area can be enhanced.

Further, the drive signal includes a plurality of harmonic components as the higher frequency components, which exists in given frequency bands cyclically with the drive frequency interval. Therefore, the null frequency band is preferably set between the two frequencies of the adjacent two harmonic components.

Further, for example, the repeating frequency (drive frequency "fs") of each of the two drive signals is preferably set by dividing the resonance frequency of the optical deflector with a half-integer. With employing this configuration, the null frequency band can be set at a center region of the frequencies of the adjacent two harmonic components.

As a result, the fluctuation of oscillation speed of the moveable unit 500M about the one axis can be suppressed further securely.

Further, for example, when the phase difference between the two drive signals is set within a range of ±10°from the reference phase difference, the fluctuation of oscillation speed of the moveable unit 500M about the one axis can be suppressed, which means even if the phase difference between the two drive signals deviates from the ideal setting value such as the optimal phase difference, including zero difference, within the range of ±10°, the fluctuation of oscillation speed of the moveable unit 500M about the one axis can be suppressed, which means the robustness becomes higher.

Further, by setting different amplitudes to the two drive signals (application voltage width x 0.5), the fluctuation of oscillation speed of the moveable unit 500M can be further suppressed. Specifically, when the amplitudes of the two drive signals are set with the same amplitude, the amplitude of the higher frequency vibration components of the mirror deflection angle caused by one of the two drive signals may become different from the amplitude of the higher frequency vibration components of the mirror deflection angle caused by another one of the two drive signals. In this case, the amplitudes of the higher frequency vibration components caused by the two drive signals can be matched by adjusting the amplitudes of at least one of the two drive signals, with which the fluctuation of oscillation speed of the moveable unit 500M about the one axis can be further suppressed.

Further, since the resonance frequency is the lowest resonance frequency, the excitation of the greatest resonance mode that affects the fluctuation of oscillation speed of the moveable unit 500M with the greatest level can be suppressed. Further, the n-th order resonance frequency other than the lowest resonance frequency can be set between two null frequencies, which are the closest two frequencies with each other, of the drive signal "A" and the drive signal "B." In this case, the excitation of the n-th order resonance mode can be suppressed. Further, in this case, the resonance frequency can be set between two null frequencies of two null frequency bands, which are different from the null frequency bands used for the second example embodiment (see FIGs. 18A and 18B)

Further, the optical deflection apparatus 1000 can further include the notch-filter that can suppress the resonance frequency and the higher frequency components near the resonance frequency. In this case, the higher frequency components near the resonance frequency can be reduced, with which the fluctuation of oscillation speed of the moveable unit 500M about the one axis can be further suppressed.

Further, the optical deflection apparatus 1000 can further include the low-pass filter that can suppress the higher frequency components in the higher frequency bands that are higher than the resonance frequency. In this case, the higher frequency components of the higher frequency bands that are far from the drive frequency used for oscillating the moveable unit 500M can be reduced, with which the fluctuation of oscillation speed of the moveable unit 500M about the one axis can be further suppressed without affect the oscillation operation of the moveable unit 500M.

Further, the optical deflection apparatus 1000 of the second example embodiment can be applied to the image forming apparatus that forms an image by scanning the scan target face using light that is modulated based on image information. The image forming apparatus includes the light source unit 5 to emit light, and the optical deflection apparatus 1000 to deflect the light emitted from the light source unit 5 to form a higher quality image.

Further, the image display apparatus including the image forming apparatus, and the optical system that guides light to the transmissive reflective member via the scan target face can display a higher quality image.

Further, when the image display apparatus is mounted to a moveable object, the image display apparatus can provide images having good visibility to an user of the moveable object. The moveable object mounted with the image display apparatus can be used as a moveable object system.

Further, a description is given of a method of adjustment process of the optical deflection apparatus 1000 of the second example embodiment. The optical deflection apparatus 1000 incudes, for example, the moveable unit 500M including the mirror having the reflection face, the support unit 500S including the zig-zag units to support the moveable unit 500M oscillate-ably about the X-axis, each of the zig-zag units including a plurality of beams continuously formed with the zig-zag pattern, and the plurality of piezoelectric elements is respectively disposed on the plurality of beams. Two drive signals such as a first drive signal having a first waveform (e.g., drive signal "A") and a second drive signal having a second waveform (e.g., drive signal "B") are respectively input to two piezoelectric elements disposed on adjacent two beams concurrently to oscillate the moveable unit 500M. The system (device) configured with the moveable unit 500M and the support unit 500S has a plurality of mechanical resonance frequencies.

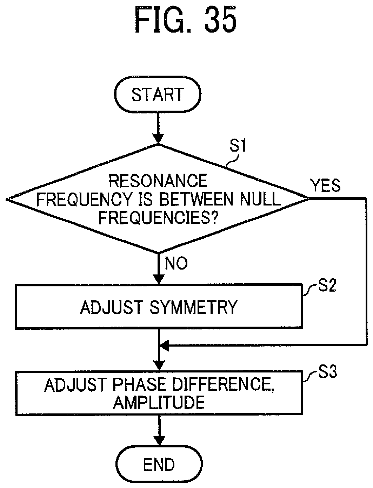

The adjustment method of optical deflection apparatus 1000 can be performed as indicated in FIG. 35. At step S1, it is checked whether a given resonance frequency included in the plurality of the mechanical resonance frequencies, is between two null frequencies such as the null frequencies "fna" and fnb." If the given resonance frequency is not between the two null frequencies (S1: NO), the sequence proceeds to step S2.

At step S2, the time ratio of the rising period and the falling period in one cycle of the two drive signals is adjusted. Specifically, the time ratio (i.e., symmetry) of the rising period and the falling period in one cycle of each of the two drive signals is set to a value that the resonance frequency can be set between the two null frequencies (e.g., null frequencies "fna" and "fnb") that the signal intensity of the higher frequency components of the two drive signals becomes a local minimum.

With employing this configuration, the excitation of resonance mode caused by the higher frequency components of each of the drive signals can be suppressed securely, and thereby the fluctuation of the evenness of oscillation speed of the moveable unit 500M about the one axis can be suppressed securely.

Therefore, the evenness of oscillation speed of the moveable unit 500M about the one axis can be enhanced securely.

Further, with employing this configuration, although the resonance frequency of the optical deflector 500 is set by the engineering design, the null frequencies can be adjusted to values that the resonance frequency of the optical deflector 500 can be set between the two null frequencies of the two drive signals. Therefore, without changing the resonance frequency of the optical deflector 500 set by the engineering design, the adjustment process of the optical deflector 500 can be performed with a simpler process. Therefore, the evenness of oscillation speed of the moveable unit 500M can be enhanced by performing a simpler process.

Further, the adjustment method of the optical deflection apparatus 1000 can further includes step S3. At step 3, the phase difference of the two drive signals is adjusted. With employing this configuration, the evenness of oscillation speed of the moveable unit 500M can be further enhanced. Further, at step S3, at least one of the amplitude of the two drive signals is adjusted. With employing this configuration, the evenness of oscillation speed of the moveable unit 500M can be further enhanced.

Further, as to the second example embodiment, one of the two frequencies sandwiching the resonance frequency is used as the null frequency "fna" but not limited hereto. For example, one of the two frequencies sandwiching the resonance frequency can be any frequency in the null frequency band having the null frequency "fna."

Further, as to the second example embodiment, one of the two frequencies sandwiching the resonance frequency is used as the null frequency "fnb" but not limited hereto. For example, one of the two frequencies sandwiching the resonance frequency can be any frequency in the null frequency band having the null frequency "fnb."

Further, the resonance frequency can be sandwiched by the null frequency bands of the drive signal "A" and the drive signal "B," which are the closest with each other. In this case too, the resonance frequency is sandwiched by one null frequency in one of the two null frequencies band and another one null frequency in another one of the two null frequencies band.

Numerous additional modifications and variations for the communication terminal, information processing system, and information processing method, a program to execute the information processing method by a computer, and a storage or carrier medium of the program are possible in light of the above teachings. It is therefore to be understood that within the scope of the appended claims, the disclosure of the present invention may be practiced otherwise than as specifically described herein. For example, elements and/or features of different examples and illustrative embodiments may be combined each other and/or substituted for each other within the scope of this disclosure and appended claims. For example, as to the above described example embodiments, the drive signal employs the sawtooth wave, but not limited hereto. For example, the drive signal can employ a trapezoid waveform, and a waveform having the falling period as a curving line, which means the drive signal can employ any waveforms that include the higher frequency components such as the harmonic components.

Further, as to the above described example embodiments, the image display apparatus such as HUD can be mounted to the moveable objects such as automobiles, airplanes, ships, and robots, but not limited these. The image display apparatus can be mounted to any object apparatuses such as moveable objects. The object apparatus may means moveable objects and others such apparatuses fixed at given positions, and portable apparatuses.

Therefore, the object apparatus mounted with the image display apparatus of the above described example embodiments can be devised as an object apparatus system.

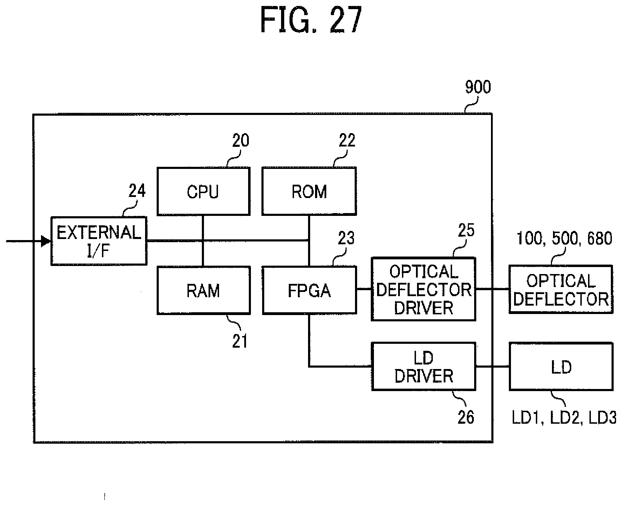

Further, the above described example embodiments can be implemented by using a hardware configuration of FIG. 27. FIG. 27 illustrates a hardware configuration of a control system 900 such as an electronic circuit for controlling the LD and the optical deflector of the above described example embodiments. The control system 900 includes, for example, a central processing unit (CPU) 20, a random access memory (RAM) 21, a read only memory (ROM) 22, a field-programmable gate array (FPGA) 23, an optical deflector driver 25, a LD driver 26 and external interface (I/F) 24. The CPU 20 read programs from the RAM 21 and ROM 22 to execute processing. The FPGA 23 receives signals from the CPU 20 and then outputs control signals. The optical deflector driver 25 receives the control signals from the FPGA 23 and then applies drive signals to the optical deflector. The LD driver 26 receives the control signals from the FPGA 23 and then applies drive signals to each LD. The control system 900 may correspond to the controller 200 and the LD controller 50.

As to the above described the null frequency band, the signal intensity of the higher frequency components becomes smaller as closer to the null frequency.

Therefore, the "null frequency band" can be defined as a frequency band that the signal intensity of the higher frequency components is suppressed effectively. For example, the "null frequency band" can be defined by two frequencies of adjacent two harmonic components, and the signal intensity of the "null frequency band" can be preferably set 20% or less, and more preferably 10% or less, of the average of the signal intensity of the two harmonic components. When the resonance frequency is set in this null frequency band, the evenness of oscillation speed of the moveable unit 500M about the one axis can be enhanced securely.

Further, as to the phase of higher frequency vibration described with FIG. 21A, the symmetry of the drive signal "A" and the drive signal "B" is preferably adjusted to set the phase of higher frequency vibration within $\pm 10\%$, and more preferably within $\pm 5\%$.

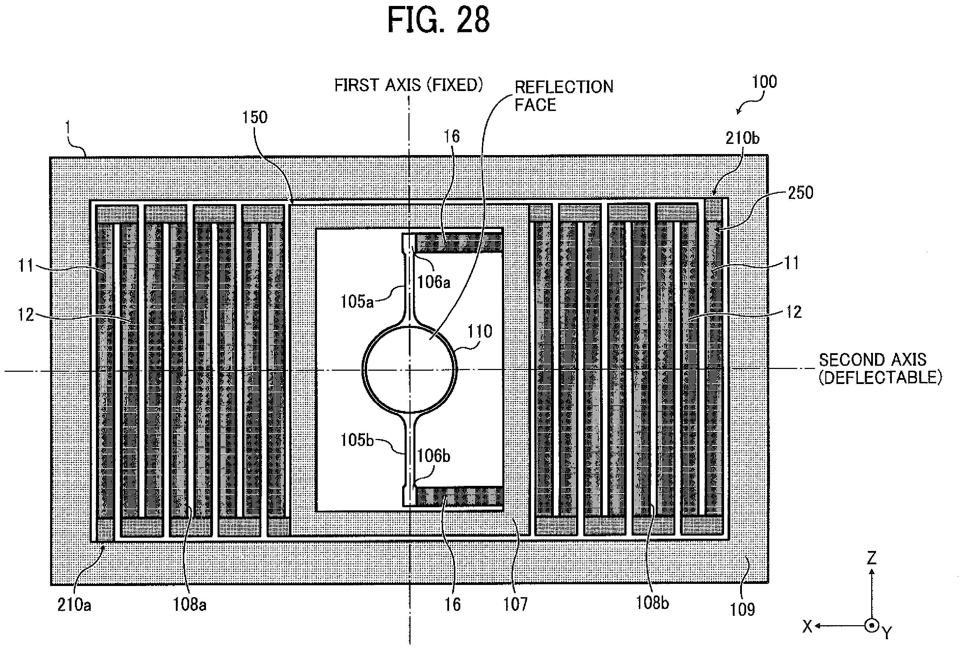

Further, as illustrated in FIG. 2, the beams 106 disposed with the first piezoelectric elements and extending along the second axis direction are attached at both sides of the second axis direction of the torsion bars 105a and 105b, but the beams 106 can be disposed only at one side of the torsion bars 105a and 105b as illustrated in FIG. 28.

(Image forming apparatus)

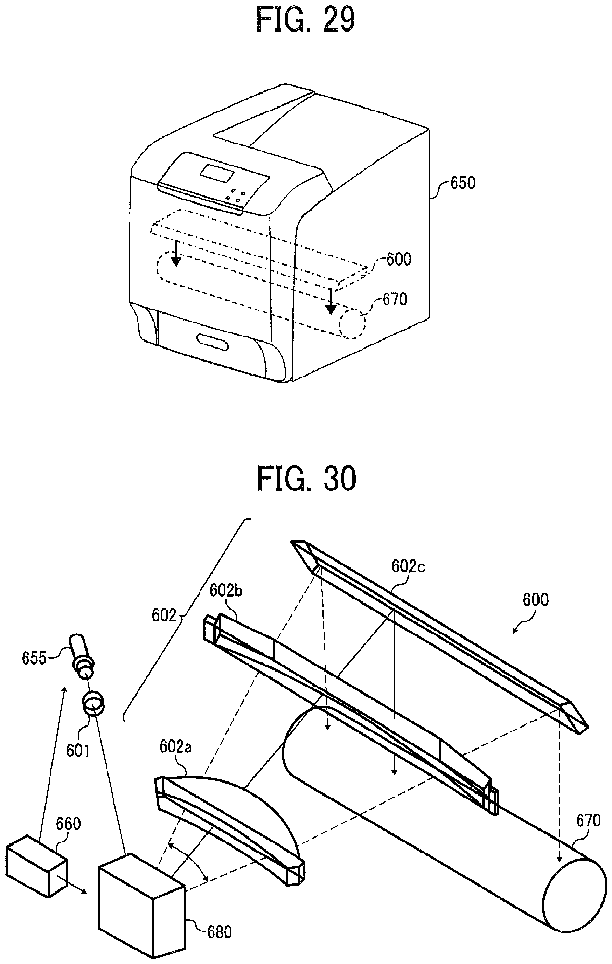

Further, the optical deflector that can be driven by the above described driving method of the example embodiments can be applied to an image forming apparatus illustrated in FIG. 29 and FIG. 30.

FIG. 29 illustrates an image forming apparatus 650 such as a laser printer laser employing, for example, an optical writing unit 600, and FIG. 30 illustrates a schematic configuration of the optical writing unit 600, which is an internal configuration of the image forming apparatus of FIG. 29.

As illustrated in FIGs. 29 and 30, the optical writing unit 600 can perform an optical scanning on a scan target face 670 (e.g., a surface of photoconductor, a surface of photosensitive sheet) by using one or a plurality of laser beams deflected by an optical deflector 680 to optically write an image on the scan target face 670 in the laser printer. As to the optical writing unit 600, the optical deflector 680 can be an one-dimensionally scannable optical deflector having a mirror directly attached to the two zig-zag units without employing the torsion bars, which is different from the optical deflector 100 of the first example embodiment or the optical deflector 500 of the second example embodiment that the mirror is attached to the two torsion bars fixed to the two zig-zag units.

As illustrated in FIG. 30, the optical writing unit 600 includes a light emission element 655 such as a semiconductor laser, an image focusing unit 601 including a collimate lens, and an optical scanning unit 602 including a first lens 602a, a second lens 602b and a reflection mirror 602c. The laser light emitted from the light emission element 655 passes through the image focusing unit 601, and then the laser light is deflected by the optical deflector 680 to scan the scan target face 670 along one axis direction such as the main scanning direction.

The laser light deflected by the optical deflector 680 is irradiated to the scan target face 670 via the optical scanning unit 602 to optically write an image on the scan target face 670. The optical scanning unit 602 focuses the light beam with a beam spot shape.

Further, the light emission element 655 and the optical deflector 680 can be controlled by a control unit 660 using the methods of the first example embodiment or the second example embodiment.

Further, the image forming apparatus can employ the optical deflector 100 of the first example or the optical deflector 500 of the second example embodiment to scan a thermal medium by using the laser light, in which the optical writing can be performed by heating thermal medium. Further, the image forming apparatus can employ the optical deflector 100 of the first example or the optical deflector 500 of the second example embodiment to perform the optical scanning on a thermal reversible medium such as a re-writable medium by using the laser light, in which the optical writing and optical erasing can be performed by heating thermal reversible medium.

Since the above described optical deflectors 100, 500, 680 employable for the image forming apparatus consume less drive power compared to a rotatable multi-faceted mirror such as polygon mirror, the optical writing unit 600 can reduce the power consumption.

Further, since wind noise of the above described optical deflectors 100, 500, 680 when oscillating can be smaller than wind noise of the rotatable multi-faceted mirror, quietness of the optical writing unit 600 can be enhanced.

Further, since an installation space of the optical writing unit 600 can be set smaller than an installation space of the rotatable multi-faceted mirror, and heat generation of the optical deflectors 100, 500, 680 is little, the optical writing unit 600 can be designed compact in size easily, and thereby the image forming apparatus can be designed compact in size.

Further, the optical deflector 680 of the variant example can be applied to other image forming apparatuses such as copiers, facsimile machines, and multi-functional machines.

Further, a light projection apparatus can be configured by combining the light source unit 5 and the optical deflector 100, 500, 680 of the first example embodiment, the second example embodiment and the variant example.

(Subject detection apparatus)

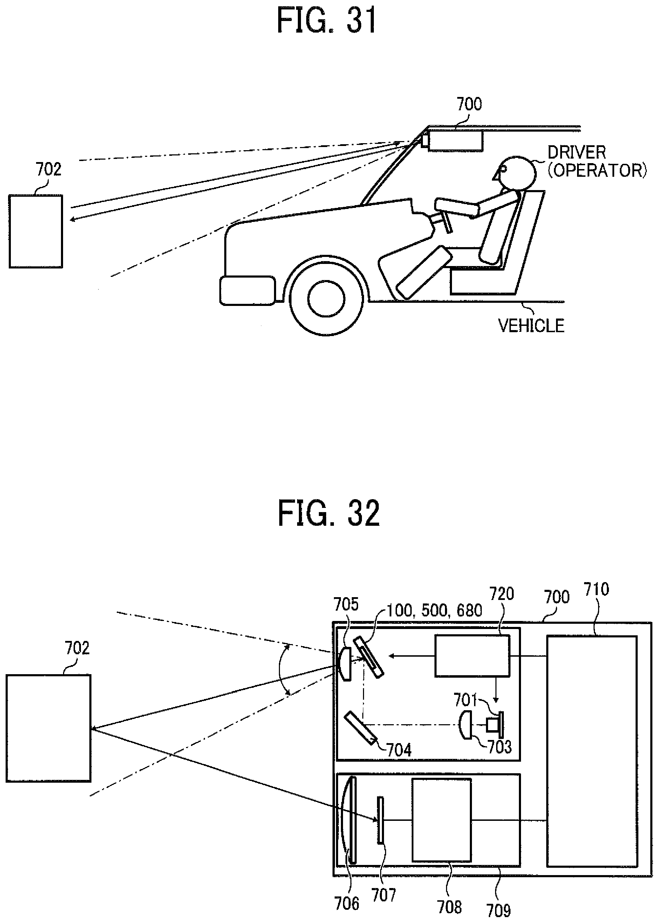

A description is given of a subject detection apparatus 700 having a light projection apparatus including a light source unit and an optical deflector with reference to FIGs. 31 and 32.

FIG. 31 illustrates a schematic configuration of a vehicle such as an automobile mounted with the subject detection apparatus 700. Further, FIG. 32 illustrates a schematic configuration of the subject detection apparatus 700.

The subject detection apparatus 700 is an apparatus that can detect information of subject such as existence of subject, distance to subject, and shape and size of subject. The subject detection apparatus 700 can be, for example, a laser radar system.

As illustrated in FIG. 31, when the subject detection apparatus 700 emits light, and receives reflection light from the subject 702, information of the subject 702 can be detected.

As illustrated in FIG. 32, the laser light emitted from a light emission element 701 passes through an incident light system including a collimate lens 703 to convert diffusion light to substantially parallel light, and a flat mirror 704, and then the optical deflector scans the light along one or two axes directions, in which the optical deflector can employ the optical deflector 100 of the first example embodiment, the optical deflector 500 of the second example embodiment, or the optical deflector 680 of the variant example.

Then, the light deflected by the optical deflector is projected to a forward of the subject detection apparatus 700 via an optical projection unit including a projection lens 705, and then irradiated to the subject 702, in which the light emission element 701 and the optical deflector can be driven by a drive unit 720. The light reflected from the subject 702 is detected by a light detector 709.

Specifically, the reflection light coming from the subject 702 passes through a light receiving system including a light focus lens 706, and then received by an image capture device 707. The image capture device 707 outputs a detection signal to a signal processor 708. The signal processor 708 preforms various processing such as binarization and noise reduction processes to the received detection signal, and outputs the processed signal to a detection/range finding circuit 710.

The detection/range finding circuit 710 can detect whether the subject 702 exists based on a time difference of the light emission timing of the light emission element 701 and the light reception timing of the light detector 709, or based on a phase difference of pixels of the image capture device 707 that has received the light, and then calculates a distance to the subject 702 as required.

Since the optical deflectors 100, 500, 680 can be designed with an enhanced robustness and compact in size compared to rotatable multi-faceted mirrors such as polygon mirrors, the laser radar system having enhanced durability and compact size can be devised.

The laser radar system can be employed various applications such as automobiles, airplanes, ships, and robots to perform the optical scanning for a given range or area, with which the laser radar system can detect whether objects or subjects such as obstacles exist, and can detect distance to the objects or subjects.

The subject detection apparatus 700 can be applied as the laser radar system, but not limited hereto. The subject detection apparatus 700 can be applied to other apparatus or system that the optical scanning is performed by controlling the optical deflector by the drive unit, and information of the subject 702 can be detected by receiving the reflection light by the light detector.

Therefore, the subject detection apparatus 700 can be applied to, for example, biometric identification, security sensor and three dimensional scanner. When the subject detection apparatus 700 is applied to the biometric identification, information of hand and face such as shape can be calculated from distance information acquired by the optical scanning, and the calculated information can be compared with stored data to recognize a target object. When the subject detection apparatus 700 is applied to the security sensor, an intruder can be detected by performing the optical scanning over a given range or area. When the subject detection apparatus 700 is applied to the three dimensional scanner, information of subject such as shape can be calculated from distance information acquired by the optical scanning, and output as three dimensional data.

(Packaging)

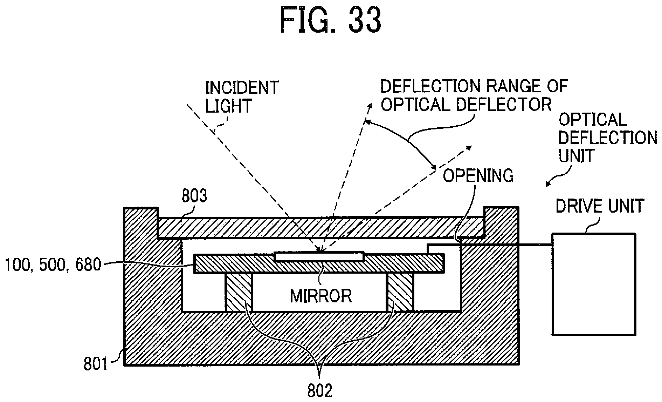

A description is given of packaging of the optical deflector 100, 500, 680 of the first example embodiment, the second example embodiment and the variant example with reference to FIG. 33. FIG. 33 illustrates an example of an optical deflection unit packaging of the optical deflector.

As illustrated in FIG. 33, the optical deflector is attached to an attachment 802 fixed on an inner bottom face of a package member 801 having an opening, and the opening of the package member 801 is covered and sealed by a light transparent material 803 for packaging the optical deflector.

Further, inert gas such as nitrogen can be filled in the inside space of the package member 801, with which degradation of the optical deflector by oxidation can be suppressed, and further durability of the optical deflector against environmental change such as temperature change can be enhanced.

A description is given of a background of conceiving the second example embodiment.

Recently, micro optical deflectors such as MEMS defectors are developed as devices to deflect and scan light beam. These micro optical deflectors can be manufactured by using the semiconductor manufacturing technologies such as the micro machining technologies that can process silicon and glass with a micro scale. For example, micro optical deflectors including a moveable unit having mirror having a reflection face and flexible beams formed integrally on a substrate can be manufactured. The optical deflector can employ a configuration using thin film piezoelectric element made of thin film piezoelectric material as an actuator.

As to the optical deflector employing the piezoelectric actuator, the thin film piezoelectric are stackingly formed on a surface of a cantilever. In this configuration, the expansion and shrinking along the face direction caused by piezoelectric property of the piezoelectric element is transmitted to the cantilever. If one end of the cantilever is fixed, other end of the cantilever can be oscillated into the upper and lower direction depending on the voltage level applied to the piezoelectric element. For example, a micro optical deflector unit can be configured with the cantilever and a micro reflection mirror disposed near the cantilever, in which the micro optical deflector unit has a square shape of several millimeters and the micro reflection mirror has a diameter of one to several millimeters. The above described expansion and shrinking of thin film piezoelectric element caused by the voltage application can oscillate the micro reflection mirror with a high speed.

A description is given of an optical deflection element that can scan light beam two dimensionally by using a piezoelectric cantilever. The optical deflection element is a MEMS defector manufactured by using the semiconductor processing. The optical deflection element includes a moveable unit and a pair of zig-zaged beam units. The moveable unit includes a reflection mirror connected to a frame via a torsion bar. Each of the zig-zaged beam units includes a plurality of zig-zaged beams. One end of each zig-zaged beam unit is supported by a support plate, and the other end of each zig-zaged beam unit is connected to the moveable unit. Each of the zig-zaged beam units includes first beams A and second beams B, which are disposed adjacently, and the piezoelectric element such as PZT is disposed for each of the first beams A and second beams B as the first piezoelectric element A and the second piezoelectric element B. When different voltages are applied to the first piezoelectric element A and the second piezoelectric element B, the adjacent first beam A and second beam B deform into different directions, with which the zig-zaged beam units warp. When the warping is accumulated, the reflection mirror rotates about the X-axis such as the vertical direction with a greater angle. With employing this configuration, the optical scanning along the vertical direction using the X-axis as the center can be performed. Further, the optical scanning along the horizontal direction using the Y-axis as the center can be performed by using the resonance of the torsion bar connected to the reflection mirror.

The light beam can be scanned two dimensionally using the raster scanning as follows. Specifically, the optical scanning by the reflection mirror can be performed along the horizontal direction using the Y-axis as the center by applying a high speed sinusoidal wave signal such as sinusoidal wave signal having several kHz to several tens kHz matched to the excitation frequency of resonance mode of the optical deflector in the horizontal direction while the optical scanning by the reflection mirror can be performed along the vertical direction using the X-axis as the center by applying a low speed sawtooth wave signal such as sawtooth wave signal having several Hz to several tens Hz. For example, as to an image drawing apparatus using the light beam scanning, the light emission timing of the light beam is matched to the scanning angle of the mirror to draw images with a time interval set by the scanning frequency in the vertical direction.

The optical deflection element that can perform the above described horizontal scanning and the vertical scanning, and the image drawing method using the above described horizontal scanning and the vertical scanning are known.

The optical deflection element for the two-axes scanning can be sealed by a lid and a package having the above described light transparent window (see FIG. 33), and the image forming apparatuses employing the optical deflection element are known.

When the scanning line is formed along the vertical direction by using the sawtooh wave, the scanning angle of the light beam that is the mirror deflection angle of the optical deflection element is desired to be changed linearly over time. However, due to the effect of the vibration modes specifically belonging to the optical deflection element, the vibration component having a frequency higher than the scanning frequency is superimposed to the scanning line, with which distortion occurs to the scanning line.

Especially, the resonance mode caused by the zig-zaged beam units of the optical deflection element affects the distortion of the scanning line greatly. The vibration direction is mostly the vertical direction using the X-axis as the rotation center axis, and the resonance frequency is from, for example, 100 Hz to 1000 Hz.

Since the sawtooth wave applied to the zig-zaged beam unit for performing the optical scanning along the vertical direction is generated by overlapping sinusoidal waves having frequencies obtained by the integral multiplication of the scanning frequency, the higher order vibration signal excites the vibration components corresponding to the resonance mode of the vertical direction. Therefore, this vibration is superimposed to the scanning line using the sawtooh wave, and distortion occurs to the scanning line. Since the scanning line distortion occurs to the vertical direction, when a two dimensional image is drawn, uneven brightness occurs along the vertical direction of the image.

As above described, when the optical deflection element is driven by applying sawtooth signal for the beam scanning along the vertical direction, the distortion occurs to the scanning line due to the vibration modes specifically belonging to the optical deflection element, and uneven brightness occurs on the image drawn by the beam scanning.

JP-2012-185314-A discloses a technology to solve this issue. Specifically, a first drive voltage to piezoelectrically drive even numbered piezoelectric cantilevers and a second drive voltage to piezoelectrically drive odd numbered piezoelectric cantilevers are applied from one end or other end of the piezoelectric actuators disposed for zig-zaged beam units as sawtooh wave voltages having the opposite phases, and a phase difference is set between the first drive voltage and the second drive voltage to suppress the occurrence of the higher frequency vibration of the moveable unit.

However, as to this conventional driving method, the higher frequency vibration when the odd numbered piezoelectric cantilever alone is driven or the even numbered piezoelectric cantilever alone is driven becomes greater, and the tolerance from the pre-set optimal value of the phase difference is too small. Therefore, when, the phase difference of the higher frequency signals that occur to the odd numbered cantilever and the even numbered cantilever changes due to temperature change and long-time driving, the higher frequency vibration cannot be suppressed sufficiently.

Further, when the optical deflection element is being driven for a long time continuously, the application voltage control is required to stabilize the scanning angle with a higher precision. Therefore, when the application voltage is changed, the phase difference level also changes, and the phase difference is required to be adjusted so that the higher frequency vibration amplitude can be constantly at a lower level such as the minimum level.

Further, since the optical deflection element is driven by applying two types of sawtooth waves set with a given phase difference, the voltage effectively applied to the optical deflection element becomes smaller than the input drive voltage, and thereby the driving sensitivity deteriorates. Therefore, the optical deflection element is required to be drive with higher voltage to attain the desired deflection angle, with which the reliability deteriorates when the optical deflection element is being driven for the long-time.

In view of these issues, the inventors have conceived the second example embodiment.

Each of the functions of the described embodiments may be implemented by one or more processing circuits or circuitry. Processing circuitry includes a programmed processor, as a processor includes circuitry. A processing circuit also includes devices such as an application specific integrated circuit (ASIC), digital signal processor (DSP), field programmable gate array (FPGA), and conventional circuit components arranged to perform the recited functions.

As described above, the present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on.

**Claims**

1. An optical deflection apparatus (1000) comprising:

a moveable unit (100M) having a reflection face; and
a support unit (100S) including
a zig-zag unit (210a, 210b) having a plurality of beams (108a, 108b) continuously formed with a zig-zag pattern to support the moveable unit (100M) oscillate-ably about one axis, the plurality of beams including a plurality of first beams (108a) and a plurality of second beams (108b), the first beams (108a) and the second beams (108b) being disposed adjacently; and
a plurality of piezoelectric elements (11, 12) disposed for the plurality of beams (108a, 108b) respectively, the plurality of piezoelectric elements including a plurality of first piezoelectric elements (11) disposed on the plurality of the first beams (108a) one by one, and a plurality of second piezoelectric elements (12) disposed on the plurality of the second beams (108b) one by one,
a controller (200) configured to apply drive voltages to the plurality of piezoelectric elements (11, 12), wherein a first drive signal having a first sawtooth waveform is input by the controller (200) to the first piezoelectric element (11) disposed on each of the first beams (108a), and a second drive signal having a second sawtooth waveform being the reverse of the first sawtooth waveform is input by the controller (200) to the second piezoelectric element (12) disposed on each of the second beams (108b),
wherein the symmetry of the first drive signal and the symmetry of the second drive signal are set differently while the drive frequencies of the first and the second waveform are equal, wherein the symmetry of the first drive signal and the symmetry of the second drive signal is defined as the ratio between a rising or falling period of the drive signal and the cycle of the drive signal, so that the lowest resonance frequency among a plurality of resonance frequencies belonging to the moveable unit (100M) is set to lie between a null frequency of the first drive signal and a null frequency of the second drive signal, wherein the null frequency fn represents the minimum of the envelope of the Fourier spectrum of a cyclical sawtooth drive signal and is defined as $fn = N \times fs/(1-S)$, N being an integer, fs being the drive frequency and S the symmetry,
the first drive signal A comprises two adjacent harmonic frequencies ha1 and ha2 sandwiching the null frequency fna of the first drive signal A and a frequency range between the two harmonic components ha1 and ha2 is set as first null frequency band P,
the second drive signal B comprises two adjacent harmonic frequencies hb1 and hb2 sandwiching the null frequency fnb of the second drive signal B and a frequency range between the two harmonic components hb1 and hb2 is set as second null frequency band Q, and
the first null frequency band P and the second null frequency band Q overlap partially, and the lowest resonance frequency of the optical deflector exists in said overlapping portion.

2. The optical deflection apparatus (1000) of claim 1, wherein
the first drive signal includes a plurality of frequency bands with a substantially-constant frequency interval, the plurality of frequency bands including the first frequency band having the first frequency that the signal intensity of higher frequency component of the first drive signal becomes a local minimum,
the second drive signal includes a plurality of frequency bands with a substantially-constant frequency interval, the plurality of frequency bands including the second frequency band having the second frequency that the signal intensity of higher frequency component of the second drive signal becomes a local minimum,
wherein the resonance frequency is set within at least one of the first frequency band and the second frequency band.

3. The optical deflection apparatus (1000) of any of claims 1 to 2, wherein
the first drive signal includes a plurality of frequency bands with a substantially-constant frequency interval, the plurality of frequency bands including the first frequency band having the first frequency that the signal intensity of higher frequency component of the first drive signal becomes a local minimum,
the second drive signal includes a plurality of frequency bands with a substantially-constant frequency interval, the plurality of frequency bands including the second frequency band having the second frequency that the signal intensity of higher frequency component of the second drive signal becomes a local minimum
wherein the signal intensity of the first frequency in the first frequency band becomes the smallest for the first frequency band, and
wherein the signal intensity of the second frequency in the second frequency band becomes the smallest for the second frequency band.

4. The optical deflection apparatus (1000) of any of claims 1-3,
wherein
a ratio of the rising period is set greater than a ratio of the falling period in one cycle of the first drive signal,
a ratio of the falling period is set greater than a ratio of the rising period in one cycle of the second drive signal,
wherein the ratio of the falling period in one cycle of the second drive signal is set greater than the ratio of the rising period in one cycle of the first drive signal.

5. The optical deflection apparatus (1000) of claim 4, wherein
the ratio of the rising period in one cycle of the first drive signal is set 0.8 or more, and
the ratio of the falling period in one cycle of the second drive signal is set 0.8 or more.

6. The optical deflection apparatus (1000) of any of claims 1 to 5, wherein the first and second drive signals are set with a phase difference with a range of $\pm 10°$ from a reference phase difference.

7. The optical deflection apparatus (1000) of any of claims 1 to 6, wherein the first drive signal and second drive signal are set with different amplitudes.

8. An image forming apparatus (10) for forming an image by scanning a scan target face using light modulate-able based on image information comprising:

a light source unit (5) to emit light: and
the optical deflection apparatus (1000) of any one of claims 1 to 7 to deflect the light emitted from the light source unit (5) to the scan target face.

9. An image display apparatus (7) comprising:

the image forming apparatus (10) of claim 8 and
an optical device (60) to guide light to a screen via the scan target face to display an image on the screen .

10. A system comprising:

the image display apparatus (7) of claim 9; ; and
an object apparatus mountable with the image display apparatus (7).

11. An adjustment method of an optical deflection apparatus (1000), the optical deflection apparatus (1000) including a moveable unit (100M) having a reflection face; and a support unit (100S), the support unit (100S) including a zig-zag unit (210a, 210b) having a plurality of beams (108a, 108b) continuously formed with a zig-zag pattern to support the moveable unit (100M) oscillateably about one axis, the plurality of beams including a plurality of first beams (108a) and a plurality of second beams (108b), the first beams (108a) and the second beams (108b) being disposed adjacently; and a plurality of piezoelectric elements (11, 12) disposed for the plurality of beams (108a, 108b) respectively, the plurality of piezoelectric elements including a plurality of first piezoelectric elements (11) disposed on the plurality of the first beams (108a) one by one, and a plurality of second piezoelectric elements (12) disposed on the plurality of the second beams (108b) one by one, the method comprising:

inputting a first drive signal having a first sawtooth waveform to the first piezoelectric element (11) disposed on each of the first beams (108a), and a second drive signal having a second sawtooth waveform being the reverse of the first sawtooth waveform to the second piezoelectric element (12) disposed on each of the second beams (108b); and
setting the symmetry of the first drive signal and the symmetry of the second drive signal differently and setting the drive frequencies of the first and second waveform to equal values, wherein the symmetry of the first drive signal and the symmetry of the second drive signal is defined as the ratio between a rising or falling period of the drive signal and the cycle of the drive signal, so that the lowest resonance frequency among a plurality of resonance frequencies belonging to the moveable unit (100M) is set to lie between a null frequency of the first drive signal and a null frequency of the second drive signal, wherein the null frequency fn represents the minimum of the envelope of the Fourier spectrum of a cyclical sawtooth drive signal and is defined as $fn = N \times fs/(1-S)$, N being an integer, fs being the drive frequency and S the symmetry, the first drive signal A comprises two adjacent harmonic frequencies ha1 and ha2 sandwiching the null frequency fna of the first drive signal A and a frequency range between the two harmonic components ha1 and ha2 is set as first null frequency band P, the second drive signal B comprises two adjacent harmonic frequencies hb1 and hb2 sandwiching the null frequency fnb of the second drive signal B and a frequency range between the two harmonic components hb1 and hb2 is set as second null frequency band Q, and the first null frequency band P and the second null frequency band Q overlap partially, and the lowest resonance frequency of the optical deflector exists in said overlapping portion.

**Patentansprüche**

1. Ein optisches Deflektorgerät (1000), enthaltend:

eine bewegliche Einheit (1000M), die eine Reflektionsoberfläche hat; und
eine Trägereinheit (100S) enthaltend

eine Zick-Zack-Einheit (210a, 210b), die eine Vielzahl von Trägern (108a, 108b) hat, die kontinuierlich ausgebildet sind mit einem Zick-Zack-Muster, um die bewegliche Einheit (100M) um eine Achse oszillierbar zu tragen, die Vielzahl von Trägern enthaltend eine Vielzahl von ersten Trägern (108a) und eine Vielzahl von zweiten Trägern (108b), wobei die ersten Träger (108a) und die zweiten Träger (108b) benachbart angeordnet sind; und eine Vielzahl von piezoelektrischen Elementen (11, 12) angeordnet für die jeweilige Vielzahl von Trägern (108a, 108b), die Vielzahl von piezoelektrischen Elementen enthaltend eine Vielzahl von ersten piezoelektrischen Elementen (11) eines nach dem anderen angeordnet auf der Vielzahl der ersten Träger (108a) und eine Vielzahl von zweiten piezoelektrischen Elementen (12) eines nach dem anderen angeordnet auf der Vielzahl der zweiten Träger (108b),

eine Steuereinheit (200), die dazu eingerichtet ist, Antriebsspannungen an die Vielzahl von piezoelektrischen Elementen (11, 12) anzulegen,

wobei ein erstes Antriebssignal mit einer ersten Sägezahn-Wellenform von der Steuereinheit (200) an das erste piezoelektrische Element (11), das auf jedem der ersten Träger (108a) angeordnet ist, angelegt wird und ein zweites Antriebssignal mit einer zweiten Sägezahn-Wellenform, die das Inverse der ersten Sägezahn-Wellenform ist, von der Steuereinheit (200) an das zweite piezoelektrische Element (12), das auf jedem der zweiten Träger (108b) angeordnet ist, angelegt wird,

wobei die Symmetrie des ersten Antriebssignals und die Symmetrie des zweiten Antriebssignals unterschiedlich festgelegt sind, während die Antriebsfrequenzen der ersten und zweiten Wellenform gleich sind, wobei die Symmetrie des ersten Antriebssignals und die Symmetrie des zweiten Antriebssignals definiert ist als das Verhältnis zwischen einer steigenden oder fallenden Periode des Antriebssignals und dem Zyklus des Antriebssignals, so dass die niedrigste Resonanzfrequenz aus einer Vielzahl an Resonanzfrequenzen, die zu der beweglichen Einheit (1000M) gehören, so festgelegt ist, dass sie zwischen einer Nullfrequenz des ersten Antriebssignals und einer Nullfrequenz des zweiten Antriebssignals liegt, wobei die Nullfrequenz fn das Minimum der Einhüllenden des Fourierspektrums eines zyklischen Sägezahn-Antriebssignals repräsentiert und definiert ist als $fn = N \times fs/(1-S)$, wobei N ein Integer ist, fs die Antriebsfrequenz ist und S die Symmetrie ist,

das erste Antriebssignal A enthält zwei benachbarte harmonische Frequenzen ha1 und ha2, die die Nullfrequenz fna des ersten Antriebssignals A zwischen sich haben, und ein Frequenzbereich zwischen den beiden harmonischen Komponenten ha1 und ha2 ist festgelegt als erstes Nullfrequenzband P,

das zweite Antriebssignal B enthält zwei benachbarte harmonische Frequenzen hb1 und hb2, die die Nullfrequenz fnb des zweiten Antriebssignals B zwischen sich haben, und ein Frequenzbereich zwischen den beiden harmonischen Komponenten hb1 und hb2 ist festgelegt als zweites Nullfrequenzband Q, und

das erste Nullfrequenzband P und das zweite Nullfrequenzband Q überlappen sich teilweise, und die niedrigste Resonanzfrequenz des optischen Deflektors existiert in besagtem überlappendem Bereich.

2. Das optische Deflektorgerät (1000) gemäß Anspruch 1, wobei
das erste Antriebssignal eine Vielzahl von Frequenzbändern mit im wesentlichen konstantem Frequenzabstand enthält, die Vielzahl von Frequenzbändern enthaltend das erste Frequenzband mit der ersten Frequenz, dass die Signalintensität einer höheren Frequenzkomponente des ersten Antriebssignals ein lokales Minimum wird,
das zweite Antriebssignal eine Vielzahl von Frequenzbändern mit im wesentlichen konstantem Frequenzabstand enthält, die Vielzahl von Frequenzbändern enthaltend das zweite Frequenzband mit der zweiten Frequenz, dass die Signalintensität einer höheren Frequenzkomponente des zweiten Antriebssignals ein lokales Minimum wird,
wobei die Resonanzfrequenz festgelegt ist innerhalb mindestens einem aus dem ersten Frequenzband und dem zweiten Frequenzband.

3. Das optische Deflektorgerät (1000) gemäß Anspruch 1 oder 2, wobei
das erste Antriebssignal eine eine Vielzahl von Frequenzbändern mit im wesentlichen konstantem Frequenzabstand enthält, die Vielzahl von Frequenzbändern enthaltend das erste Frequenzband mit der ersten Frequenz, dass die Signalintensität einer höheren Frequenzkomponente des ersten Antriebssignals ein lokales Minimum wird,
das zweite Antriebssignal eine Vielzahl von Frequenzbändern mit im wesentlichen konstantem Frequenzabstand enthält, die Vielzahl von Frequenzbändern enthaltend das zweite Frequenzband mit der zweiten Frequenz, dass die Signalintensität einer höheren Frequenzkomponente des zweiten Antriebssignals ein lokales Minimum wird,
wobei die Signalintensität der ersten Frequenz in dem ersten Frequenzband für das erste Frequenzband am kleinsten wird, und
wobei die Signalintensität der zweiten Frequenz in dem zweiten Frequenzband für das zweite Frequenzband am kleinsten wird.

4. Das optische Deflektorgerät (1000) gemäß einem der Ansprüche 1 bis 3, wobei
ein Verhältnis der steigenden Periode größer festgelegt ist als ein Verhältnis der fallenden Periode in einem Zyklus des ersten Antriebssignals,
ein Verhältnis der fallenden Periode größer festgelegt ist als ein Verhältnis der steigenden Periode in einem Zyklus des zweiten Antriebssignals,
wobei das Verhältnis derfallenden Periode in einem Zyklus des zweiten Antriebssignals größer festgelegt ist als das Verhältnis der steigenden Periode in einem Zyklus des ersten Antriebssignals.

5. Das optische Deflektorgerät (1000) des Anspruchs 4, wobei
das Verhältnis der steigenden Periode in einem Zyklus des ersten Antriebssignals festgelegt ist als 0,8 oder mehr, und
das Verhältnis der fallenden Periode in einem Zyklus des zweiten Antriebssignals festgelegt ist als 0,8 oder mehr.

6. Das optische Deflektorgerät (1000) nach einem der Ansprüche 1 bis 5, wobei das erste und zweite Antriebssignal festgelegt sind mit einer Phasendifferenz mit einem Bereich von ±10° ausgehend von einer Referenz-Phasendifferenz.

7. Das optische Deflektorgerät (1000) nach einem der Ansprüche 1 bis 6, wobei das erste Antriebssignal und das zweite Antriebssignal mit unterschiedlichen Amplituden festgelegt sind.

8. Ein Bilderzeugungsgerät (10) zum Formen eines Bildes durch das Abtasten einer Abtast-Zieloberfläche unter Verwendung von modulierbarem Licht basierend auf Bildinformationen, aufweisend:

   eine Lichtquelleneinheit (5), um Licht zu emittieren; und
   das optische Deflektorgerät (1000) nach einem der Ansprüche 1 bis 7, um das von der Lichtquelleneinheit (5) emittierte Licht auf die Abtast-Zieloberfläche abzulenken.

9. Ein Bildanzeigegerät (7), enthaltend:

   das Bilderzeugungsgerät (10) des Anspruchs 8 und
   ein optisches Gerät (60), um Licht über die Abtast-Zieloberfläche auf einem Schirm zu leiten, um ein Bild auf dem Schirm anzuzeigen.

10. Ein System, aufweisend:

    das Bildanzeigegerät (7) des Anspruchs 9; und
    ein Objektgerät montierbar mit dem Bildanzeigegerät (7).

11. Ein Einstellungsverfahren für ein optisches Deflektorgerät (1000), das optische Deflektorgerät (1000) enthaltend eine bewegliche Einheit (1000M), die eine Reflektionsoberfläche hat; und eine Trägereinheit (100S) enthaltend eine Zick-Zack-Einheit (210a, 210b), die eine Vielzahl von Trägern (108a, 108b) hat, die kontinuierlich ausgebildet sind mit einem Zick-Zack-Muster, um die bewegliche Einheit (100M) um eine Achse oszillierbar zu tragen, die Vielzahl von Trägern enthaltend eine Vielzahl von ersten Trägern (108a) und eine Vielzahl von zweiten Trägern (108b), wobei die ersten Träger (108a) und die zweiten Träger (108b) benachbart angeordnet sind; und eine Vielzahl von piezoelektrischen Elementen (11, 12) angeordnet für die jeweilige Vielzahl von Trägern (108a, 108b), die Vielzahl von piezoelektrischen Elementen enthaltend eine Vielzahl von ersten piezoelektrischen Elementen (11) eines nach dem anderen angeordnet auf der Vielzahl der ersten Träger (108a) und eine Vielzahl von zweiten piezoelektrischen Elementen (12) eines nach dem anderen angeordnet auf der Vielzahl der zweiten Träger (108b), das Verfahren aufweisend:

    das Anlegen eines ersten Antriebssignals mit einer ersten Sägezahn-Wellenform an das erste piezoelektrische Element (11), das auf jedem der ersten Träger (108a) angeordnet ist, und eines zweiten Antriebssignals mit einer zweiten Sägezahn-Wellenform, die das Inverse der ersten Sägezahn-Wellenform ist, an das zweite piezoelektrische Element (12), das auf jedem der zweiten Träger (108b) angeordnet ist; und
    das unterschiedliche Festlegen der Symmetrie des ersten Antriebssignals und der Symmetrie des zweiten Antriebssignals, und das Festlegen der Antriebsfrequenzen der ersten und zweiten Wellenform auf gleiche Werte, wobei die Symmetrie des ersten Antriebssignals und die Symmetrie des zweiten Antriebssignals definiert ist als das Verhältnis zwischen einer steigenden oder fallenden Periode des Antriebssignals und dem Zyklus des Antriebssignals, so dass die niedrigste Resonanzfrequenz aus einer Vielzahl an Resonanzfrequenzen, die zu der beweglichen Einheit (1000M) gehören, so festgelegt ist, dass sie zwischen einer Nullfrequenz des ersten Antriebssignals und einer Nullfrequenz des zweiten Antriebssignals liegt, wobei die Nullfrequenz fn das Minimum der Einhüllenden des Fourierspektrums eines zyklischen Sägezahn-Antriebssignals repräsentiert und definiert ist als fn = N x fs/(1-S), wobei N ein Integer ist, fs die Antriebsfrequenz ist und S die Symmetrie ist,

das erste Antriebssignal A enthält zwei benachbarte harmonische Frequenzen ha1 und ha2, die die Nullfrequenz fna des ersten Antriebssignals A zwischen sich haben, und ein Frequenzbereich zwischen den beiden harmonischen Komponenten ha1 und ha2 ist festgelegt als erstes Nullfrequenzband P,

das zweite Antriebssignal B enthält zwei benachbarte harmonische Frequenzen hb1 und hb2, die die Nullfrequenz fnb des zweiten Antriebssignals B zwischen sich haben, und ein Frequenzbereich zwischen den beiden harmonischen Komponenten hb1 und hb2 ist festgelegt als zweites Nullfrequenzband Q, und

das erste Nullfrequenzband P und das zweite Nullfrequenzband Q überlappen sich teilweise, und die niedrigste Resonanzfrequenz des optischen Deflektors existiert in besagtem überlappendem Bereich.

**Revendications**

1. Appareil de déviation optique (1000) comprenant :

   une unité déplaçable (100M) ayant une face de réflexion ; et
   une unité de support (100S) comportant
   une unité de zig-zag (210a, 210b) ayant une pluralité de traverses (108a, 108b) formées en continu avec un motif en zig-zag pour supporter l'unité déplaçable (100M) de manière oscillante autour d'un axe, la pluralité de traverses comportant une pluralité de premières traverses (108a) et une pluralité de deuxièmes traverses (108b), les première traverses (108a) et les deuxièmes traverses (108b) étant disposées de manière adjacente ; et
   une pluralité d'éléments piézoélectriques (11, 12) disposés pour la pluralité de traverses (108a, 108b) respectivement, la pluralité d'éléments piézoélectriques comportant une pluralité de premiers éléments piézoélectriques (11) disposés sur la pluralité de premières traverses (108a) un par un, et une pluralité de deuxièmes éléments piézoélectriques (12) disposés sur la pluralité de deuxièmes traverses (108b) un par un,
   un dispositif de commande (200) configuré pour appliquer des tensions de pilotage à la pluralité d'éléments piézoélectriques (11, 12),
   dans lequel un premier signal de pilotage ayant une première forme d'onde en dents de scie est fourni en entrée par le dispositif de commande (200) au premier élément piézoélectrique (11) disposé sur chacune des premières traverses (108a), et un deuxième signal de pilotage ayant une deuxième forme d'onde en dents de scie qui est l'inverse de la première forme d'onde en dents de scie est fourni en entrée par le dispositif de commande (200) au deuxième élément piézoélectrique (12) disposé sur chacune des deuxièmes traverses (108b),
   dans lequel la symétrie du premier signal de pilotage et la symétrie du deuxième signal de pilotage sont établies différemment tandis que les fréquences de pilotage de la première et de la deuxième forme d'onde sont égales,
   dans lequel la symétrie du premier signal de pilotage et la symétrie du deuxième signal de pilotage sont définies comme le rapport entre une période ascendante ou descendante du signal de pilotage et le cycle du signal de pilotage, de sorte que la fréquence de résonance la plus basse parmi une pluralité de fréquences de résonance appartenant à l'unité déplaçable (100M) soit établie pour être entre une fréquence nulle du premier signal de pilotage et une fréquence nulle du deuxième signal de pilotage, dans lequel la fréquence nulle fn représente le minimum de l'enveloppe du spectre de Fourier d'un signal de pilotage en dents de scie cyclique et est définie comme fn = N x fs/(1-S), N étant un entier, fs étant la fréquence de pilotage et S la symétrie,
   le premier signal de pilotage A comprend deux fréquences d'harmonique adjacentes ha1 et ha2 prenant en sandwich la fréquence nulle fna du premier signal de pilotage A et une plage de fréquence entre les deux composantes d'harmonique ha1 et ha2 est établie comme une première bande de fréquence nulle P,
   le deuxième signal de pilotage B comprend deux fréquences d'harmonique adjacentes hb1 et hb2 prenant en sandwich la fréquence nulle fnb du deuxième signal de pilotage B et une plage de fréquence entre les deux composantes d'harmonique hb1 et hb2 est établie comme une deuxième bande de fréquence nulle Q, et
   la première bande de fréquence nulle P et la deuxième bande de fréquence nulle Q se chevauchent partiellement, et la fréquence de résonance la plus basse du déflecteur optique existe dans ladite portion chevauchante.

2. Appareil de déviation optique (1000) selon la revendication 1, dans lequel
   le premier signal de pilotage comporte une pluralité de bandes de fréquence avec un intervalle de fréquence sensiblement constant, la pluralité de bandes de fréquence comportant la première bande de fréquence ayant la première fréquence dont l'intensité de signal de composante de fréquence supérieure du premier signal de pilotage devient un minimum local,
   le deuxième signal de pilotage comporte une pluralité de bandes de fréquence avec un intervalle de fréquence sensiblement constant, la pluralité de bandes de fréquence comportant la deuxième bande de fréquence ayant la deuxième fréquence dont l'intensité de signal de composante de fréquence supérieure du deuxième signal de pilotage devient un minimum local,

dans lequel la fréquence de résonance est établie au sein d'au moins l'une parmi la première bande de fréquence et la deuxième bande de fréquence.

3.  Appareil de déviation optique (1000) selon l'une quelconque des revendications 1 à 2, dans lequel

le premier signal de pilotage comporte une pluralité de bandes de fréquence avec un intervalle de fréquence sensiblement constant, la pluralité de bandes de fréquence comportant la première bande de fréquence ayant la première fréquence dont l'intensité de signal de composante de fréquence supérieure du premier signal de pilotage devient un minimum local,

le deuxième signal de pilotage comporte une pluralité de bandes de fréquence avec un intervalle de fréquence sensiblement constant, la pluralité de bandes de fréquence comportant la deuxième bande de fréquence ayant la deuxième fréquence dont l'intensité de signal de composante de fréquence supérieure du deuxième signal de pilotage devient un minimum local

dans lequel l'intensité de signal de la première fréquence dans la première bande de fréquence devient la plus petite pour la première bande de fréquence, et

dans lequel l'intensité de signal de la deuxième fréquence dans la deuxième bande de fréquence devient la plus petite pour la deuxième bande de fréquence.

4.  Appareil de déviation optique (1000) selon l'une quelconque des revendications 1 à 3,

dans lequel

un rapport de la période ascendante est établi plus grand qu'un rapport de la période descendante dans un cycle du signal de pilotage,

un rapport de la période descendante est établi plus grand qu'un rapport de la période ascendante dans un cycle du deuxième signal de pilotage,

dans lequel le rapport de la période descendante dans un cycle du deuxième signal de pilotage est établi plus grand qu'un rapport de la période ascendante dans un cycle du premier signal de pilotage.

5.  Appareil de déviation optique (1000) selon la revendication 4, dans lequel

le rapport de la période ascendante dans un cycle du premier signal de pilotage est établi à 0,8 ou plus, et

le rapport de la période descendante dans un cycle du deuxième signal de pilotage est établi à 0,8 ou plus.

6.  Appareil de déviation optique (1000) selon l'une quelconque des revendications 1 à 5, dans lequel les premier et deuxième signaux de pilotage sont établis avec une différence de phase avec une plage de $\pm 10°$ par rapport à une différence de phase de référence.

7.  Appareil de déviation optique (1000) selon l'une quelconque des revendications 1 à 6, dans lequel le premier signal de pilotage et le deuxième signal de pilotage sont établis avec des amplitudes différentes.

8.  Appareil de formation d'image (10) destiné à former une image par balayage d'une face cible de balayage à l'aide de lumière modulable sur la base d'informations d'image comprenant :

une source de lumière (5) pour émettre de la lumière ; et

l'appareil de déviation optique (1000) de l'une quelconque des revendications 1 à 7 pour dévier la lumière émise de la source de lumière (5) à ladite face cible de balayage.

9.  Appareil d'affichage d'image (7) comprenant :

l'appareil de formation d'image (10) de la revendication 8 et

un dispositif optique (60) pour guider de la lumière vers un écran via la face cible de balayage pour afficher une image sur l'écran.

10. Système comprenant :

l'appareil d'affichage d'image (7) de la revendication 9 ; et

un appareil d'objet sur lequel peut être monté l'appareil d'affichage d'image (7).

11. Procédé d'ajustement d'un appareil de déviation optique (1000), l'appareil de déviation optique (1000) comportant une unité déplaçable (100M) ayant une face de réflexion ; et une unité de support (100S), l'unité de support (100S) comportant une unité de zig-zag (210a, 210b) ayant une pluralité de traverses (108a, 108b) formées en continu avec un motif en zig-zag pour supporter l'unité déplaçable (100M) de manière oscillante autour d'un axe, la pluralité de traverses comportant une pluralité de premières traverses (108a) et une pluralité de deuxièmes traverses (108b), les première traverses (108a) et les deuxièmes traverses (108b) étant disposées de manière adjacente ; et une pluralité d'éléments piézoélectriques (11, 12) disposés pour la pluralité de traverses (108a, 108b) respectivement, la pluralité d'éléments piézoélectriques comportant une pluralité de premiers éléments piézoélectriques (11) disposés sur la pluralité de premières traverses (108a) un par un, et une pluralité de deuxièmes éléments piézoélectriques (12) disposés sur la pluralité de deuxièmes traverses (108b) un par un, le procédé comprenant :

la fourniture en entrée d'un premier signal de pilotage ayant une première forme d'onde en dents de scie au premier élément piézoélectrique (11) disposé sur chacune des premières traverses (108a), et d'un deuxième signal de pilotage ayant une deuxième forme d'onde en dents de scie qui est l'inverse de la première forme d'onde en dents de scie au deuxième élément piézoélectrique (12) disposé sur chacune des deuxièmes traverses (108b) ; et

l'établissement de la symétrie du premier signal de pilotage et de la symétrie du deuxième signal de pilotage différemment et l'établissement des fréquences de pilotage de la première et de la deuxième forme d'onde à des valeurs égales, dans lequel la symétrie du premier signal de pilotage et la symétrie du deuxième signal de pilotage sont définies comme le rapport entre une période ascendante ou descendante du signal de pilotage et le cycle du signal de pilotage, de sorte que la fréquence de résonance la plus basse parmi une pluralité de fréquences de résonance appartenant à l'unité déplaçable (100M) soit établie pour être entre une fréquence nulle du premier signal de pilotage et une fréquence nulle du deuxième signal de pilotage, dans lequel la fréquence nulle fn représente le minimum de l'enveloppe du spectre de Fourier d'un signal de pilotage en dents de scie cyclique et est définie comme $fn = N \times fs/(1-S)$, N étant un entier, fs étant la fréquence de pilotage et S la symétrie,

le premier signal de pilotage A comprend deux fréquences d'harmonique adjacentes ha1 et ha2 prenant en sandwich la fréquence nulle fna du premier signal de pilotage A et une plage de fréquence entre les deux composantes d'harmonique ha1 et ha2 est établie comme une première bande de fréquence nulle P,

le deuxième signal de pilotage B comprend deux fréquences d'harmonique adjacentes hb1 et hb2 prenant en sandwich la fréquence nulle fnb du deuxième signal de pilotage B et une plage de fréquence entre les deux composantes d'harmonique hb1 et hb2 est établie comme une deuxième bande de fréquence nulle Q, et

la première bande de fréquence nulle P et la deuxième bande de fréquence nulle Q se chevauchent partiellement, et la fréquence de résonance la plus basse du déflecteur optique existe dans ladite portion chevauchante.

# FIG. 1

# FIG. 2

EP 3 109 685 B1

# FIG. 3A

# FIG. 3B

# FIG. 4

# FIG. 5

# FIG. 6

# FIG. 7

# FIG. 8

# FIG. 9A

SYMMETRY ADJUSTMENT

# FIG. 9B

# FIG. 10A

RESONANCE MODE OF DEVICE

SYMMETRY: " $\alpha$ "

HARMONIC COMPONENT OF
SAWTOOTH WAVEFORM

AMPLITUDE

f0          f1          FREQUENCY

# FIG. 10B

RESONANCE MODE OF DEVICE

SYMMETRY: " $\beta$ "

HARMONIC COMPONENT OF
SAWTOOTH WAVEFORM

AMPLITUDE

f0          f1          FREQUENCY

FIG. 11

OPTICAL DEFLECTOR

SECOND AXIS (OSCILLATABLE)

DRIVER

MIRROR

FIRST AXIS (FIXED)

# FIG. 12

VIRTUAL IMAGE

70

OBSERVER

60a
60

DM1   DM2   DM3

100

1000

CR1   CR2   CR3

CONTROLLER          MEMORY

200                 300

LD1   LD2   LD3

LD
CONTROLLER   IMAGE
PROCESSOR   EXTERNAL
APPARATUS

5

50            40

IMAGE
INFORMATION

Y

Z ⊙ → X

FIG. 13

# FIG. 14

DRIVE SIGNAL "A"

MAXIMUM VALUE OF APPLICATION VOLTAGE

MINIMUM VALUE OF APPLICATION VOLTAGE

APPLICATION VOLTAGE WIDTH

TIME

RISING PERIOD "TrA"

FALLING PERIOD "TfA"

CYCLE "TA"

DRIVE SIGNAL "B"

MAXIMUM VALUE OF APPLICATION VOLTAGE

MINIMUM VALUE OF APPLICATION VOLTAGE

APPLICATION VOLTAGE WIDTH

TIME

FALLING PERIOD "TfB"

RISING PERIOD "TrB"

CYCLE "TB"

EP 3 109 685 B1

# FIG. 15

CYCLE "TA"

DRIVE SIGNAL "A"

0.5 × APPLICATION
VOLTAGE WIDTH

TIME

DRIVE SIGNAL "B"

0.5 × APPLICATION
VOLTAGE WIDTH

TIME

CYCLE "TB"

EP 3 109 685 B1

# FIG. 16A
## RELATED ART

| | MIRROR DEFLECTION ANGLE |
|---|---|
| ······· | DRIVE SIGNAL "A" |
| - - - | DRIVE SIGNAL "B" |

VIBRATION COMPONENT CORRESPONDING TO LOWEST-ORDER RESONANCE FREQUENCY

MIRROR DEFLECTION ANGLE [° ]

APPLICATION VOLTAGE [V]

TIME [msec]

# FIG. 16B
## RELATED ART

| | MIRROR DEFLECTION ANGLE |
|---|---|
| ······· | DRIVE SIGNAL "A" |
| - - - | DRIVE SIGNAL "B" |

VIBRATION COMPONENT CORRESPONDING TO LOWEST-ORDER RESONANCE FREQUENCY

MIRROR DEFLECTION ANGLE [° ]

APPLICATION VOLTAGE [V]

TIME [msec]

# FIG. 16C
## RELATED ART

# FIG. 17

# FIG. 18A

# FIG. 18B

RESONANCE PROPERTY OF DEVICE
DRIVE SIGNAL "B"

SIGNAL INTENSITY (a.u)

1.E+02
1.E+01
1.E+00
1.E-01
1.E-02
1.E-03

FREQUENCY [Hz]

RESONANCE FREQUENCY (LOWEST-ORDER)

HARMONIC COMPONENT hb1

DRIVE FREQUENCY

NULL FREQUENCY BAND

NULL FREQUENCY BAND

NULL FREQUENCY

NULL FREQUENCY

Q

NULL FREQUENCY "fnb"

HARMONIC COMPONENT hb2

NULL FREQUENCY BAND

## FIG. 19A

| | MIRROR DEFLECTION ANGLE |
| ----- | ----- |
| ⋯⋯ | DRIVE SIGNAL "A" |
| --- | DRIVE SIGNAL "B" |

OPTICAL SCANNING RANGE

MIRROR DEFLECTION ANGLE [°]

APPLICATION VOLTAGE [V]

TIME [msec]

## FIG. 19B

| | MIRROR DEFLECTION ANGLE |
| ----- | ----- |
| ⋯⋯ | DRIVE SIGNAL "A" |
| --- | DRIVE SIGNAL "B" |

OPTICAL SCANNING RANGE

MIRROR DEFLECTION ANGLE [°]

APPLICATION VOLTAGE [V]

TIME [msec]

# FIG. 20A

— HIGH-FREQUENCY VIBRATION COMPONENT
    OF MIRROR DEFLECTION ANGLE

······ DRIVE SIGNAL "A"

- - - DRIVE SIGNAL "B"

HIGH-FREQUENCY VIBRATION COMPONENT OF MIRROR DEFLECTION ANGLE [°]

APPLICATION VOLTAGE [V]

PHASE EVALUATION POINT OF HIGH-FREQUENCY VIBRATION

AMPLITUDE OF HIGH-FREQUENCY VIBRATION

TIME [msec]

# FIG. 20B

— HIGH-FREQUENCY VIBRATION COMPONENT
    OF MIRROR DEFLECTION ANGLE

······ DRIVE SIGNAL "A"

- - - DRIVE SIGNAL "B"

HIGH-FREQUENCY VIBRATION COMPONENT OF MIRROR DEFLECTION ANGLE [°]

APPLICATION VOLTAGE [V]

AMPLITUDE OF HIGH-FREQUENCY VIBRATION

PHASE EVALUATION POINT OF HIGH-FREQUENCY VIBRATION

TIME [msec]

# FIG. 21A

······ HIGH-FREQUENCY VIBRATION BY DRIVE SIGNAL "A" (LOCAL MAXIMUM POINT)
- - - HIGH-FREQUENCY VIBRATION BY DRIVE SIGNAL "B" (LOCAL MINIMUM POINT)

PHASE OF HIGH-FREQUENCY VIBRATION [°]

PHASE-RAPID-CHANGING REGION

SYMMETRY [%]

PHASE DIFFERENCE:180 DEGREES (HIGH-FREQUENCY VIBRATION BY DRIVE SIGNAL "A" AND HIGH-FREQUENCY VIBRATION BY DRIVE SIGNAL "B" OCCUR WITH SAME PHASE)

# FIG. 21B

······ HIGH-FREQUENCY VIBRATION BY DRIVE SIGNAL "A"
- - - HIGH-FREQUENCY VIBRATION BY DRIVE SIGNAL "B"

PHASE OF HIGH-FREQUENCY VIBRATION [°]

SYMMETRY [%]

SYMMETRY SETTING FOR DRIVE SIGNAL "B" OF SECOND EXAMPLE EMBODIMENT

THEORETICAL VALUE OF SYMMETRY THAT RESONANCE FREQUENCY AND NULL FREQUENCY MATCH

SYMMETRY SETTING FOR DRIVE SIGNAL "A" OF SECOND EXAMPLE EMBODIMENT

# FIG. 22A

Legend:
— MIRROR DEFLECTION ANGLE
······ DRIVE SIGNAL "A"
--- DRIVE SIGNAL "B"

MIRROR DEFLECTION ANGLE [°]

APPLICATION VOLTAGE [V]

TIME [msec]

# FIG. 22B

Legend:
— HIGH-FREQUENCY VIBRATION COMPONENT OF MIRROR DEFLECTION ANGLE
······ DRIVE SIGNAL "A"
--- DRIVE SIGNAL "B"

HIGH-FREQUENCY VIBRATION COMPONENT OF MIRROR DEFLECTION ANGLE [°]

APPLICATION VOLTAGE [V]

TIME [msec]

FIG. 23

# FIG. 24A

MIRROR DEFLECTION ANGLE [°]

DESIRED MIRROR DEFLECTION ANGLE

DRIVING METHOD OF SECOND EXAMPLE EMBODIMENT
CONVENTIONAL DRIVING METHOD

REFERENCE VOLTAGE

APPLICATION VOLTAGE [V]

# FIG. 24B

LINEARITY OF SCANNING LINE

DRIVING METHOD OF SECOND EXAMPLE EMBODIMENT
CONVENTIONAL DRIVING METHOD

REFERENCE VOLTAGE

APPLICATION VOLTAGE [V]

# FIG. 25

# FIG. 26A

# FIG. 26B

# FIG. 27

# FIG. 28

# FIG. 29

# FIG. 30

# FIG. 31

# FIG. 32

# FIG. 33

INCIDENT
LIGHT

DEFLECTION RANGE OF
OPTICAL DEFLECTOR

OPTICAL
DEFLECTION
UNIT

OPENING

DRIVE UNIT

803

100, 500, 680

MIRROR

801

802

# FIG. 34A

# FIG. 34B

# FIG. 35

```
          ┌─────────┐
          │  START  │
          └────┬────┘
               │
               ▼                    ╭─ S1
          ╱─────────────╲
        ╱   RESONANCE     ╲           YES
      ╱  FREQUENCY IS BETWEEN NULL ╲──────────┐
      ╲     FREQUENCIES?    ╱                 │
        ╲                 ╱                   │
          ╲─────┬───────╱                     │
                │ NO                          │
                ▼              ╭─ S2          │
      ┌──────────────────────┐               │
      │   ADJUST SYMMETRY     │               │
      └──────────┬───────────┘               │
                 │◄────────────────────────────┘
                 ▼              ╭─ S3
      ┌──────────────────────┐
      │ ADJUST PHASE DIFFERENCE, │
      │       AMPLITUDE       │
      └──────────┬───────────┘
                 │
                 ▼
            ┌─────────┐
            │   END   │
            └─────────┘
```

**EP 3 109 685 B1**

**REFERENCES CITED IN THE DESCRIPTION**

**Patent documents cited in the description**

- JP 2012185314 A
- EP 2495601 A1
- EP 2848978 A1
- EP 2645148 A1
- EP 2503375 A2
- JP 2011107505 A